# EUROPEAN PATENT APPLICATION

(11) **EP 1 775 226 A2**
(43) Date of publication of application: **18.04.2007**
(21) Application number: 06022457.3
(22) Date of filing: 18.03.2005
(51) Int. Cl.: B65D 19/00

(54) **Load-carrying apparatus and methods of manufacture**

(30) Priority: 19.03.2004 GB 0406272; 02.07.2004 GB 0414991; 25.11.2004 GB 0425943
(62) Divisional of application: 05729250.0
(71) Applicant: Pvaxx Research and Development Limited, Near Cirencester Gloucestershire GL7 5EG (GB)
(72) Inventor: Stevens, Henry Pvaxx Research & Develop., Ltd., Barnsley Near Cirencester Gloucs GL7 5EG (GB)
(74) Representative: MacDougall, Alan John Shaw

(57) **Abstract**

The invention relates to load-carrying apparatus, for example pallets and shipping containers, rotationally moulded from a plastics material filled with a mineral filler. Methods and apparatus for manufacturing the load-carrying apparatus are also described. In one embodiment, the load-carrying apparatus comprises a pallet formed in two halves as two pallet elements. The plastic, rotationally moulded pallet elements form a nested configuration when stacked in the same orientation, but interlock to form a double-sided pallet when one of the pallet elements is inverted.

## Description

The present invention relates to the field of load-carrying apparatus, for example for the storage and transportation of goods, including methods for manufacturing such apparatus. In particular, but not exclusively, the invention relates to apparatus such as freight containers, pallets and cable reels and methods for manufacturing the apparatus.

Apparatus for storing and transportation of goods, particularly bulk goods, has to be robust enough to withstand the high impact stresses and adverse environmental conditions that it may encounter during normal operation.

Wooden pallets for storing and transporting goods are well known in the art and are defined by standards such as ISO Standard No. 6780. Such pallets are strictly defined in the standard, and other standards define the tests to which they must be subjected before being judged to be fit for use.

However, wooden pallets suffer from a number of disadvantages. They are susceptible to rotting, and woodworm, which means that their working life is relatively short, and they may endanger the goods carried on them. They are relatively easy to pierce with sharp objects, relatively heavy, and difficult to recycle.

Aspects of the invention are set out in the independent claims and preferred features are set out in the dependent claims. Aspects may be provided separately or in combination and features of one aspect may be applied to other aspects. Modifications, which would be obvious to one skilled in the art, may further be provided within the scope of the invention.

According to one aspect, there is provided a pallet comprising a top pallet element and a bottom pallet element, wherein each pallet element comprises a platform and a plurality of pallet feet and wherein each pallet foot comprises an interlocking section, wherein:
in an inverted configuration, the interlocking sections of the top pallet element are arranged to couple
with corresponding interlocking sections of the bottom pallet element;
in a stacked configuration, with the pallet elements in substantially the same orientation, at least one
pallet element forms a nested configuration when stacked on top of the other pallet element; and
wherein the pallet elements are rotationally moulded from a plastics material filled with a mineral filler.

Hence the pallet elements may couple securely to form pallets in one configuration, but nest in a stacked configuration to reduce the space taken up by unloaded pallets. Rotationally moulding the pallet elements using a filled plastics material may provide an efficient way of forming a large number of pallet elements reliably and quickly as described herein.

The term interlocking section as used herein comprises an engaging portion of the pallet elements. The engaging portions on each pallet element may engage and hold the pallet elements together by frictional or interference forces.

Preferably, in the nested configuration, the pallet element platforms lie parallel to each other and are closely nested together. Preferably, substantially no gap is left between the pallet element platforms. Preferably, any gap between the platforms is less than around 20mm, preferably less than around 10mm.

In a preferred embodiment, the mineral filler comprises sand. Alternatively, the filler may comprise an ash-based or glass-based filler.

In a highly preferred embodiment, the shape and/or configuration of the top pallet element is different to the shape and/or configuration of the bottom pallet element. As described in more detail below, this may allow the pallet elements to stack and, in particular form a closely nested configuration when stacked in one order, but a less closely nested configuration when stacked in the reverse order. In addition, using different shapes or configurations may enable interlocking elements of one type to be provided on one pallet element and interlocking elements of a different type to be provided on the other pallet element. Providing pallet elements of different shapes may also allow the pallet elements to be provided with different properties. For example, as described in more detail below, the bottom pallet element may be provided with apertures to reduce the weight of the pallet element, whereas the top pallet element may be provided with a continuous surface to allow the storage and transportation of small and/or delicate goods.

Preferably, in a nested configuration, the feet of one pallet element are inserted into recesses in the top surfaces of the corresponding feet of the other pallet element. Hence the feet of at least one type of pallet element may be hollowed from the pallet platform surface.

In one embodiment, the bottom pallet element forms a nested configuration when stacked on top of the top pallet element. In an alternative embodiment, the top pallet element forms a nested configuration when stacked on top of the bottom pallet element.

Preferably, the pallet elements form a nested configuration when one pallet element is stacked on top of the other pallet element but a gap is formed between the stacked pallet elements when the pallet elements are stacked in the reverse order. Hence, if the pallet elements are stacked in a bottom, top, bottom, top configuration, pairs of closely nested pallet elements are separated by gaps. This may advantageously allow the pairs of pallet elements to be separated easily.

In a preferred embodiment, the gap formed between the stacked pallet elements is greater than around 20mm, preferably greater than around 40mm and preferably greater than around 50mm. This may allow the pairs of nested pallet elements to be separated easily and may allow the tines of a fork lift truck to be inserted between the pairs of pallet elements.

In a preferred embodiment, the platform of the bottom pallet element comprises at least one aperture. Preferably, the platform comprises a plurality of apertures. This may reduce the overall weight of the pallet element, and hence the pallet, without significantly reducing the strength of the pallet.

In a preferred embodiment, the feet of the pallet elements are arranged to enable the blades of a forklift truck to engage the pallet from any one of four directions.

In a preferred embodiment, the interlocking sections comprise male or female interlocking sections and, in an inverted configuration, male interlocking sections on one pallet element preferably couple with corresponding female interlocking sections on the other pallet element.

In one embodiment, the interlocking sections of the top pallet element comprise male interlocking sections and the interlocking sections of the bottom pallet element comprise female interlocking sections.

Preferably, at least a portion of each pallet element comprises an outer skin layer.

Further preferably, at least a portion of each pallet element comprises an inner layer having a different composition to the outer skin layer. Further preferably, the inner layer comprises a foamed inner layer.

In a preferred embodiment, the pallet element further comprises a remotely readable tag, preferably an RFID tag or a bar code. The bar code may be laser-etched onto at least one surface of the pallet.

In one embodiment, the platform of the top pallet element comprises a substantially continuous surface.

Preferably, the platform of each pallet element comprises a textured surface.

In a preferred embodiment, the feet of the pallet elements are tapered. This may make it easier to stack and nest the pallet elements and to insert the tines of a fork-lift truck between the pallet feet.

In a preferred embodiment, the interlocking sections of the feet of the pallet elements are arranged so that, on rotation of the bottom pallet element about an axis through the plane of the platform of the bottom pallet element, a male configuration of interlocking sections on the bottom pallet element mates with a female configuration of interlocking sections on the top pallet element and vice versa.

In one embodiment a male interlocking section of a foot comprises one or more protruding elements and a corresponding female interlocking section of a foot comprises one or more hollow sections, wherein the or each hollow section is sized to accommodate the or each protruding element.

In a preferred embodiment, each pallet element is rotationally moulded substantially in one piece.

In a preferred embodiment, the top pallet element is joined to the bottom pallet element by friction, that is, by an interference fit or friction fit.

Preferably, the interlocking sections of at least one pallet element comprise an uneven surface to increase the friction between the pallet elements. The uneven surface is preferably provided on the interlocking section of the bottom pallet element. The uneven surface preferably comprises flashing from the moulding process. This flashing is usually considered to be undesirable in a moulded product and is usually smoothed away. However, it has been appreciated that the flashing may be advantageous in securing the two halves of the pallet together.

In a preferred embodiment, at least one foot comprises an aperture. The aperture may act as a drainage hole from the platform of the pallet. Preferably, a hole through a foot of the top pallet element matches and lines up with a hole through a foot of the bottom pallet element to provide at least one hole through the whole pallet to allow for drainage of liquids from the pallet. In a preferred embodiment, each foot of the top and bottom pallet elements comprises an aperture.

Preferably, the top surface of the platform of the top pallet element comprises a plurality of gullies. The gullies may provide both drainage and strengthening for the top pallet element.

Further preferably, the bottom surface of the top pallet element comprises a plurality of gullies. These gullies may be provided for strengthening purposes. Preferably the gullies on top of the platform of the pallet element do not coincide with the gullies on the bottom of the pallet element, that is, the two sets of gullies are not in line with each other. This may provide better torsional strength for the pallet element.

Preferably, the bottom pallet element is also provided with gullies on its top and/or bottom surface for strengthening and drainage purposes.

In a highly preferred embodiment, the gullies comprise at least one insert along the length of the gullies. That is, the gullies are not formed along the full length of the pallet platform. The inserts may help to prevent hinging or weakness of the pallet along the length of the gullies.

Preferably, the gullies on the pallet platform are directed towards the feet of the pallet. This may enable liquids collected in the gullies to drain through apertures provided in the feet of the pallet.

Preferably, at least one surface of the platform of at least one pallet element comprises anti-abrasive means for resisting abrasion of the platform surface. The anti-abrasive means may resist abrasion that might occur during normal use and handling of the pallet element. For example, abrasion due to the tines of fork lift trucks.

In one embodiment, the anti-abrasive means comprises a plurality of ridges provided on the surface of the platform. The ridges may be provided to deflect the tines of a fork lift truck as the tines enter between the pallets and hence the ridges may help to protect the pallet surface. Preferably, the ridges are moulded integrally with the pallet element.

In a preferred embodiment, the anti-abrasive means is provided on the bottom surface of the bottom pallet element, which lies between the pallet elements in an inverted configuration. Hence, when the two pallet elements are made into a double-sided pallet, the anti-abrasive means protects the lower surface that lies between the pallet elements from abrasion, for example by the insertion of fork tines into the double-sided pallet.

According to a further aspect there is provided a pallet element comprising a platform having an upper surface and a lower surface and a plurality of feet depending from the lower surface of the platform and wherein:
a single pallet element provides a single-sided pallet having feet of a height sufficient to allow lifting by a forklift truck;
a first said pallet element is arranged to couple to a second said pallet element to provide a double-sided pallet having a total height less than double the height of a single pallet element.

Any of the features of the pallet or pallet elements described above may be applied to the present pallet element.

Hence the same pallet elements may be used flexibly, as needed, as single-sided or as double-sided pallets. For example, single-sided pallets may be used for lighter-duty or single-use work and double-sided pallets may be more suitable for heavy-duty work or for repeated use. As described in more detail below, one of the pallet elements is preferably rotated to form the double-sided pallet, so it is clear that, in this orientation, the upper surface of the pallet platform would form the outer surface of the double-sided pallet and would lie below the lower surface.

Preferably, the first and the second pallet elements couple to provide a double-sided pallet wherein the feet of both the first and the second pallet are arranged between the platforms of the pallet elements. Hence one pallet is rotated so that the upper surfaces of the platforms of the pallets form the outer surfaces of the double-sided pallet.

In a preferred embodiment, the pallet elements are arranged to couple on presenting opposed elements appropriately located without further fixings or adhesives. Hence it is straightforward to assemble and dissemble the double-sided pallet. Alternatively, or in addition, fixing means, such as screws adhesives or clips, may be provided to permanently or temporarily hold the pallet elements together.

Providing a single pallet element of a sufficient height to allow lifting by a forklift truck allows the single pallet element to be used alone as a single-sided pallet. This may be useful, for example as a light-weight pallet for single trips, for short trips or for light loads. Single pallet elements that can be used as pallets may be more economical than double-sided pallets. Preferably, the height of single pallet element is substantially equal to the height of a standard pallet. However, single pallet elements that are shorter than a standard pallet, for example around half the height of a standard pallet may be used. The height of a standard pallet defined by the International Organisation for Standardization is defined in ISO Standard No. 6780. Preferably, the height of a single pallet element is at least around 100mm.

Preferably, in a double-sided pallet, the feet of the first pallet element interleave at least partially with the feet of the second pallet element.

In a preferred embodiment, the height of a double-sided pallet is substantially equal to the height of a single-sided pallet. Preferably, the height of a double-sided pallet is substantially equal to the height of a standard pallet. This may allow both double-sided and single-sided pallets to be manoeuvred using the same, standard equipment, for example using a standard forklift truck. Preferably, the height of a double-sided pallet is less than around 200mm.

Further preferably, the difference in height between a double-sided pallet and a single-sided pallet is substantially equal to the height of the platform of a pallet element.

Further preferably, the difference in height between a double-sided pallet and a single-sided pallet is less than the height of the platform of a pallet element.

Preferably, the height of the feet supporting the platform of a single-sided pallet is substantially equal to the spacing between platforms of a double-sided pallet.

Preferably, the first pallet element is coupled to the second pallet element by inserting the feet of at least one pallet element into recesses formed in the lower surface of the platform of the other pallet element. This may allow the heights of the single and double-sided pallets to be substantially the same and may advantageously provide means by which the pallet elements may be coupled together. Preferably, the feet of at least one pallet element latch or clip into the recesses in the lower surface of the other pallet element.

In one embodiment, the recesses in the lower surface of the platform comprise deformable teeth, wherein the deformable teeth latch around the feet of the opposing pallet element to retain the feet in the recesses.

In an alternative embodiment, the feet of each pallet element comprise foot elements, the foot elements of each foot being arranged to interleave with corresponding foot elements in the opposing foot. Hence at least some of the feet may interleave on a microscale with the opposing feet of the other pallet element. For example, the feet may include slots into which corresponding prongs of the feet of the opposing pallet element may be inserted. Pallets may be provided with some feet having foot elements that interleave on the microscale and some feet that interleave on the macroscale as described above.

In a preferred embodiment, at least one foot is arranged substantially at each corner of the platform. Preferably, at least one foot is arranged substantially at the centre of the platform. Further preferably, at least one foot is arranged substantially at the centre of each edge of the platform.

In a preferred embodiment, the feet of the pallet elements are arranged so that, on rotation of one pallet element about an axis through the plane of the platform of the pallet, a male configuration of feet on one pallet element mates with a female configuration of feet on the opposing pallet element.

Preferably, at least some of the feet of the pallet are arranged on the platform rotationally asymmetrically about at least one axis of rotation passing through the centre of the plane of the platform of the pallet and parallel to an edge of the pallet.

In one embodiment, one male configuration of feet comprises a single foot and a corresponding female configuration of feet comprises two feet separated by a gap, wherein the gap is sized to accommodate a single foot.

In one embodiment the pallet element is substantially rectangular.

Preferably, when one pallet element is rotated in an axis in the plane of the pallet platform and perpendicular to the elongate axis of the pallet platform, the feet of the pallet element interleave with the feet of a second pallet element.

Preferably, when the first pallet is rotated, the feet of the first pallet are offset relative to the feet of the second pallet.

In one embodiment, a male configuration of feet comprises an odd number of feet and a female configuration of feet comprises an even number of feet.

Preferably, the feet in the male configuration and the feet in the female configuration are mutually offset when a first pallet element is rotated and positioned over a second pallet element so that the platforms are aligned.

In one embodiment, feet in the corners of the pallet comprise male or female configurations of feet and feet in the along the centre lines of the pallet are mutually offset from the centre.

In a preferred embodiment, the pallet elements are rotationally moulded. Further preferably, each pallet element is rotationally moulded substantially in one piece.

Preferably, .the pallet elements are manufactured substantially from a filled plastics material. Preferably, the filler comprises a mineral filler material.

Advantageously, the feet of each pallet element are formed integrally with the platform of the pallet element.

Preferably, the feet are tapered from a maximum width at the platform of the pallet element. This may allow the feet to be interleaved or stacked in a nested configuration more easily and may allow easier access for a forklift truck. Further preferably, at least one side of at least one tapered foot of the pallet is concave. This may allow nested pallets to be released more easily from their nested configuration.

Preferably, recesses are provided in the upper surface of the platform of the pallet. Further preferably, the recesses in the upper surface correspond to the position of the feet of a pallet element. Hence the feet of stacked pallet elements may fit into the recesses in the upper surface of the pallet element below.

In a preferred embodiment, at least one foot is hollow. Preferably, the recesses in the upper surface extend through the platform from the upper surface of the pallet element into the feet.

Preferably, pallet elements form a nested configuration when stacked on top of each other in the same orientation. Further preferably, in a nested configuration, the feet of one pallet element are inserted into recesses in the corresponding feet of a second pallet element. This may allow the pallets to stack together in a closely nested configuration and hence advantageously significantly reduce the volume taken up by unloaded pallets.

In a preferred embodiment, the feet are arranged to enable the blades of a forklift truck to engage the pallet from any one of four directions. In an alternative embodiment, in particular if the pallet is rectangular, it may be possible to lift the pallet from only two directions.

In a preferred embodiment, at least a portion of the pallet element comprises an outer skin layer. Further preferably, at least a portion of the pallet element comprises an inner layer having a different composition to the outer skin layer. Preferably, the inner layer comprises a foaming agent.

In one embodiment, the pallet element further comprises a remotely readable tag, preferably an RFID tag. The tag may be used to store and provide details of the load of the pallet or its location or ownership details.

In a preferred embodiment, the platform of the pallet element comprises a substantially continuous surface. This may allow small items to be carried on the pallet.

Preferably, the platform of the pallet element comprises a textured surface. This may increase the ability of objects to grip the surface of the pallet and reduce slippage during transportation.

A method of assembling a double-sided pallet using two pallet elements, each pallet element comprising a platform and a plurality of feet depending from the platform, the method comprising:
rotating the first pallet element about an axis in the plane of the pallet platform;
arranging the second pallet element on top of the first pallet element so that the feet of both of the pallet elements lie between the platforms of the pallet elements and the feet of the pallet elements are interleaved;
coupling the second pallet element to the first pallet element.

In a preferred embodiment, the step of coupling comprises applying pressure to the pallet elements. Further preferably, applying pressure comprises applying a force of less than around 1000N, preferably less than around 500N, or applying an impact from a hammer of less than 10Ns. Preferably, coupling comprises coupling the pallet elements without adhesives or fixings.

According to a further aspect, there is provided a method of manufacturing a plurality of pallets comprising:
inserting a feedstock comprising a filled plastics material into a mould;
rotating and heating the mould to rotationally mould a plurality of pallets;
releasing the plurality of pallets from the mould
separating the moulded plurality of pallets into single pallets.

In one embodiment, the method further comprises inserting a second feedstock into the mould to form an inner layer within the pallet.

Preferably, the second feedstock includes a foaming agent to form a foamed inner layer.

In one embodiment, separating the moulded plurality of pallets comprises punching or cutting the pallets out of a sheet of moulded pallets.

According to a further aspect, there is provided a method of distributing pallets comprising arranging layers of pallets in a nested configuration in a container, shipping the container to a predetermined destination, removing the pallets from the container.

Preferably, the pallets comprise pallet elements according to the aspect described above or any of its preferred features.

Preferably, the pallets and the container are rotationally moulded.

In one embodiment, the layers of pallets are provided in sheets and the method further comprises cutting the sheets of pallets into individual pallets.

According to one aspect there is provided a rotationally-moulded load-carrying apparatus for carrying a load of at least 50 kilograms, wherein the apparatus is manufactured substantially from a filled plastics material comprising:
at least 10% by weight of a polymer;
at least 10% by weight of a mineral filler material.

In some cases, up to 90% by weight of the remainder of the composition may comprise filler. However, a number of other components may be included in the composition. In particular, a component to unify the polymer and the filler may be provided, or a unifier may be present in the filler or polymer. Preferably at least 1% by weight and less than 20% by weight unifier is provided. Further components that may be incorporated in the material include a colourant, a flame retardant and a stabiliser, for example a UV stabiliser.

Manufacturing load-carrying apparatus using a plastics based material may provide a number of advantages, as set out in more detail below. However, it has been found that containers manufactured substantially from a purely plastics material are not sufficiently resilient to withstand the temperatures and stresses to which they may be subjected during normal use. The addition of a filler may solve this problem by increasing the strength and structural integrity of the apparatus.

Forming the apparatus from a plastics material may be advantageous since the unladen weight of the plastic apparatus may be less than that the equivalent prior art apparatus, which may be manufactured from materials such as steel or wood. This may allow a user to use the apparatus to carry a greater weight of goods, whilst keeping the gross weight constant, or may allow a transportation operator, for example a shipping merchant, to pack more load-carrying apparatus onto a ship or to save fuel in transportation of the apparatus.

In addition, apparatus manufactured from a plastics based material will not suffer from the problems associated with rusting and hence such apparatus may not require painting. These properties may enable the expected lifetime of the apparatus to be increased. For example, the expected lifetime of a prior art steel shipping container may be about 5 years for a steel container whereas a lifetime of about 25 years is reasonable for a plastics-based container. A further advantage may be that, when the plastic apparatus is brought out of operation, it may be broken up and ground and the material may be incorporated into new products, for example the material may be recycled to form parts of new apparatus.

A further advantage of such apparatus is that it may be possible to determine, verify or monitor the contents of the apparatus using a remote sensing technique, such as X-rays or thermo-sensing, since it may be possible for such radiation to pass through the material of the apparatus. This may allow authorities to ensure that the contents of the apparatus do not comprise a security risk and may allow authorities to detect illicit or undesirable goods or to verify that the contents of the apparatus correspond to the declared contents.

A further property of the apparatus may be that the plastics material has better insulating properties than the material used for the equivalent prior art apparatus, for example steel. This may allow the contents of the apparatus to be better insulated from high or low temperatures than in the prior art apparatus. This may enable, for example, refrigerated containers to be provided more easily and such containers may require less power to be maintained at a constant temperature.

Rotationally moulding the apparatus may allow the apparatus to be formed with few internal stresses in the material. This may lead to a stronger load-bearing apparatus than would be provided by other forms of moulding.

Preferably, the mineral material comprises a silica-based material, such as a silicate or comprises a carbonate material. In a highly preferred embodiment, the filler comprises sand, preferably consists essentially of sand. The sand is preferably dredged sand. Sand is readily available at consistent granularity and can form a surprisingly effective filler. Another advantage of using sand as part of the filler material is that it may provide additional security for the container, since container walls that include sand may be difficult to cut through, since the sand in the composition is likely to blunt quickly any machinery that is used to attempt to cut through the material. In an alternative embodiment, the filler may comprise calcium carbonate.

Further, the filled material described herein is likely to be flame retardant, although a further flame retardant component may also be incorporated into the filled material.

In a preferred embodiment, the polymer comprises polyethylene. The polymer used may depend on the apparatus being manufactured and other polymers, such as PVC or PVA may be used. However, polyethylene may provide a hard-wearing, resistant material for use in a wide range of apparatus.

More preferably, the polymer comprises High Density Polyethylene (HDPE).
Preferably, the material comprises at least 25% by weight filler.

Preferably, the material comprises at least 25% by weight polymer.

In a preferred embodiment, the material comprises from about 30% to about 70% by weight polymer and from about 70% to about 30% by weight filler. The polymer and the filler may comprise 100% of the material or other components may be included in the material as described herein and the additional components may comprise the remaining % weight of the material.

In a highly preferred embodiment, the material comprises from about 30% to about 50% by weight filler, preferably sand, and from about 50% to about 70% polymer, preferably polyethylene.

In a preferred embodiment, the filled plastics material further comprises a unifier. The unifier may be provided to bind the polymer and the filler together.

Preferably, the filled plastics material comprises at least about 0.1% by weight unifier. Preferably, the filled plastics material comprises less than about 10% by weight unifier.

More preferably, the filled plastics material comprises at least about 0.25% by weight unifier. More preferably, the filled plastics material comprises less than about 5% by weight unifier.

In a preferred embodiment, the unifier is pre-mixed with the filler before the filler is mixed with the polymer.

In one embodiment, the unifier may comprise an internal lubricant. Alternatively or additionally, the unifier may comprise an external lubricant. The internal lubricant may act to improve lubrication between the polymer chains.

In a preferred embodiment, the internal lubricant comprises a fatty acid amide. More preferably, the internal lubricant comprises a straight or branched C₁₂-C₂₄ fatty acid amide. More preferably, the internal lubricant comprises steramide.

In a preferred embodiment, the external lubricant comprises a stearate. Preferably, the unifier comprises less than 20% by weight internal lubricant. More preferably, the unifier comprises about 10% by weight internal lubricant.

Preferably, the filler comprises at least one of:
a silicate material, preferably sand;
ash;
a carbonate material, preferably calcium carbonate;
a salt, preferably sodium chloride.

The filler may comprise a mixture of filler materials. Preferably, the filler material is inert, more preferably the filler material is inorganic, although organic fillers, such as wood flour, peanut hulls, ground straw or animal litter may be used. Preferably, the filler is provided or is ground into small particles, since this may provide a more uniform material. Dredged sand may be used in preference to desert sand since the particles of dredged sand are finer than those of desert sand.

In a preferred embodiment, the apparatus is rotationally moulded substantially in one piece. Moulding the apparatus substantially in one piece may advantageously allow the product to be produced without substantial post-processing of the moulded product. Parts of the apparatus (for example, the doors of a container) may be moulded separately and coupled to the apparatus after the main moulding process.

In one embodiment, the apparatus comprises a freight container. A freight container manufactured as described herein may provide the advantages outlined above. In particular, the plastics container may be lighter and may be more durable and more environmentally sustainable than a prior art steel container. In addition, it may be possible to X-ray or obtain a thermal image of the plastics container to determine its contents and increase security.

In one embodiment the freight container comprises an elongate freight container having a length of at least 5m, e.g. the container may comprise a 20 foot (about 6m) container.

In a further embodiment, the freight container may comprise an elongate freight container having a length of at least 10m, e.g. the container may comprise a 40 foot (about 12m) high-cube container. This may allow the container to be used in the same way as an existing steel container that meets the standards for a 40' high cube container. For example, the plastics 40' container may be stacked with prior art containers and may be transported using the same apparatus and fixing means as a prior art container, for example the container may be fixed onto a transport lorry in the same way as a prior art container. As will be appreciated by one skilled in the art, however, the container may comprise storage and transportation apparatus of any shape or size.

Preferably, the thickness of the walls of the container is less than about 90mm. Hence the container may have thinner walls than a prior art steel container. In one embodiment, the walls may have a thickness of about 70mm.

Preferably, the filler comprises a light-coloured material. This may enable the apparatus to be manufactured in a light colour without requiring painting or expensive pigments. For a container, manufacturing the container in a light colour may help the container to maintain a lower temperature when it is exposed to high temperatures, particularly to radiated heat such as intense sunlight.

In one embodiment, the apparatus comprises a pallet. A plastics-based pallet may advantageously provide an alternative to the prior art wooden pallets. The plastic pallet may have a longer usable life than a wooden pallet, since the plastic pallet may be stronger and more durable that a wooden pallet. Hence the plastic pallet may be more environmentally sustainable than a wooden pallet.

Preferably, the pallet is moulded substantially in one piece. Preferably, a plurality of pallets may be moulded in a single moulding operation. Preferably, the pallet comprises a platform and a plurality of feet depending from the platform.

More preferably, the feet are arranged to enable lifting equipment to engage the pallet from any one of four directions. Hence the pallet may be a four-way-access pallet, which may be lifted from any one of four directions, for example by a fork-lift truck.

Preferably, the feet of the pallet are regularly spaced over the lower surface of the platform. Bracing members may be provided between the feet of the pallet.

Preferably, at least one foot is arranged substantially at each corner of the platform of the pallet. Hence, each corner of the platform may be supported.

More preferably, at least one foot is arranged substantially at the centre of the platform of the pallet. This may further strengthen the platform pallet at the centre.

Preferably, at least one foot is arranged substantially at the centre of each edge of the platform of the pallet. Hence a total of 9 feet are preferably provided for each pallet. Four feet may be provided at the corners of the pallet, a further four feet may be provided at the centre of each edge of the pallet and a further, 9^{th} foot may be provided under the centre of the platform of the pallet.

In a preferred embodiment, each foot has a recess in the lower surface of the foot. This may advantageously reduce the weight of the pallet, without reducing the strength of the pallet. In addition, the pallet may be formed without requiring a large cavity in each foot to be evenly filled with an inner layer.

Preferably, the pallet comprises an outer skin layer having an upper surface and a lower surface.

More preferably, the upper and lower surfaces of the outer skin layer are arranged to abut each other over at least a portion of the pallet surface. In one embodiment, the upper and lower surfaces may form a cavity over the feet of the pallet but may abut each other, e.g. the surfaces may be formed substantially without a gap between them, over the platform areas of the pallet. The outer skin layer may be the only layer of the pallet and the cavities formed between the upper and lower surfaces may be filled with air. Alternatively, the cavities may be filled with a further material, such as a foamed plastics material or a filled plastics material.

In a preferred embodiment, the pallet further comprises an inner layer having a different composition to the outer skin layer. Providing an inner layer within the outer skin may add further strength and rigidity to the pallet.

Preferably, the inner layer comprises a foaming agent. Providing the layer as a foam layer may ensure that the additional layer does not add significantly to the overall weight of the pallet.

In an alternative embodiment, the inner layer comprises at least 40% by weight of a filler. Using a highly filled inner layer may enable the pallet to be strengthened, but the highly-filled layer may be inexpensive.

In a preferred embodiment, the feet of the pallet are moulded integrally with the platform.

Preferably, the pallet has a length of at least 800mm. In one embodiment, the pallet may have dimensions corresponding to those of a standard pallet, that is about 1020x1220x120mm (40x48x5 inches). In a preferred embodiment, the pallet may have a width of between about 1006 and 1010mm and a length of between about 1207 and 1211mm. This may allow a pallet of a single size to meet the requirements of the US pallet standard of around 1016x1220mm (40x48 inches) and the requirements of the European pallet standard of around 1000x1200mm. Advantageously, this may allow pallets to be manufactured for markets that require the pallet to meet the metric standards using the same tools that are used for pallets that are required to meet the imperial standards. Hence only one set of tools or moulds are required to manufacture both types of pallet.

Preferably, the feet of the pallet have a width greater than about 30mm.

In a further embodiment, the apparatus comprises a cable reel.

In a highly preferred embodiment, the apparatus comprises a plurality of layers. Preferably, the composition of the filled plastics material differs between the layers. This may allow properties of a plurality of compositions to be incorporated into the apparatus.

Preferably, the composition of a first layer of the apparatus is optimised to provide an outer skin layer. Preferably, the outer skin layer is manufactured to be durable enough to withstand the conditions and the chemicals to which the apparatus may be subjected during normal use.

Preferably, the outer skin layer comprises more than about 20% by weight filler. More preferably, the outer skin layer comprises less than about 80% by weight filler. This may ensure that the outer skin layer is not too brittle.

Preferably, the outer skin layer comprises more than about 50% by weight polymer, more preferably, the outer skin layer comprises about 60% by weight polymer.

In a preferred embodiment, the composition of a second layer of the apparatus is optimised to provide an inner layer. The inner layer may be formed within the outer skin layer and may comprise a highly-filled or a light-weight layer.

In a preferred embodiment, the inner layer comprises a polymer. Hence the inner layer may not contain a filler material. This may be advantageous since a polymer, particularly a foamed polymer, may be lighter than a filled polymer.

In an alternative embodiment, the inner layer comprises a polymer and a filler. In one embodiment, the inner layer comprises more than about 30% by weight filler. A highly-filled inner layer may be provided, since it will be protected by the outer skin layer. Hence the inner foam layer may have different surface properties to the outer skin layer, since it will not be subjected to external conditions. A highly filled, relatively dense, inner layer may be provided inexpensively, for example using a low-grade filler.

More preferably, the inner layer comprises more than about 50% by weight filler. In a preferred embodiment, the inner layer comprises about 60% by weight filler.

In a preferred embodiment, the inner layer comprises a greater amount of filler by weight than the outer layer.

In a highly preferred embodiment, the inner layer comprises a foaming agent, preferably the foam layer is about 50% foamed. This may mean that the inner layer is a light layer and does not increase significantly the overall weight of the apparatus.

In some embodiments, the filled plastics material further comprises a pigment. Advantageously, the apparatus may be coloured to any colour required simply by adding a pigment to the feedstock. This may allow apparatus of a consistent colour to be produced without requiring the further step of painting the apparatus. In some embodiments, the product formed from the material, for example the container or the pallet, may further be printed on.

In a preferred embodiment, the apparatus incorporates a remotely readable Identification (ID) tag, preferably an RFID tag. The tag may be used to store information about the container and/or the contents of the container. For example, details of the contents of the container, its source, its destination, and the owner of the contents of the container may be recorded.

Preferably, the ID tag is moulded into the surface of the apparatus.

In some embodiments, the filled plastics material further comprises a stabiliser, preferably a UV stabiliser. This may allow the material to be exposed to Ultra-Violet radiation, for example sunlight, without degrading the plastics material. In some embodiments, the filled plastics material further comprises a plasticizer.

According to a further aspect, there is provided apparatus for sealing a freight container comprising sealing means manufactured from a plastics material, wherein the plastics material is soluble in saltwater.

A problem in the container freight shipping industry is that containers are often lost overboard from container ships. The lost containers often contain air and other matter less dense than water and, since the containers are substantially air-tight, the containers may float on or just below the surface of the water. This may cause a hazard for other shipping in the area. The aspect described above may therefore allow a container lost overboard to lose its seal, to fill with water and to sink, which may reduce or remove the potential hazard caused by the container. Preferably, the seal is arranged to dissolve in salt water over a period of about 5 days.

Preferably, the plastics material comprises PVA or PVOH. Preferably, the plastics material further comprises a filler and/or a unifier.

According to a further aspect, there is provided a method of manufacturing apparatus for storage or transportation of loads greater than about 50 kilograms, the method comprising rotationally moulding the apparatus from a filled plastics material comprising a polymer, a filler and a unifier.

According to a further aspect, there is provided X-ray apparatus for forming an X-ray of the contents of a load-carrying apparatus for carrying loads of at least 50 kilograms and manufactured from a filled plastics material, comprising:
a scanning area;
energy delivery means for providing energy of a suitable frequency spectrum and intensity to penetrate at least 20mm of the filled plastics material;
energy detecting means to detect reflected energy.

According to a further aspect, there is provided thermal imaging apparatus for forming a thermal image of the contents of a load-carrying apparatus for carrying loads of at least 50 kilograms and manufactured from a filled plastics material, comprising:
a scanning area;
energy detection means for detecting thermal energy transmitted from within the load-carrying apparatus.

Preferably, the scanning area has a maximum dimension of at least 1m. In one embodiment, the scanning area has a maximum dimension of at least 2m.

Preferably, the filled plastics material comprises at least 10% by weight of a mineral filler, preferably a silicate or a carbonate filler.

In one embodiment, the load-carrying apparatus comprises a freight container. Hence the contents of containers may be determined using the imaging apparatus.

In one embodiment, the load-carrying apparatus has a length of at least 5m. In a further embodiment, the load-carrying apparatus has a length of at least 10m.

A further aspect provides a method of rotationally moulding a product from a filled plastics material comprising:
providing a mould for the product defining a void corresponding to at least a portion of the required
shape of the product;
loading a first feedstock having a first composition comprising a polymer and at least 10% by weight
of a mineral filler into the mould;
heating the mould;
rotating and/or rocking the mould about at least two axes to coat the internal walls of the mould with a
layer of the first feedstock;
cooling the mould;
releasing the product from the mould.

The method described above may advantageously provide an efficient method of rotationally moulding products.

The effect of rotating the mould about two axes of symmetry may be achieved by rotating the mould about a single rotational axis that is not parallel to an axis of symmetry, that is an off-axis rotational axis.

Preferably the method further comprises providing heating means adjacent to the walls of the mould and heating the mould using the heating means. Applying heat using heating means adjacent to the walls, such as one or more burners, for example gas or oil burners, or one or more electric heated plates, may allow the mould to be heated evenly over its whole surface without requiring the mould to be placed in and rotated within an oven. Hence the mould may be heated more quickly, since it is not necessary to heat a whole oven and the energy-efficiency of the process may also be increased.

Preferably, the method comprises providing cooling means adjacent to the walls of the mould and cooling the mould using the cooling means. Similarly, providing cooling means adjacent to the walls, such as a stream or jet of water or cooled air, may increase the energy efficiency and decrease the moulding time for the product, since the mould may be cooled directly, without requiring a moulding oven to be cooled.

In addition, using heating and cooling means adjacent to the mould walls may allow moulds of any size or shape to be used without the user requiring a moulding oven of a corresponding size.

In an alternative embodiment, however, the mould may be heated and cooled in one or more ovens. A heating and cooling cycle may be implemented for each mould in a single oven or a first oven may be kept within a predetermined temperature range and may be used to heat the mould and one or more further ovens may be kept within a cooler predetermined temperature range and may be used to cool the mould.

Preferably, the heating means comprise a plurality of burners. Preferably, the burners comprise gas or oil burners.

Preferably, the cooling means comprises at least one supply of water, for example, a stream, a pool or a j et of water.

Preferably, the mould is a generally elongate mould and the method comprises rotating the mould about a first axis substantially parallel to the axis of elongation of the mould and rocking the mould about a second axis substantially orthogonal to the first axis.

In a preferred embodiment, rocking the mould comprises rocking the mould through a portion of a circle to a maximum angle from the horizontal of less than about 30°. Preferably, the mould is rocked to a maximum angle from the horizontal of about 15°. In some embodiments, particularly if the mould is a small mould, the mould may be rocked to an angle greater than about 30°, for example the mould may be rocked to about 45°.

Preferably the mould is rocked at a rate of less than about 6 rocking cycles per minute. Preferably, the mould is rocked at a rate of about 4 cycles per minute.

Preferably, the mould is rocked at a rate of greater than about 1 rocking cycle per minute.

Preferably rotating the mould comprises rotating the mould at a rate of less than about 10 revolutions per minute. More preferably around 4 revolutions per minute. Preferably, rotating the mould comprises rotating the mould through 360°. Alternatively, the mould may not be rotated through a full circle. The mould may be constantly rotated in the same direction, or the direction of rotation may be reversed periodically.

In some embodiments, particularly if the mould is a small mould, the mould may be rocked and/or rotated at a faster rate. However, except for small moulds, the cycle rate is likely to be less than about 30rpm.

Using a rotation or rocking rate that is too slow may lead to an uneven distribution of feedstock within the mould, since gravitational effects may dominate the motion of the feedstock. However, using a rotation or rocking rate that is too fast may not be energy-efficient and centrifugal effects may also lead to an inferior product.

Hence it is preferably not necessary to rotate or to rock the mould at a high rate. The rotating and rocking of the mould is preferably a continuous motion, but may not be continuous in some embodiments.

In a preferred embodiment, the mould comprises an inner mould portion and an outer mould portion, wherein the inner mould portion is positioned within the outer mould portion and wherein the first feedstock is inserted between the outer mould portion and the inner mould portion. Hence the product may be formed between the two moulds. This may allow the inner surface of the product to be provided with a predetermined shape and may allow the thickness of the product to be controlled. The feedstock is preferably inserted between the moulds and the moulds are heated and rotated together to ensure that the melted feedstock covers the surfaces of both of the moulds.

Preferably, the method further comprises providing heating means within the inner mould portion. Hence the inner mould portion may be heated to provide a more even temperature distribution throughout the moulding volume.

Preferably, the method further comprises maintaining the heating means at a substantially constant distance from the walls of the outer mould portion as the mould is rotated. This may enable all parts of the mould to be heated evenly and hence may encourage a more even distribution of the plastics material within the mould.

Preferably, the method further comprises, before cooling the mould:
loading a second feedstock, having a second composition, into the mould;
rotating the mould to form a second layer of the second feedstock.

Preferably, the composition of the first layer is optimised to provide an outer skin layer. Preferably, the composition of the second layer is optimised to provide an inner layer.

In a preferred embodiment, the second feedstock comprises a foaming agent. Preferably, the second feedstock becomes foamed after insertion into the mould on the application of heat to the mould. Hence the feedstock may be distributed evenly within the mould before being foamed. Aeration of the feedstock may release nitrogen or another similar, preferably substantially inert gas. Preferably, a foaming agent, such as sodium bicarbonate, may be incorporated into the second feedstock.

Preferably, the second feedstock comprises a higher proportion of filler than the first feedstock. In one embodiment, the second feedstock comprises at least 50% by weight of a mineral filler. However, as described for the pallet above, the second feedstock may not contain a filler but may simply be a polymer, preferably a foamed polymer. Alternatively, the second feedstock may be highly filled.

The mineral filler preferably comprises silica-based material, such as a silicate filler, for example sand, or a carbonate filler, such as calcium carbonate.

In one embodiment, the product may comprise at least one of: a freight container, a pallet, a cable reel or a panel. Preferably, a plurality of products are produced in a single moulding operation.

In one embodiment, the method may further comprise positioning elements of the product within the mould before the feedstock is inserted and over-moulding the elements into the product. This may further reduce the amount of post-processing required for the product and ensure that the additional components are securely fixed into the product.

In one embodiment, the product comprises a freight container and the elements comprise one or more of:
a metal frame;
door securing means;
strengthening elements; or
corner lifting elements.

In a highly preferred embodiment, the product is moulded substantially in one piece.

Preferably, releasing the product from the outer mould portion comprises moving the walls of the outer mould portion apart and away from the moulded product. Hence the outer mould portion may be removed from the moulded product and the product may be removed from the inner mould portion. This may advantageously allow the product to be formed with shaper and more well-defined edges, since prior art moulding techniques have previously required the product to be removed from a tightly-fitting mould, so it has been necessary to form products with rounded edges to allow the product to be removed from the mould more easily.

A further aspect may provide a filled plastics material comprising:
a polymer;
at least 10% by weight of a mineral filler;
a unifier comprising stearate.

Preferably, the unifier further comprises an internal lubricant, preferably steramide. More preferably, the steramide comprises Chrodamide S Powder.

Preferably, the stearate comprises Calcium Stearate. Preferably, the unifier comprises more than 5% by weight steramide. More preferably, the unifier comprises about 10% by weight steramide.

Preferably, the unifier comprises more than 80% by weight stearate. More preferably, the unifier comprises about 90% by weight stearate.

In a preferred embodiment, the polymer comprises polyethylene. More preferably, the polymer comprises High Density Polyethylene (HDPE).

Preferably, the filler comprises at least one of:
a silicate material, preferably sand;
ash;
a carbonate material, preferably calcium carbonate;
a salt, preferably sodium chloride.

A mixture of filler materials may be used, as described above.

Preferably, the filled plastics material comprises at least 0.1% by weight unifier. More preferably, the filled plastics material comprises about 1% by weight unifier.

According to a further embodiment, there is provided apparatus for rotationally moulding, from a filled plastics material, a load-carrying apparatus for carrying a load of at least 50 kilograms, the apparatus comprising:
a mould defining a void corresponding to at least a portion of the required shape of the product;
means for receiving a first feedstock comprising a filled plastics material comprising a polymer and at least 10% by weight of a mineral filler;
heating means;
cooling means;
means for rotating and/or rocking the mould about at least two axes.

Preferably, the heating means are provided adjacent to the walls of the mould. Preferably, the cooling means are provided adjacent to the walls of the mould.

In a preferred embodiment, the mould is a generally elongate mould and the apparatus further comprises means for rotating the mould about a first axis substantially parallel to the axis of elongation of the mould and means for rocking the mould about a second axis substantially orthogonal to the first axis.

Preferably, the mould comprises an inner mould portion and an outer mould portion, wherein the inner mould portion is positioned within the outer mould portion and wherein the first feedstock is inserted between the outer mould portion and the inner mould portion.

Preferably, the apparatus further comprises heating means within the mould, preferably within the inner mould portion.

In a preferred embodiment, the apparatus further comprises means for maintaining the heating means at a substantially constant distance from the mould.

In one embodiment, the outer mould portion has a length of at least 5m. Preferably, the outer mould portion has a length of at least 10m.

Preferably, the filled plastics material comprises at least 30% by weight of a mineral filler. Preferably, the filler comprises a silicate or a carbonate material.

Preferably, the apparatus is mounted over a pit and wherein at least one end of the outer mould portion is rocked into the pit.

Preferably, the means for receiving the feedstock comprises a series of apertures in the outer mould portion. Using a plurality of apertures may allow the feedstock to be inserted into the mould at a high rate. This may decrease the moulding cycle time and may reduce the amount of energy used in each moulding cycle. The feedstock may also be distributed more evenly throughout the mould. Using a series of apertures may be particularly advantageous when the second and any subsequent feedstocks are inserted, since the second feedstock may be inserted quickly an evenly within the first feedstock.

Preferably, the series of apertures is formed along at least one edge of the outer mould portion. Preferably, the series of apertures is covered by at least one sliding gate valve.

According to a highly preferable embodiment, the internal surface of the sliding gate valve is coated in a non-stick material. This may allow a second or subsequent feedstock to be inserted within a first moulded feedstock. For example, an inner layer of a product may be inserted within an outer shell layer. This may be achieved since the first feedstock preferably does not adhere to the non-stick material, so an aperture in the feedstock layer may be provided when the gate is opened to allow the second feedstock to be inserted.

In a preferred embodiment, the apparatus comprises at least one hopper for storing the feedstock. Preferably, the hopper comprises dispensing means for dispensing a predetermined amount of the feedstock, wherein the predetermined amount comprises the amount of feedstock required to rotationally mould at least one load-carrying apparatus.

Preferably, the apparatus further comprises filling means for loading the mould with a predetermined amount of the feedstock. Preferably, the filling means comprises means for filling the feedstock via a series of apertures in the outer mould portion.

Preferably the means for filling the feedstock comprises at least one bucket having a series of apertures corresponding to the series of apertures in the outer mould portion.

More preferably, the bucket comprises a telescopic bucket having an adjustable length. This may enable the bucket to be transported to the moulding apparatus more easily.

In a preferred embodiment, the heating means comprises at least one gas burner.

Preferably, the cooling means comprises a jet of water. The water may be cycled through a cooling system or may be provided from a reservoir, for example from the sea.

According to a further aspect, there is provided a unifier for promoting binding and dispersion of a mineral filler and a polymer, wherein the unifier comprises a fatty acid amide.

Preferably, the fatty acid amide comprises a straight or branched C₁₂-C₂₄ fatty acid amide. More preferably, the unifier comprises steramide.

In a preferred embodiment, the unifier further comprises an external lubricant, preferably wherein the external lubricant comprises a stearate.

Preferably, the unifier comprises more than 80% by weight external lubricant. More preferably, the unifier comprises about 90% by weight external lubricant.

Preferably, the mineral filler comprises a silicate or a carbonate material, more preferably the filler comprises sand or calcium carbonate.

According to a further aspect, there is provided a rotationally-moulded load-carrying apparatus comprising:
at least 10% by weight HDPE;
at least 10% by weight of a filler comprising sand;
a unifier comprising a fatty acid amide;
wherein the load-carrying apparatus comprises an inner layer and an outer layer, the layers having different compositions.

In one embodiment, the apparatus comprises an elongate container having a length of at least about 5m and a wall thickness of at least about 40mm.

In one embodiment, the apparatus comprises a pallet having a length of at least about 800mm.

Preferably, the inner layer comprises a foamed layer.

According to a further aspect, there is provided a pallet made of a plastics material capable of meeting, or exceeding, any, some or all of the test criteria described herein.

According to a further aspect, there is provided a rotationally moulded pallet manufactured substantially from a filled plastics material, wherein the pallet has:
a length of greater than around 1000mm and less than around 1500mm;
a mass of less than around 30kg;
a maximum load carrying capability of greater than around 1000kg.

Preferably, the mass of the pallet is less than around 25kg, preferably around 23kg. Different embodiments of pallets may be produced to meet different specification requirements. For example, a standard pallet may be produced having a wall thickness of around 2mm and a weight of 15kg. A higher grade, heavy duty pallet may also be produced having a wall thickness of around 4mm and a weight of around 25kg. It will be clear to the skilled person that the specification of the pallet, including the wall thickness and weight, may be varied depending on the required specification. Lightweight pallets may be provided by using only a top pallet element as the pallet, as described in more detail below. Such lightweight pallets may have a weight of around 8kg.

Hence a standard pallet of the present invention according to one embodiment may be more than 50% lighter than a wooden pallet. Such a pallet would also be lighter than other plastic pallets, which may weigh around 20kg. Standard pallets according preferred embodiments are also stronger than wooden pallets (having a dynamic load of 1200) and previous plastic pallets (having a dynamic load of 1880), since they may have a dynamic load of around 2400. Pallets of preferred embodiments may also be made at a cost that is 50% cheaper than wood. This contrasts with previous plastic pallets, which are more expensive to manufacture (for example, around 60% more expensive) than wooden pallets.

Preferably, the maximum load carrying capability of the pallet is greater than around 1100kg, preferably around 1250kg.

Preferably, the pallet further comprises an ultraviolet stabiliser. Preferably, the pallet has an opaque and/or a non-reflective surface.

Preferably, the top of the top deck, the top of the bottom deck and the interior of the at least one spacer are surface textured to around 15µm to 20µm.

In one embodiment, the pallet further comprises an indelible marking. Preferably, the pallet is marked with a code.

In a preferred embodiment, the pallet comprises recyclable materials. Preferably, the pallet has a damage rate per trip of less than or equal to 0.25%.

In a preferred embodiment, the pallet has anti-static properties. Preferably, the pallet is designed to allow circulation of air through the pallet.

In one embodiment, the pallet comprises a top deck and the top deck comprises through holes which are tapered so that the smaller openings are at the top of the top deck and the larger openings are at the bottom of the top deck. In one embodiment, the pallet comprises a top deck and a bottom deck and all of the internal radii on the bottom of the top deck and the bottom of the bottom deck have a minimum radius of approximately 3.175 mm.

Preferably the pallet comprises a means of identification. Further preferably, the means of identification comprises a RFID tag or a barcode.

Embodiments of the invention will now be described with reference to the drawings in which:
Fig. 1 illustrates a container and moulding apparatus according to one embodiment;
Figs. 2a and 2b are schematic diagrams of a further embodiment of a moulded container and moulding apparatus according to one embodiment;
Fig. 3 is a schematic diagram of a further embodiment of a moulded container and moulding apparatus according to one embodiment;
Fig. 4 illustrates a further embodiment of moulding apparatus according to one embodiment;
Fig. 5 is a schematic diagram of a container according to one embodiment;
Fig. 6 illustrates one embodiment of a container manufactured according to the methods and apparatus described herein;
Fig. 7 is a schematic diagram of a reinforcing eyelet according to one embodiment;
Fig. 8 is a schematic diagram of a reinforcing eyelet moulded into a container according to one embodiment;
Fig. 9a is a schematic perspective view of the top of one embodiment of a pallet manufactured according to the methods and apparatus described herein;
Fig. 9b is a schematic perspective view of the bottom of one embodiment of a pallet manufactured according to the methods and apparatus described herein;
Fig. 10 is a schematic diagram of a pallet according to one embodiment;
Fig. 11 is a schematic diagram of a manufacturing plant for implementing the methods described herein;
Fig. 12 is a further schematic diagram of a manufacturing plant for implementing the methods described herein;
Fig. 13 is a schematic diagram illustrating the loading of feedstock into a moulding apparatus according to one embodiment;
Fig. 14 illustrates example moulding cycle times for a plastics-based filled compared to polyethylene;
Fig. 15 illustrates example impact strengths for a plastics-based filled compared to polyethylene;
Fig. 16 illustrates example tensile modulus results for a plastics-based filled material compared to polyethylene;
Fig. 17 illustrates one embodiment of a pallet element;
Fig. 18 illustrates a plurality of identical pallet elements stacked in different configurations;
Fig. 19 further illustrates a plurality of stacked, identical pallet element;
Fig. 20 illustrates a close-up view of the feet of three stacked pallet elements according to one embodiment;
Fig. 21 is a schematic diagram illustrating how a plurality of pallets may be moulded in a single mould;
Fig. 22 illustrates a portion of a mould that may be used in the manufacture of pallets according to one embodiment;
Fig. 23 illustrates a section of the mould of Fig. 22 in more detail;
Fig. 24 illustrates two pallets according to an alternative embodiment;
Fig. 25 is a schematic diagram of a cross-section through part of a mould for a pallet;
Fig. 26 is a schematic diagram of a cross-section through a part of a mould for a pallet;
Fig. 27 is a schematic diagram of a plan view of part of a mould for a pallet;
Fig. 28 is a schematic illustration of a typical test pallet;
Fig. 29 is a schematic diagram of a flow chart for determining sample size for static load tests and slip resistance tests;
Fig. 30 is a schematic diagram of layer A (Fig. 29a) and layer B (Fig 29b) of a uniform granular load;
Fig. 31 is a set-up schematic for a pallet spacer (block) compression (creep) test;
Fig. 32 illustrates a standard load applicator for a pallet spacer lateral compression test;
Fig. 33 is a set-up schematic for a pallet spacer lateral compression test;
Fig. 34 is a set-up schematic for an edge rack support (creep) test;
Fig. 35 is a set-up schematic for a short span support (creep) test;
Fig. 36 is a set-up schematic for a fork tine support test;
Fig. 37 is a set-up schematic for a stacked load support - top deck (creep) test;
Fig. 38 is a set-up schematic for a stacked load support - bottom deck (creep) test;
Fig. 39 is a set-up schematic for a conveyor support (line load) (creep) test;
Fig. 40 is a schematic diagram of a load cycle definition for a re-creep test;
Fig. 41 is a set-up schematic for a load cycling (re-creep) test;
Fig. 42 is a set-up schematic for a deck separation test;
Fig. 43 is a set-up schematic for a non-plastic load-on-pallet slip resistance test;
Fig. 44 is a set-up schematic for a buckling test; and
Fig. 45 illustrates the standard fork for inclined impact tests;
Fig. 46 is a side view of a top pallet element according to a further embodiment;
Fig. 47 is a perspective view of the under-side of a top pallet element according to one embodiment;
Fig. 48 is a perspective view of the top-side of a top pallet element according to one embodiment;
Fig. 49 is a plan view of the top of a bottom pallet element according to one embodiment;
Fig. 50 is a perspective view of the under-side of a bottom pallet element according to one embodiment;
Fig. 51 is a side view of a bottom pallet element according to one embodiment;
Fig. 52 is a perspective view of the under-side of a pallet comprising connected top and bottom pallet elements according to one embodiment;
Fig. 53 is a perspective view of the top-side of a pallet comprising connected top and bottom pallet elements according to one embodiment;
Fig. 54 is a further perspective view of the top-side of a pallet comprising connected top and bottom pallet elements according to one embodiment;
Fig. 55 is a plan view of the under-side of a pallet comprising connected top and bottom pallet elements according to one embodiment;
Fig. 56 is a side view of a plurality of stacked pallet elements according to one embodiment;
Fig. 57 is a perspective view of a plurality of stacked pallet elements;
Fig. 58 illustrates a plurality of stacked pallet elements being transported on a fork lift truck;
Fig. 59 illustrates a portion of a pallet mould according to one embodiment;
Fig. 60 illustrates the portion of pallet mould according to Fig. 59 being released from the moulded pallet;
Fig. 61 is a schematic diagram of one embodiment of part of the process of forming pallets;
Fig. 62 is a schematic diagram of one embodiment of a further part of the process of forming pallets;
Fig. 63 is a schematic diagram of a side view of a mould for a plurality of pallet elements;
Fig. 64 is a schematic diagram of an end view of a mould for a plurality of pallet elements;
Fig. 65 illustrates the rocking, rotation and opening of a mould according to one embodiment;
Fig. 66 illustrates the rocking and rotation of a mould according to one embodiment;
Fig. 67 is a side view illustrating the rocking and rotation of a mould according to one embodiment;
Fig. 68 is a schematic diagram of a side view of a mould for a plurality of pallet elements;
Fig. 69 is a schematic diagram of part of a manufacturing plant according to one embodiment;
Fig. 70 illustrates a moulding apparatus according to one embodiment;
Fig. 71 illustrates an open moulding apparatus according to one embodiment.

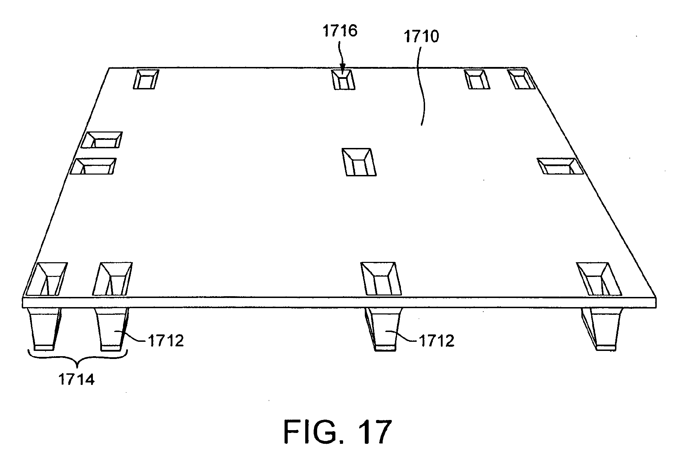

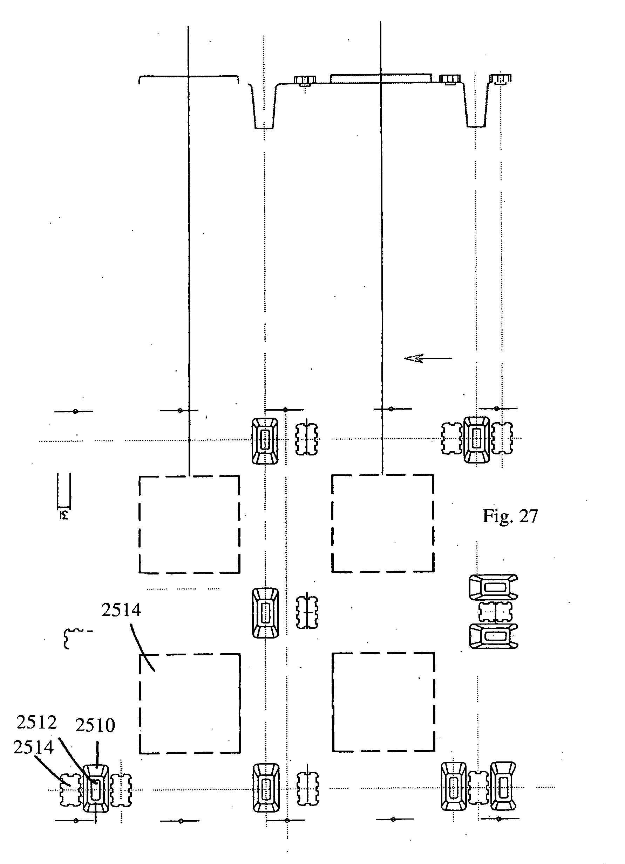

A wide variety of shapes and sizes of pallets may be formed using the methods described herein and the forms of some embodiments of pallets will now be described in more detail with reference to Figs. 17 to 27.

Fig. 17 illustrates one embodiment of a pallet that may be manufactured according to the techniques described herein. The pallet has a substantially rectangular upper surface or platform 1710 and a plurality of feet 1712 depending from the surface.

The feet 1712 may be moulded integrally with the platform 1710 of the pallet, which may allow the feet to be coupled securely to the pallet and reduce the complexity of the manufacturing process when compared to the process of forming the feet separately and attaching the feet to the platform of the pallet.

In the present embodiment, the pallet includes a foot assembly at each corner of the pallet 1714, an assembly at the centre of the pallet and an assembly in the centre of each edge of the pallet. Each foot assembly may comprise one or more feet depending from the pallet surface.

The feet of the pallet are preferably arranged so that the pallet may be accessed by lifting and manoeuvring equipment from any of its four sides, in particular, so that the blades of a forklift truck can fit underneath the pallet from any side or from at least two sides.

The feet of the pallet are preferably tapered from a widest point at the platform of the pallet. This may increase the ease of access for lifting equipment to fit between the feet of the pallet and may also make it easier to connect the pallet to another pallet, as described in more detail below, to form a double-sided pallet assembly.

The upper surface of the platform of the pallet 1710 is preferably provided with an uneven surface, which may increase the grip of the surface for objects placed on the surface. The platform of the pallet is preferably a substantially continuous surface, although holes may be provided in the surface to reduce the net weight of the pallets. Providing a pallet with a substantially continuous surface may allow small objects to be carried on the pallets.

The feet of the pallet are preferably at least partially hollow. This may reduce the weight of each pallet without significantly reducing the pallet strength and hence may allow more goods to be loaded onto the pallet for a given gross weight. A hollow may be formed from the under-side of the feet or, as shown in Fig. 17, the hollow 1716 may be formed into the feet from the platform of the pallet. This may be advantageous in allowing the pallets to be stacked and nested, as described in more detail below.

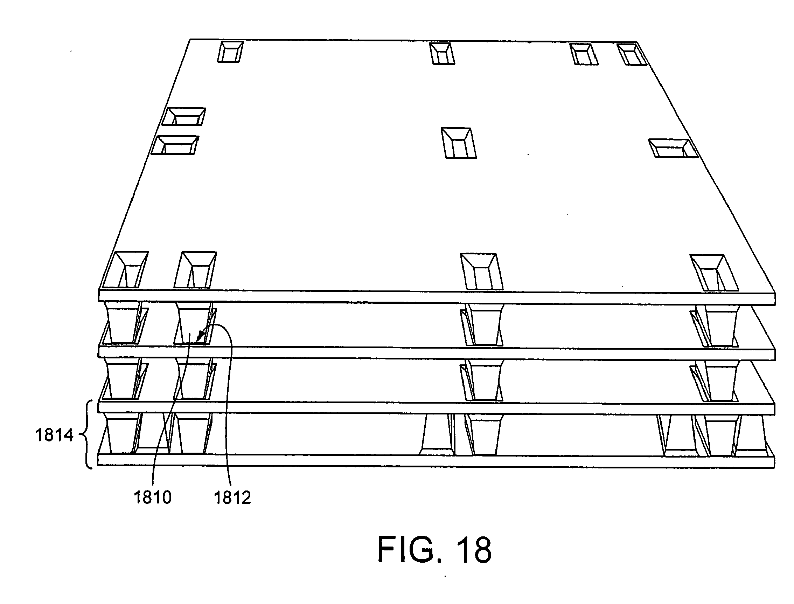

The feet of the pallet are preferably arranged so that the pallet can be stacked with other pallets in a number of different configurations. For example, as shown in Fig. 18, the feet may be arranged so that the feet of a first pallet 1810, sitting directly on top of a second pallet, fit into the recesses 1812 in the platform of the second pallet. This may allow the pallets to be stacked in a secure and stable configuration. If the recesses in the feet are large recesses or hollows, then the unladen pallets may be stacked closely together in a nested configuration and the storage space required for unladen pallets may be reduced significantly.

The feet of the pallet may be arranged to be rotationally symmetrical so that the feet of a pallet fit into the recesses in the feet of a lower pallet even when one of the pallets is rotated through 180 degrees in an axis perpendicular to the plane of the platform.

If the feet are not arranged in a symmetrical configuration, as shown in Fig. 18, unladen pallets may be stacked without the feet of an upper pallet fitting into the recesses in the feet of a lower pallet by turning one of the pallets through 180 degrees. This may be advantageous since it may be easier for a forklift truck operator to manoeuvre the pallets if the pallets are not closely nested together. This feature may also give the user the options of nesting or not nesting stacked pallets.

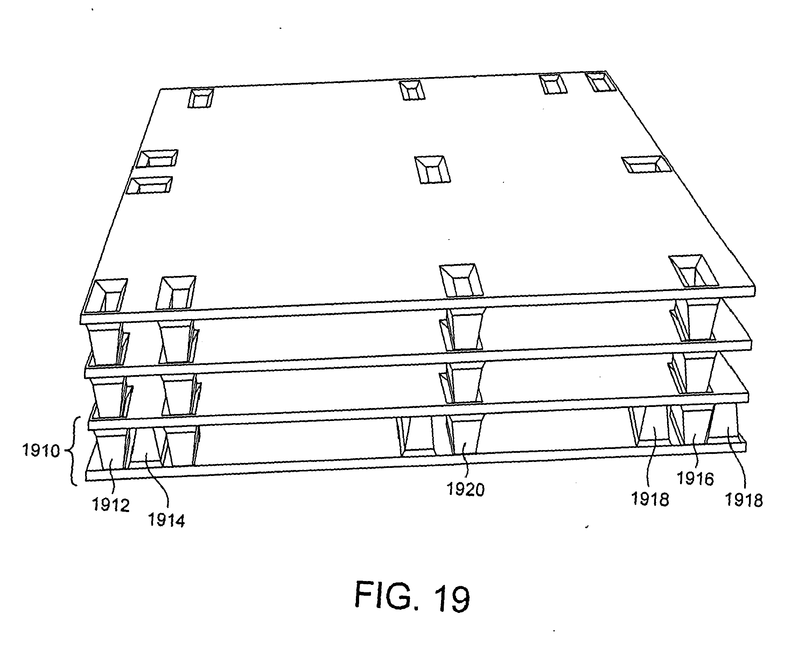

As also illustrated in Fig. 18 and Fig. 19, a pallet may be combined with a second pallet to form a double pallet 1814, 1910. A double pallet may be formed by rotating one pallet through 180 degrees around an axis in the plane of the pallet and placing a second pallet over the inverted pallet so that both sets of feet of the two pallets lie between the pallet platforms. As illustrated in Figs. 18 and 19, the feet of the pallets 1912, 1914 are preferably arranged so that, when one pallet is inverted, the feet of the two pallets interleave so that each foot of both pallets touches the underside of the platform of the other pallet. Such a combination of pallets may be stronger and more rigid than a single pallet. A double pallet may be used to manoeuvre heavier loads or for more heavy-duty work.

As will be appreciated, a variety of arrangements of the feet of the platform may be provided to allow the feet of two platforms to interleave on formation of a double-sided pallet. The feet of the pallet are preferably arranged asymmetrically in at least one axis of rotation in the plane of the pallet. Arranging the feet asymmetrically in only one axis of rotation means that the feet of pallets only interleave to form a double-sided pallet in one orientation, but may allow greater flexibility in the arrangement of feet on the pallets and hence may provide a more robust pallet when it is used in the single-sided formation.

One or more feet may be arranged at each corner of the pallet, at the centre of the pallet and along the edges of the pallet and, at each point, the one or more feet may have a male or a female configuration. The arrangement of the feet is preferably such that, in the double-sided formation, feet with a male configuration correspond to opposing feet with a female configuration and hence fit together. As illustrated in Fig. 19, a male configuration of feet may comprise a single foot 1916 and a female configuration of feet may comprise two feet 1918 with a gap in between sufficient to allow the foot of the opposing pallet to interleave between them. Other feet of the pallet, such as those shown along the centre line 1920 in Fig. 19, may be offset from the centre line or from the edge of the pallet. This may allow the feet of the pallet to interleave on formation of a double-sided pallet.

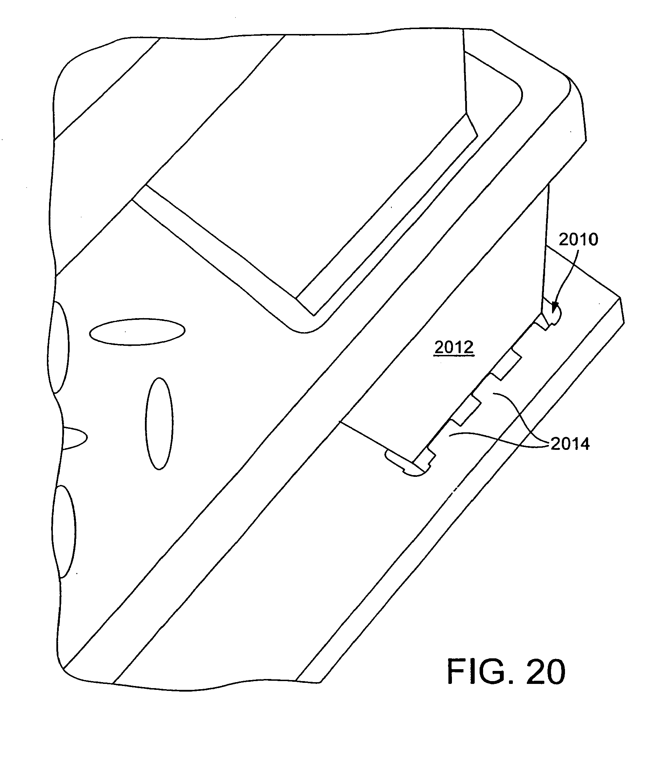

As illustrated in Fig. 20, the inner surfaces of the platform of each pallet may be provided with recesses 2010 corresponding to the position of the feet of the opposing pallet. This may reduce the likelihood of the two pallets moving or sliding relative to each other when they are in the double-pallet configuration. The recesses may allow the two pallets to be secured together, for example by allowing the feet of one pallet 2012 to 'clip' into the recess in the opposing pallet 2010. The recesses in the pallet platform may be provided with deformable teeth 2014 or prongs that fit tightly around the feet of the upper pallet to hold the pallets together. In some embodiments, the feet may also be provided with corresponding teeth to grip the edges of the recess in the platform.

Alternatively, a separate 'clip' mechanism may be provided to secure the two pallets together into the double pallet configuration. Inserting the feet of one pallet into recesses in the opposing pallet also allows the height of a double-sided pallet to be roughly equal to the height of a single-sided pallet.

Preferably, the two pallet elements may be joined without an adhesive or fixing mechanism simply by applying pressure to the elements. The pressure necessary to join the pallet elements is preferably not so large that a machine is required to join the elements. For example, the pressure required is preferably similar to the pressure exerted by a person standing on the pallet (for example 500-1000N) or the impact provided by a hammer (for example a hammer of around 2kg may provide an impact of around 10Ns), however, the pallets may be designed to be joined using a smaller or a larger required pressure, for example on application of a weight of between 10 and 100kg.

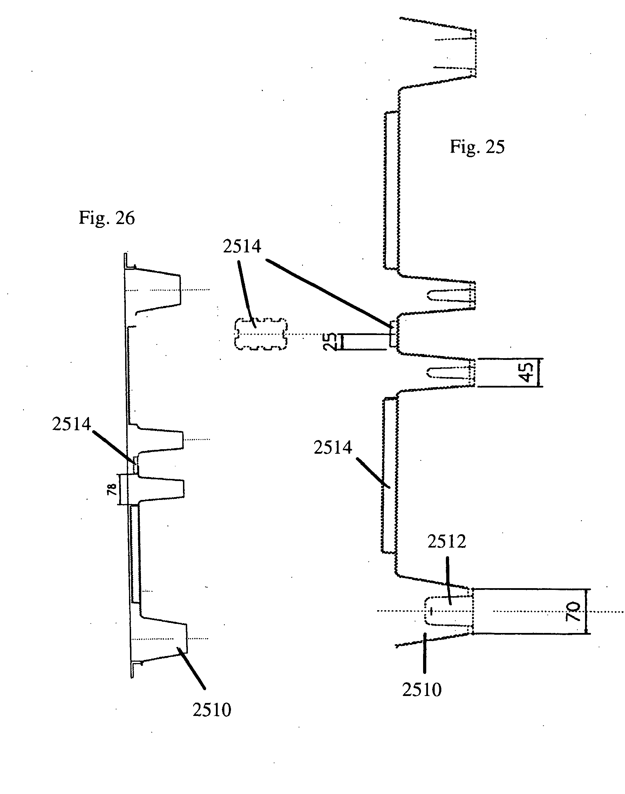

In an alternative embodiment, the feet of the pallet may be formed with prongs 2410 and corresponding slots 2412, as illustrated schematically in Fig. 24. On rotation of one of the pallets, the prongs of one set of feet may engage with the corresponding slots of the other set of feet to form a double-sided pallet.

Embodiments of the pallet are preferably manufactured using the rotational moulding techniques described herein. Each pallet may be moulded individually but, preferably, a large number of pallets are moulded in a single rotational moulding operation.

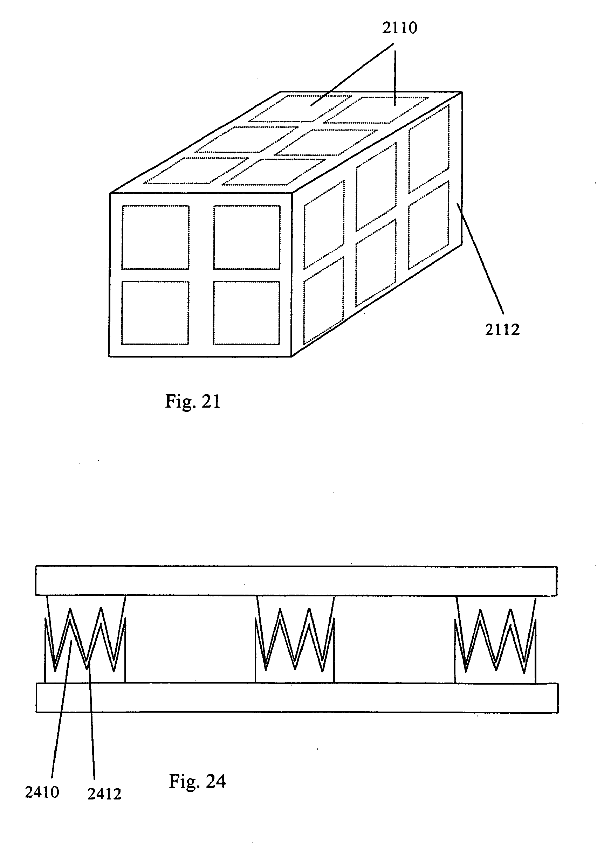

Fig. 21 illustrates how a plurality of pallets 2110 may be moulded within a single moulding operation around the walls of a larger mould 2112. If necessary, pallets moulded in this way may be cut or punched out of the sheet of moulded pallets on release from the mould.

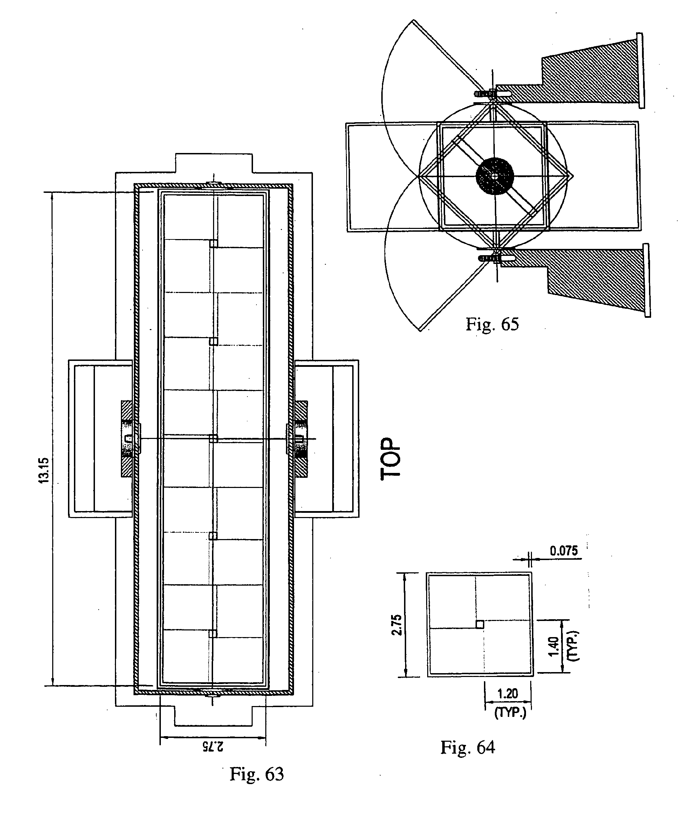

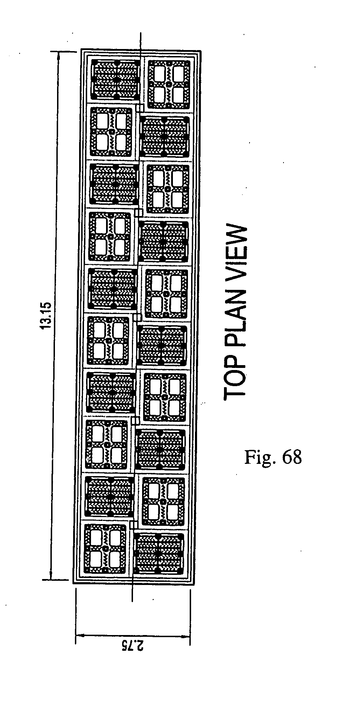

Figs. 63 and 64 are schematic diagrams of a side view and an end view of a mould for a plurality of pallet elements according to a further embodiment. Fig. 68 is a schematic diagram of a side view of a further embodiment of a mould for a plurality of pallet elements.

In an alternative embodiment, the mould may comprise a plurality of layers of pallet moulds, for example in a cubic or cuboid arrangement.

Preferably, the pallets are moulded using the rocking and rotating methods described in more detail herein.

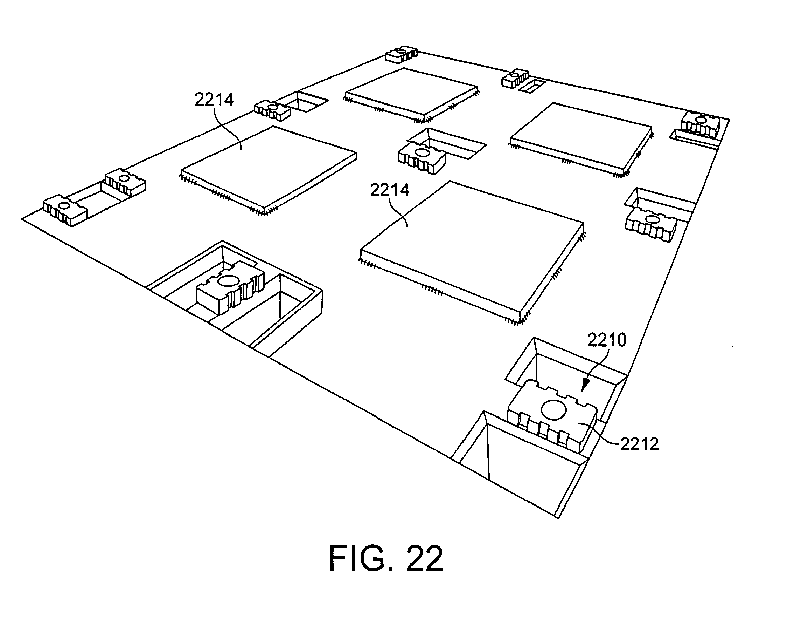

Fig. 22 illustrates a portion of a mould which may be used to form pallets such as those illustrated in Figs. 17 to 20. The portion of the mould that is illustrated may be used to form the underside of the platform of the pallet, including the pallet feet, which can be seen as recesses in the mould 2210, and the recesses into which the feet of other inverted pallets may be inserted 2212, which can be seen as raised areas of the mould. The central raised sections of the mould 2214 may be provided to form large shallow recesses in the underside of the platform of the pallet. This may decrease the net weight of the pallet without significantly reducing the strength of the pallet.

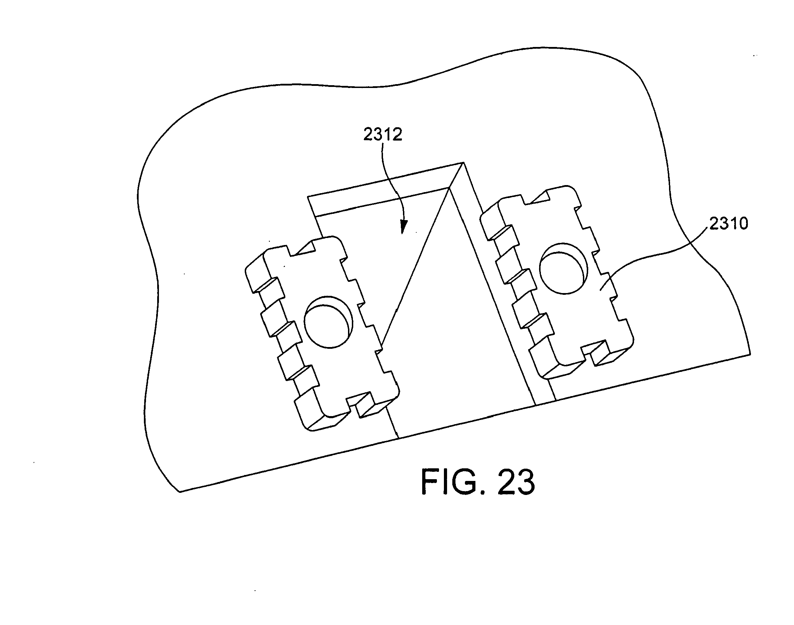

Fig. 23 is a close-up view of part of the mould portion illustrated in Fig. 22. A recess for a foot of the pallet 2312 and raised portions for forming recesses in the pallet 2310 are illustrated in more detail.

Figs. 25 to 27 illustrate schematically different views of parts of a mould that may be used to form the pallets. In particular, the figures illustrate recesses 2510 to form the feet of the pallet, raised sections to form hollows 2512 within the feet and further raised sections 2514 to form shallow hollows in the platform, as described above.

As described in more detail herein, the pallet is preferably formed from a filled plastics material. At least a portion of the pallet, for example the pallet platform, may have an outer skin layer and an inner layer of a different composition. In one embodiment, the inner layer may be a foamed layer.

In one method of manufacture, pallets and containers may be manufactured in the same location using similar rotational moulding techniques as described herein. This may allow the pallets to be distributed for use within the containers. That is, a batch of pallets may be stacked, preferably nested, within a container and the container, together with the pallets, may be shipped to the required destination. This may be particularly advantageous since a user who requires a container is also likely to require pallets to stack goods within the container.

For a standard pallet according to one embodiment, having a weight of around 15kg, around 288 pallets (top and bottom elements) may be transported in a twenty foot equivalent unit (teu) and around 576 pallets may be transported in a forty foot equivalent unit (feu). The load weight of a feu containing standard weight pallets would be around 8640kg.

For a lightweight pallet comprising a top pallet element according to one embodiment, each lightweight pallet having a weight of around 8kg, around 432 pallets may be transported in a twenty foot equivalent unit (teu) and around 864 pallets may be transported in a forty foot equivalent unit (feu). The load weight of a feu containing lightweight pallets would be around 6912kg.

For a heavy weight pallet according to one embodiment, having a weight of around 25kg, around 288 pallets (top and bottom elements) may be transported in a twenty foot equivalent unit (teu) and around 576 pallets may be transported in a forty foot equivalent unit (feu). The load weight of a feu containing heavy weight pallets would be around 14400kg.

A method of manufacturing an embodiment of a container, pallets, cable reels, and other similar apparatus using rotational moulding techniques will now be described in more detail. This method is applicable to a wide range of products manufactured from plastics based materials and is not limited to the storage and transportation products described.

Conventional rotational moulding techniques are well known in the art. A feedstock is inserted into a preformed mould. The mould is then placed into an oven to melt the feedstock and the mould is rotated and tilted to cover the interior of the mould with a layer of the melted feedstock. The rotation of the mould may be performed using a spider having a plurality of legs, for example three legs, wherein a mould may be attached to and rotated relative to each leg of the spider and wherein the spider as a whole may also be rotated. Once this stage of the process is complete, the mould is then cooled, for example by removing it from the oven or by cooling the oven itself. During the cooling process, the mould continues to be rotated to ensure it remains evenly coated. Once cooled, the product may be removed from the mould for further processing.

For some applications, rotational moulding may be preferable to, for example, blow moulding or injection moulding, since the process introduces fewer stresses into the moulded product. In addition, components can be incorporated into the rotationally moulded product by positioning the components within the mould before the rotational moulding process begins. The prior art rotational moulding process, however, is slow and inefficient. Each moulding cycle requires a large amount of time to allow the oven to heat to the required temperature and to cool the mould at the end of the heating process. In addition, a large amount of energy is wasted in the heating and cooling cycle.

A further advantage of rotationally moulding filled plastic materials is that other moulding apparatus, such as extrusion moulding apparatus would be worn and eroded by the filled plastics material as it was extruded, particularly if the filler is an abrasive material such as sand. Rotational moulding apparatus is likely to be more durable and long lasting for use with such materials as those described herein.

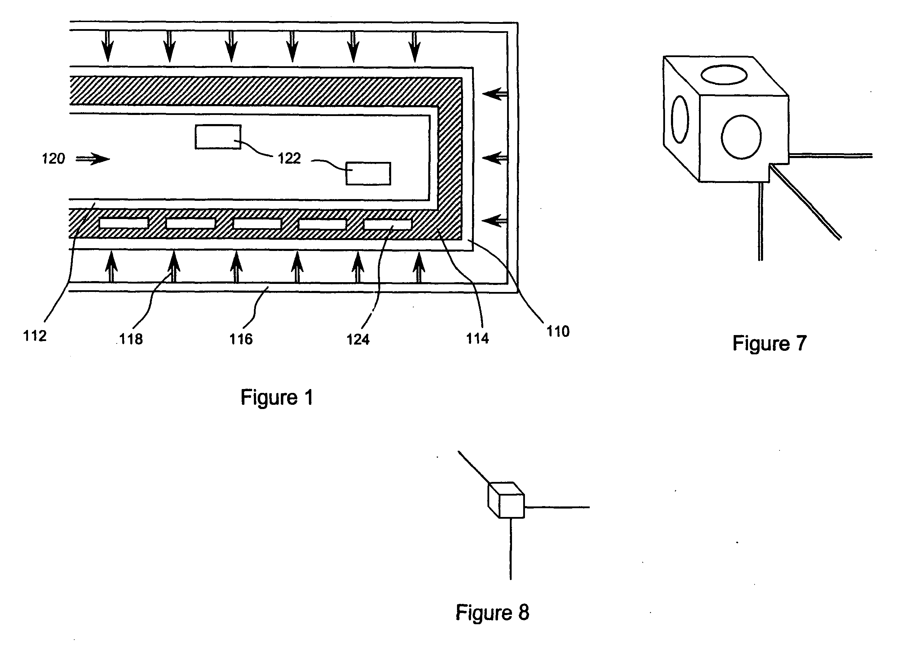

To alleviate some of the problems with conventional rotational moulding techniques discussed above a new rotational moulding technique and apparatus will now be described with reference to Fig. 1. The apparatus and methods described herein may be used to form all of the products described herein.

As in a conventional rotational moulding technique, the product is preferably formed within a mould 110. The inner surface of the mould is preferably formed with a shape corresponding to the required outer shape of the product, for example a container with a corrugated outer surface may be formed using a mould with a corresponding corrugated inner surface. In the present embodiment, the apparatus further includes an inner mould portion 112, or liner, placed within the outer mould portion 110, hence the product 114 is formed between the surfaces of the inner mould portion 112 and the outer mould portion 110.

In a preferred embodiment, the apparatus described herein is formed substantially in a single moulding operation, for example, the main body of the freight container may be formed in a single piece. Hence a large mould may be required, for example to encompass a container that meets the 40' high-cube specification. Large moulds may also be used to mould a plurality of products in a single moulding operation, for example a number of pallets may be moulded in a single mould. In the case of a container, the container is formed around the outer surface of the inner mould portion 112. In the case of smaller products, such as a pallet, each product is formed between the surfaces of the inner 112 and outer 110 moulds.

To mould the product, a predetermined amount of the feedstock is placed within the apparatus between the inner and the outer mould portions and the mould is heated. The walls of the mould may be heated by any suitable heating means, for example using heating plates embedded in the walls of the mould but, in the present embodiment, the mould is heated by applying direct heating means 118, for example a plurality of gas burners, to the exterior of the mould walls. The mould may then be rotated through the gas burners 118 to heat the mould walls evenly and hence obtain an even thickness of the plastics-based material over the walls of the mould. In the present embodiment, the gas burners are coupled to a bar 116 and the bar is maintained at a constant distance from the mould walls by spring elements. This may ensure that the walls of the mould are heated evenly and to a constant temperature. The compositions described herein may be softened at a temperature of about 160° and may be melted at a temperature of about 220°.

The inner surface of the inner mould portion 112, or liner, is preferably further heated by a gas burner within the liner 120. Hence both the outer mould portion 110 and the liner 112 are evenly heated. This may enable an even distribution of plastics-based feedstock within the mould.

Probes 122 within the mould monitor the temperature inside the mould to determine when the feedstock has melted. Probes 112 may be positioned within the inner mould portion 112 of the apparatus and may monitor the air temperature within the inner mould portion.

A heat shield may further be provided to reflect heat from the gas burners onto the surface of the apparatus.

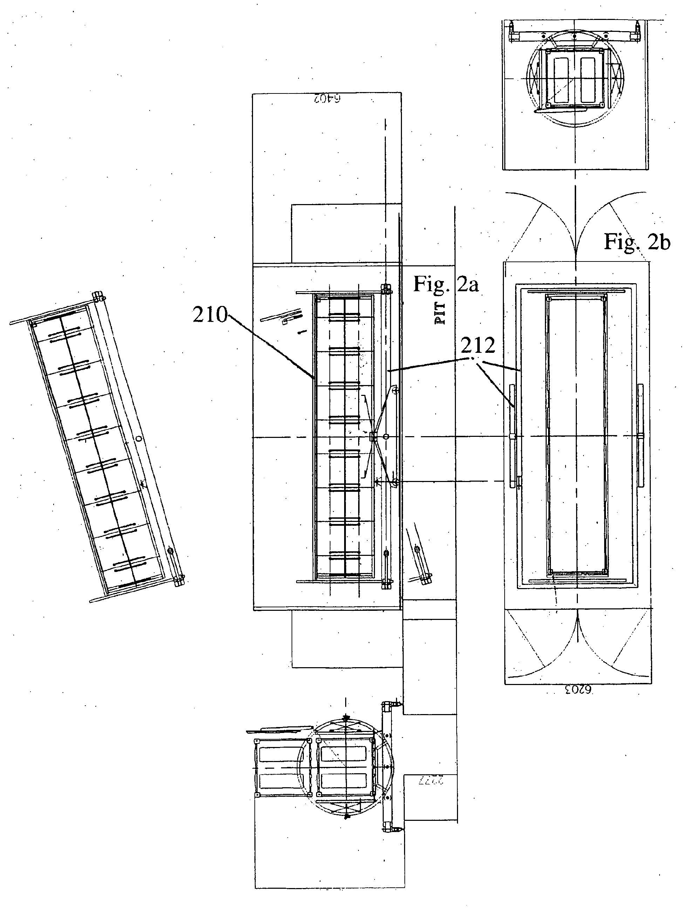

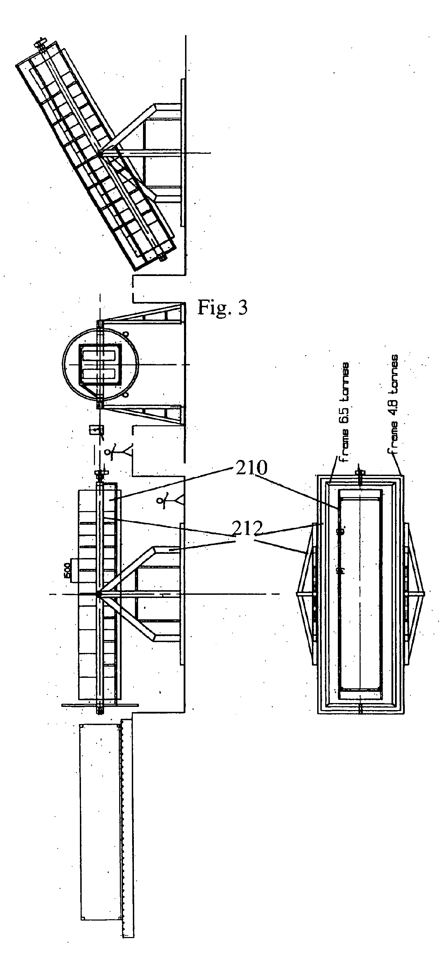

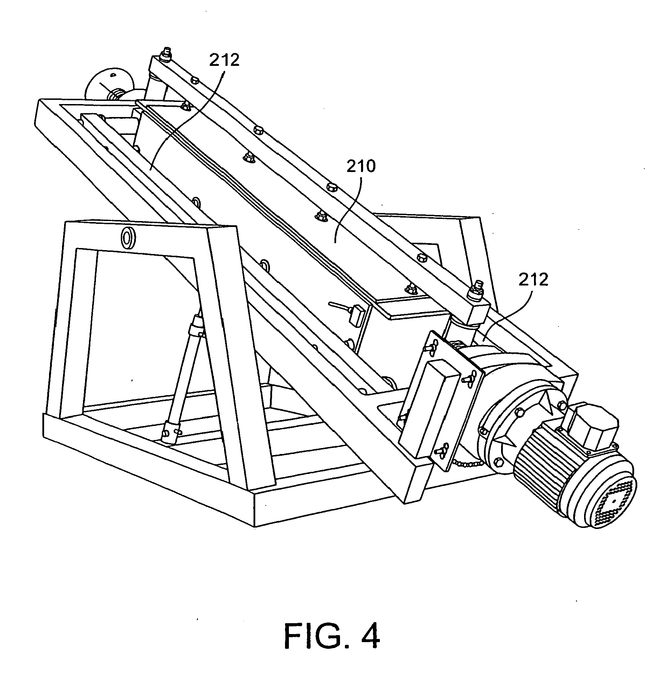

Figs. 2a, 2b, Fig. 3 and Fig. 4 illustrate further embodiments of apparatus for performing the method described herein. The mould 210 is supported on a carriage 212, which may enable the mould to be rocked and rotated, or spun, to coat the whole of the mould, between the outer mould portion and the inner mould portion, with a layer of the feedstock. It has been found that the surfaces of the mould may be coated sufficiently using only a low rate of rotation and only a small angle of tilting. For example, a rotation rate of about 4 rotations per minute and a tilt cycle rate of about 2 cycles per minute with a maximum angle of inclination of 15° may be sufficient to distribute the melted feedstock over the surfaces of the mould.

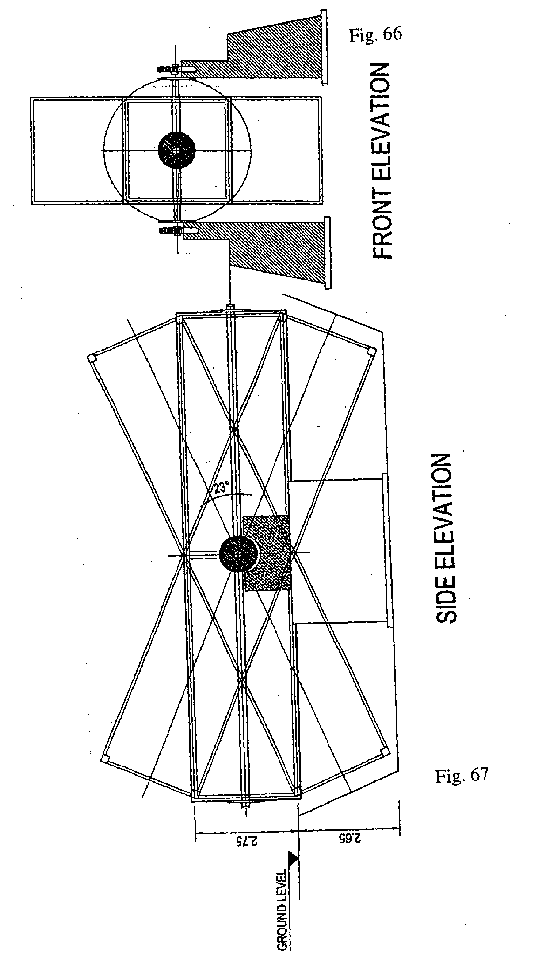

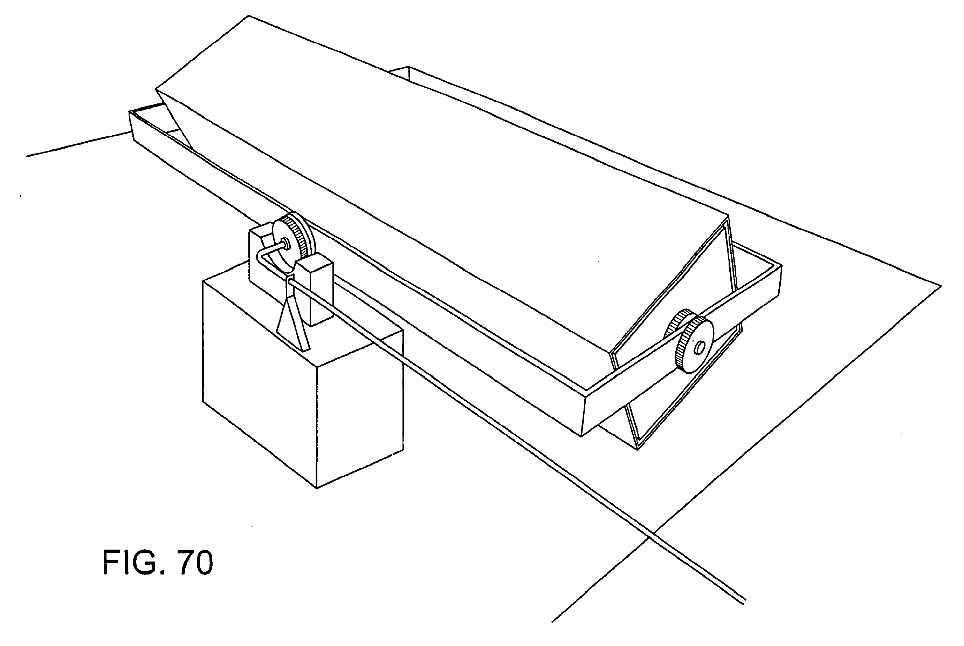

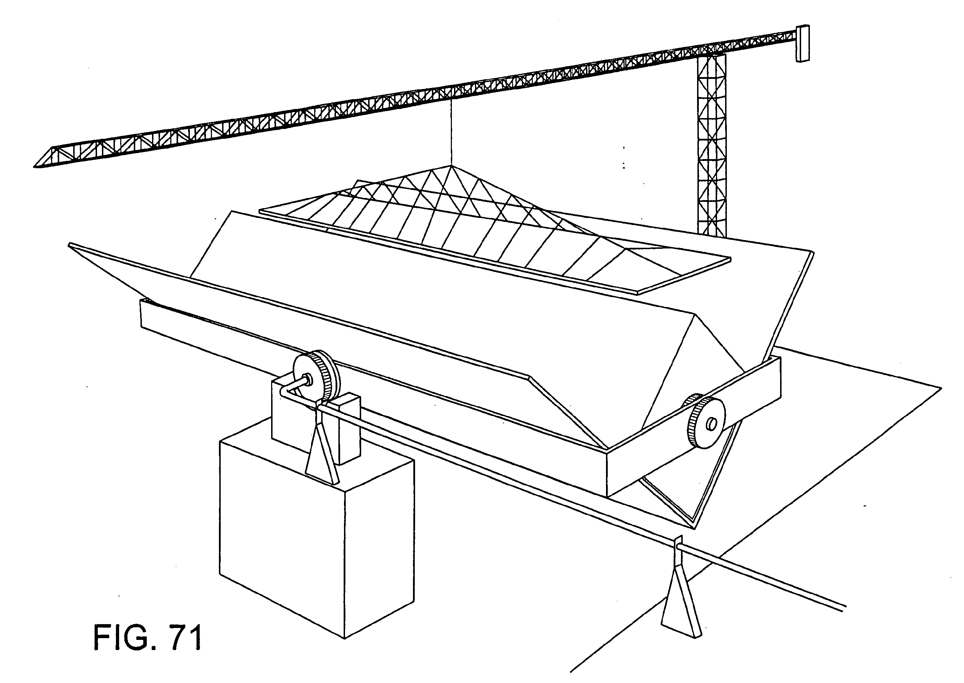

Fig. 65 illustrates the processes of rocking, rotation and opening a mould according to a further embodiment and Figs. 66 and 67 illustrate the rocking and rotation of a mould according to one embodiment. Fig. 70 illustrates a moulding apparatus according to one embodiment and Fig. 71 illustrates an open moulding apparatus according to one embodiment.

Once the interior surface of the mould has been coated, the gas burners may be turned off and the mould may be cooled, for example by rotating the mould through a stream or jet of water or of air. Alternatively, the mould may be cooled using a cooling jacket, for example a water-cooled or oil-cooled jacket.

If a layered product is required, however, it is not necessary to cool the coated mould. Instead, further feedstock may be introduced to the mould, for example a feedstock having a different composition may be introduced, and the mould may continue to be rotated until the second layer of feedstock has covered the inner surface of the first, outer layer. Further layers of material may continue to be added in this way to build up the product.

If there is no inner mould portion in the apparatus, the feedstocks for the further layers may simply be added to the inside of the mould, however, if the first outer layer of the product is formed over the surfaces of an outer and an inner mould portion, it will be appreciated that any further feedstock for a further, inner layer of the product must be inserted within the skin or shell of the outer layer. In the present embodiment, this is achieved by providing areas of the outer mould portion that are covered in a coating to which the melted feedstock does not adhere, as shown at 124 in Fig. 1. For example, for a polyethylene composition, areas on the inner surface of the outer mould portion may be covered with a Teflon (RTM) coating. The non-stick areas of the mould may be removable from the mould leaving apertures 124, preferably small apertures, through the outer mould portion and through the skin formed by the first feedstock, to the interior of the skin formed by the first feedstock. A further feedstock may then be added to the interior of the skin formed by the first feedstock to provide an inner layer for the product. For a container, non-stick areas are preferably provided at diametrically opposite corners of the container mould.

It will be appreciated that it is advantageous to insert the second feedstock into the interior skin of the first feedstock as quickly as possible after the first feedstock has coated the surfaces of the mould. This may allow a better bond to be formed between the two layers and may reduce the cycle time for manufacturing the product. Methods and apparatus for fast and efficient insertion of the second feedstock will be described in more detail below.

As outlined above, it has been found that it is not necessary to cool each layer of the product within the mould before adding a further layer. Rather, simply adding the next layer allows a secure bond to be formed between the layers of the product without significant mixing or blending occurring between the layers.

Once all of the required layers have been added, the mould and the product within the mould may be cooled, preferably by rotating the mould through a jet or stream of water. To decrease the time for the cooling part of the cycle, the cooling means may be applied both to the exterior surface of the outer mould portion and to the interior surface of the inner mould portion.

The methods described above may allow a product, such as a container, or a batch of products, such as a batch of pallets, to be manufactured in a cycle time of about 20 minutes.

It is noted that the effect of rocking and rotating the mould, that is rotating the mould about two axes of symmetry of the mould, can be achieved by rotating the mould about a rotational axis that is not parallel to an axis of symmetry of the mould. For example, rotating the mould about a rotational axis that is at an angle to the axis of symmetry that runs along the centre of the mould.

Rotating and/or rocking the mould may be achieved by rotating the mould about a fixed axis, for example by holding the mould in a frame. Alternatively, the rocking and rotating may be achieved by rolling the mould, for example along a track. The track may be shaped to provide a rocking motion as the mould rolls along its length.

Other methods of moulding or forming the products described herein, such as the container, may be used and the products may be moulded in several sections, which may subsequently be joined together. For example, the doors of the container may be moulded separately and then may be joined to the main part of the container. In the present embodiment, the main body of the container and the doors of the container may each be provided with corresponding parts that may be assembled into a piano-type hinge. The two parts of the hinge may be manufactured as part of the door and the main body and the door may be coupled to the main body of the container by inserting a rod through corresponding sections of the hinges.

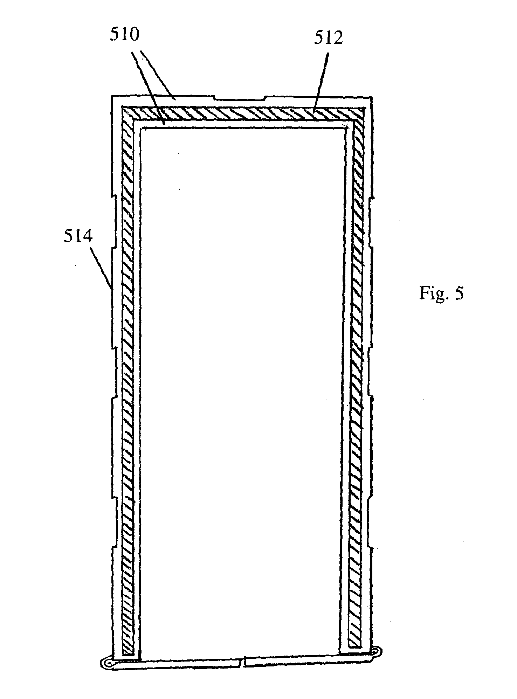

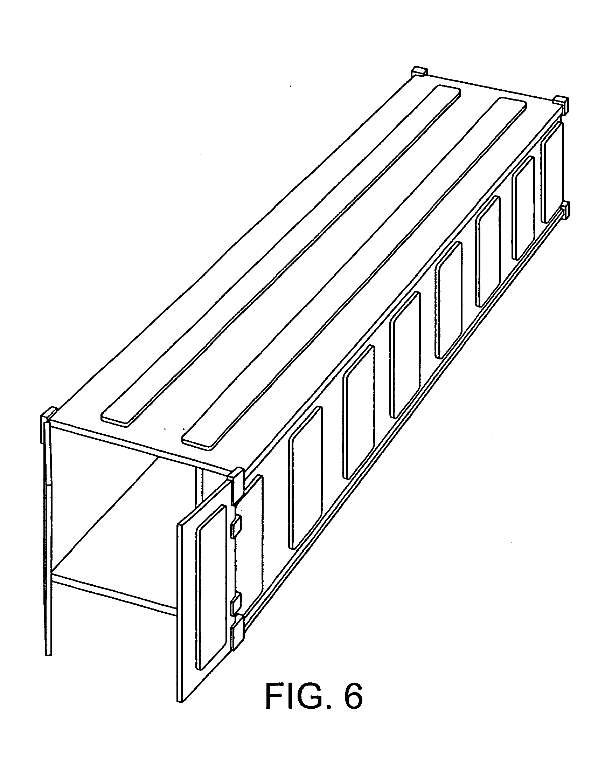

An embodiment of the container itself will now be described in more detail with reference to Figs. 5 and 6. According to one embodiment, the container is formed as a 40' high-cube container with each wall comprising an outer skin layer 510 and an inner layer 512.

Each layer of the walls of the container comprises a filled plastics-based material containing plastic, a filler and a unifier material, but the relative amounts of the components of the material vary between layers. The outer skin layer 510 preferably comprises a larger proportion of a high-quality plastics material, such as polyethylene, for example the plastics material may comprise about 60% by weight of the composition, and a smaller proportion of a filler, for example about 40% by weight of the composition. The inner layer 512 preferably contains a relatively high proportion of the filler material, for example about 60% by weight and the foam layer is preferably highly foamed, for example 50% foamed. The foaming ingredient may be, for example, Sodium Bicarbonate. The total thickness of the container walls may be about 60mm, but this may be varied depending on the requirements of the container. In one embodiment, the thickness of the outer skin layer may be about 5-8mm and the thickness of the inner layer may be about 40-60mm. In one embodiment, the walls of the container may be only 30mm thick.

In an alternative embodiment, the inner layer 512 may be formed with a low proportion of filler material or may include no filler material. For example, the inner layer 512 may comprise a plastics material and a foaming agent. In one embodiment, the outer skin layer 510 may comprise a high proportion of filler, for example about 60% by weight filler.

The filler material of the present embodiment is sand, preferably dredged sand, since this has finer particles than desert sand. Alternative filler materials may include ash, a carbonate material such as calcium carbonate, another silicate material such as ground rock, or a salt material such as sodium chloride or an organic material, such as straw, peanut hulls, vegetable waste, miscanthus, wood flour or animal droppings.

A typical particle size distribution for polymer particles that may be used in the compositions described herein is set out below:

| **Particle distribution** | **Polymer** | | |
|---|---|---|---|
| | | | |
| Retained sieve | **A** | **B** | **typical** |
| Micron | % | % | % |
| 600 | 0.5 | 0.5 | 0.5 |
| 500 | 4 | 4.5 | 3.5 |
| 425 | 15 | 26 | 15 |
| 300 | 25.5 | 30 | 27 |
| 212 | 23.5 | 23.5 | 24 |
| 100 | 18 | 11 | 18 |
| Pan | 14 | 5 | 12 |
| Total | 100 | 100 | 100 |

A typical particle size distribution for sand particles that may be used in the composition described herein is set out below.

| **SAND Particle Distribution** | | | | | |
|---|---|---|---|---|---|
| | | | Possible Example | | |
| | Redhill 110 | | | **A** | **B** |
| Retained sieve | % | | Retained sieve | % | % |
| Micron | | | | | |
| 500 | 0.1 | | Micron | | |
| 355 | 0.4 | | 300 | 5 | 0 |
| 250 | 1 | | 200 | 84 | 1 |
| 180 | 4.5 | | 100 | 10 | 10 |
| 125 | 40 | | Pan | 1 | 89 |
| 90 | 37 | | Total | 100 | 100 |
| 63 | 13.5 | | | | |
| Pan | 3.5 | | | | |
| Total | 100 | | | | |

The net weight of embodiments of containers as described above may be about 3000 kilograms, preferably about 2800 kilograms, although heavier or lighter containers may also be formed using the techniques described herein. The net weight of a prior art steel container is about 3800-4200 kilograms, so containers as described herein may provide a significant saving in weight, for example on a container ship on which a large number of containers may be transported.

Preferably, the exterior surfaces of the container are not flat surfaces but have raised sections or corrugations 514 as shown in Fig. 5. In addition, the lower surface of the container may be formed with a raised grid of bars, for example in a waffle pattern. This may provide additional strengthening to the lower surface of the container, which may support the majority of the weight of the contents of the container and may further be required to support the weight of loading machinery, such as a fork-lift truck, which may be driven inside the container to load the contents.

An embodiment of a model of a 40 foot container formed according to the methods described herein is illustrated in Fig. 6.

Non-plastic components or pre-formed components may be incorporated into the container during its manufacture. For example, a steel frame may be incorporated into the container by placing the steel frame within the mould and forming the plastic layers of the container around the steel frame. Including a steel frame in the container may increase the strength of the container and may allow weight to be distributed evenly throughout the container structure. It is noted, however, that it has been found that it is not necessary to include a steel frame in embodiments of the container described herein to enable the container to meet the requirements of the industry standards.

Reinforcing eyelets may further be provided in some embodiments of the container, preferably in the four corners of the container, by over-moulding the eyelets into the plastic composition during the moulding process. An embodiment of a reinforcing eyelet is illustrated in Fig. 7. Fig. 8 illustrates one embodiment of an eyelet incorporated into a container manufactured according to the methods and apparatus described herein. The reinforcing eyelets may be used to connect the container to lifting apparatus, such as lifting gantries, and may provide additional strength to the container at these points.

A door fastening or locking mechanism may further be incorporated into the container. Preferably, the door mechanism may be moulded so that is it within the container. The door mechanism preferably comprises a prior art door mechanism as used for the prior art steel containers.

Preferably, the cycle time for manufacturing a container body as described herein, with an outer skin layer and an inner layer, is about 20mins. The container is preferably heated at a carefully controlled rate to ensure that the container walls are of an even thickness and is preferably further cooled at a carefully controlled rate to ensure that the container walls do not become distorted.

In a further embodiment of the container described herein, a fibrous material may be incorporated into the container to further bind the composition and strengthen the container, particularly when it is subjected to tensional or bending forces.

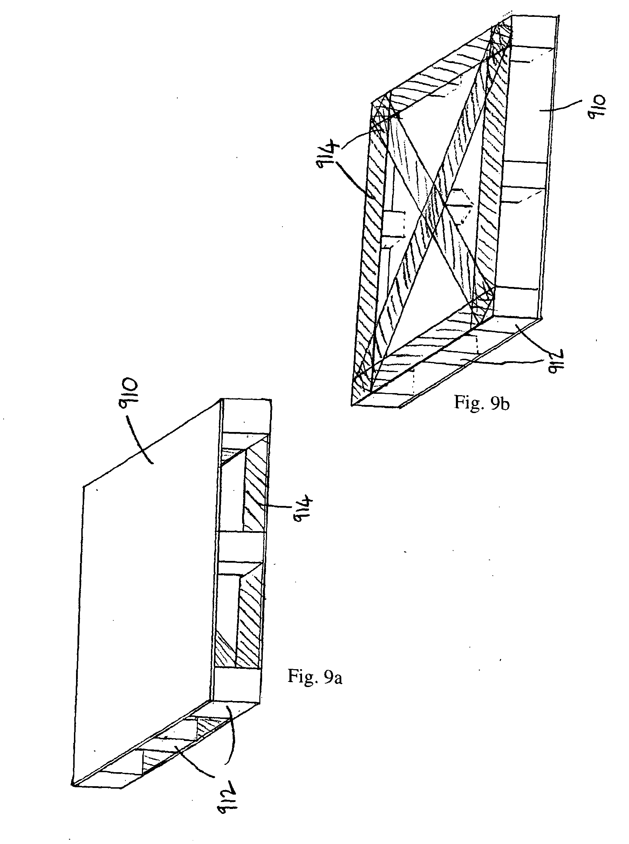

A further product which may be manufactured using the methods and apparatus described herein is a pallet. An embodiment of a pallet is illustrated herein in Figs. 9a and 9b. Traditionally, pallets are manufactured from wood, but a pallet manufactured according to the methods described herein may provide a number of advantages over a prior art wooden pallet. In particular, the usable life of a pallet described herein may be greater than that of a wooden pallet and the present pallets may be more environmentally sustainable than wooden pallets. Freight distributors often do not use wooden pallets more than once to ensure that each pallet used is in good condition for transporting the goods. In addition, it is often not economical to repair broken wooden pallets, since the cost of repair often exceeds the cost of a new pallet.

Figs. 9a and 9b illustrate one embodiment of a pallet, although it will be appreciated that a wide variety of shapes and sizes of pallets may be formed using the methods described herein. The pallet illustrated in Figs. 9a and 9b comprises a platform 910, on which the goods to be transported may be placed or stacked, and a plurality of feet 912. In this embodiment, the pallet comprises nine feet spaced in a regular pattern over the bottom surface of the pallet. The pallet illustrated is a rectangular two-way access pallet, but rectangular or square pallets may be formed and may be designed as four-way access pallets to enable machinery, such as a fork-lift truck, to access and move the pallet from any one of four directions.

Optional bracing members 914 may be provided between some or all of the feet of the pallet as shown in Fig. 9b, however the bracing members are not a necessary feature of the pallet.

The feet of the pallet may contain recesses or hollows, so may not be whole. This may reduce the weight of the pallet.

The pallet is preferably manufactured using a rotational moulding technique. Preferably, a plurality, or batch, of pallets is formed in a single moulding operation. The inner surface of the outer mould portion of the apparatus may be formed with a plurality of indentations, corresponding to the feet of the pallet, and the surface of the inner mould portion of the apparatus may be formed as a flat surface, to provide a pallet with a flat pallet surface to be formed. Alternatively, indentations or texture may be provided on the surface of the inner mould portion to allow a pallet with an uneven or textured platform surface to be formed.

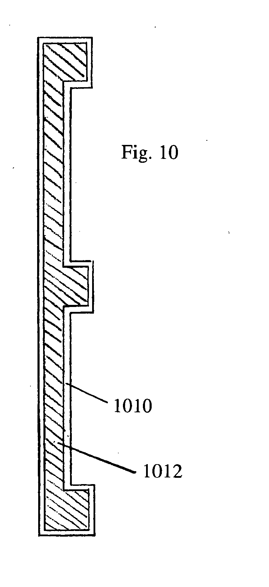

A further embodiment of a pallet is illustrated in Fig. 10. In a preferred embodiment, the pallet comprises an outer skin surface 1010 comprising about 60% by weight of a plastics material, such as polyethylene, preferably HDPE, about 40% by weight of a filler material, such as sand or calcium carbonate, and a small amount of a unifier material. Once the outer skin has been formed in the moulding apparatus, a second foam composition 1012 may be inserted into the outer skin using the method described above, and the inner foam material 1012 may be distributed throughout the outer skin 1010. The foam composition may be introduced as a solid material but may start to foam on the application of heat to the material. In the present embodiment, the foamed material may be 50% foamed.

In one embodiment, the pallet may comprise a single, solid plastics-based filled material and may not include a foam layer. However, including a foam layer may enable the finished pallet to be lighter and may add strength to the pallet when compared to a solid pallet manufactured with indentations to reduce the amount of plastics-based material used.

Further products may be manufactured using the methods and compositions described herein. For example, fencing or screening material may be provided in sheet form, with or without a foam layer. Building materials, for example panels that may be used as internal or external walls or components that may be used for decking, may further be provided. Similarly, the methods and compositions described may be used to provide ship-building materials, such as a hull for a ship, boat or tanker.

In some embodiments, a plurality of layers may be provided in a product and each layer may comprise a different composition. For example, the upper and lower surfaces of the outer skin layer described herein may be formed separately in different moulding cycles and may be formed from different compositions. In some embodiments, non-plastics based layers, for example metals-based layers, may be incorporated into the product.

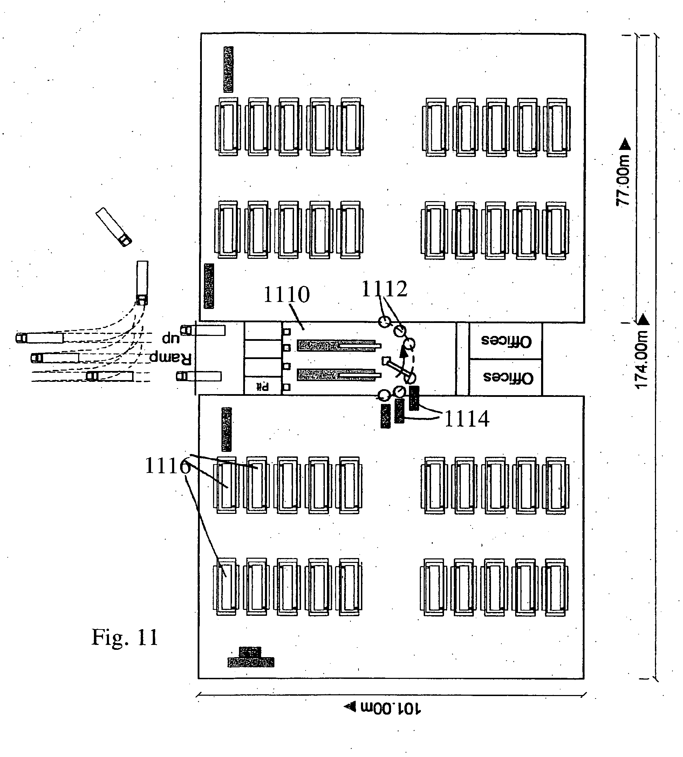

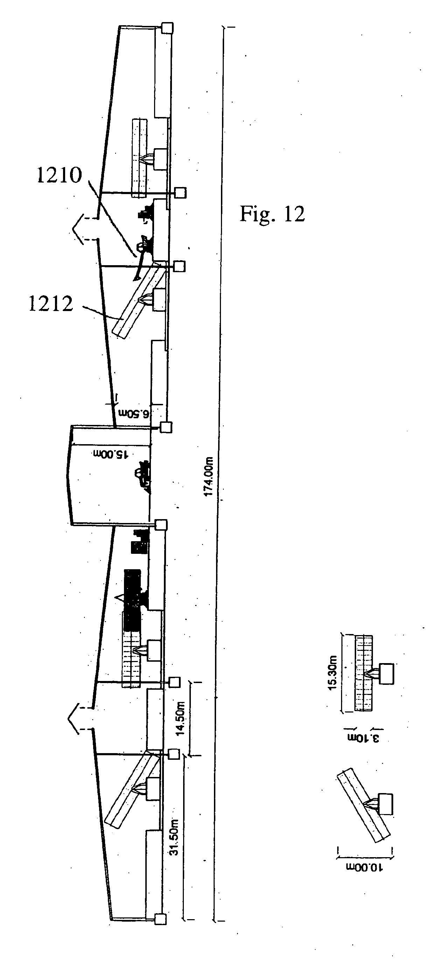

The methods described above may be implemented in a moulding plant and an embodiment of a plant is illustrated in Figs. 11 and 12. However, it will be appreciated that a wide variety of manufacturing plants may be used and the plants may be adapted depending on the product being manufactured. The plastics composition feedstocks may be mixed within the plant, or may be mixed and delivered to the plant as raw materials, for example in pellet form. Preferably, the feedstock may be formed by mixing the components and forming pellets from the mixed components. Preferably, the unifier may be mixed with the filler before the polymer is added to the mixture.

The plant illustrated in Fig. 11 includes a central container area 1110 comprising a plurality of containers 1112, each containing a preformed feedstock. A plurality of mobile feedstock machines 1114 obtain a predetermined quantity of feedstock from the central containers 1112 and deliver them to each of a plurality of moulding apparatus 1116.

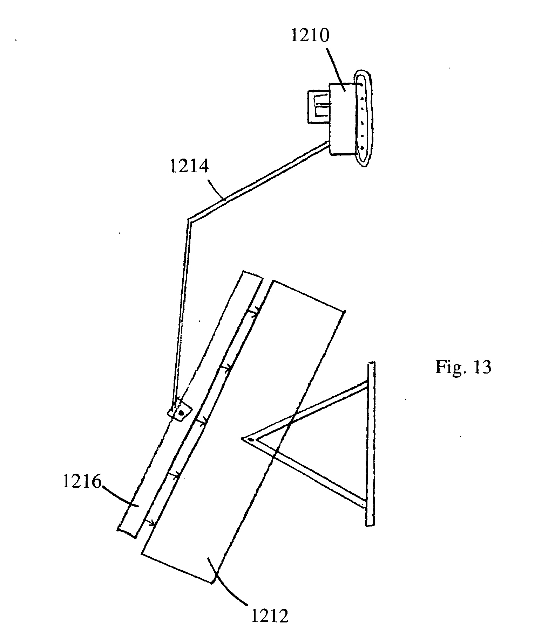

As illustrated in Figs. 12 and 13, the feedstock machines 1210 insert the feedstock into the moulding apparatus 1212. It has been found that it is advantageous to tilt the moulding apparatus 1212 to enable the feedstock to be delivered efficiently to the moulding apparatus 1212. The feedstock machines 1210 are preferably provided with telescopic arms 1214 and telescopic delivery buckets 1216 for delivering the feedstock to the moulding apparatus 1212 along the whole length of the apparatus. This may be particularly advantageous when inserting the second feedstock into the moulding apparatus 1212, since inserting the feedstock along the whole length of the apparatus may enable the feedstock to be inserted more quickly into the apparatus, while the first feedstock is relatively fluid. The telescopic delivery bucket 1216 preferably extends to a length of about 12m, so it may extend the whole length of a container mould, and preferably holds a predetermined amount of feedstock. Preferably, the bucket 1216 is divided into a plurality of sections, each of which holds a predetermined amount of feedstock.

One embodiment of a manufacturing plant may be designed to provide a production output of pallets of around 30,000 pallets per hour (which corresponds to around 715,000 pallets per day, 5,000,000 pallets per week and 250 million pallets per year). Alternatively, such a manufacturing plant may be able to provide around 100 Containers (twenty foot equivalent units, teu) per hour (which corresponds to 2500 teu per day, 17400 teu per week and 870,000 teu per year). The tonnage of raw materials used by such a plant, in thousands of tonnes may be around 0.4 per hour (which corresponds to 10 per day, 70 per week and 3500 per year). A single plant may produce only one type of product or may produce a variety of different products. For example, a single plant could produce both pallets and containers.

Properties of compositions described herein will now be outlined in more detail. The description below is provided by way of example only and the compositions and parameters provided are not intended to be limiting. The mouldings described were carried out under the following moulding conditions:
Oven temperature = 300 C
Rotation ratio ≈ 4:1
Cooling medium = Forced air
Sheet steel test mould

All cycle times are taken from the same start and end point to allow for easier comparisons of the various stages in the internal air temperature traces. For each moulding carried out, Polyethylene was mixed with sand in a 50:50 mixture by mass. To this mixture, different levels of unifier were added from 1 % by weight to 10% by weight.

The polyethylene grade used was a rotomoulding grade, RG 7243 produced by Borealis in Norway, this material is a standard LLDPE grade with a density of 924kg/m³ and a MFI of 4.5.

| Grade | Cycle Time (min) |
|---|---|
| T963 | 20.17 |
| T964 | 22.35 |
| T965 | 21.7 |
| T966 | 22.77 |
| T967 | 22.05 |
| T968 | 22.87 |
| T969 | 22.06 |
| T970 | 22.07 |
| T971 | 23.23 |
| T972 | 22.94 |
| Polyethylene | 33.23 |

It can be seen from the data above that the cycle time of each filled moulding is not affected by the addition of different levels of unifier but there is a substantial difference between the filled and the polyethylene mouldings. It is assumed that difference is due to the filled mouldings containing half the amount of PE as the polyethylene mouldings.

Standard tensile test specimens were produced from the filled mouldings using a die. The specimens were tested on an Instron 4411 tensile testing machine at a crosshead speed of 20 mm/min (as per standard ASTM 638). The data provided below shows the mechanical properties of each of the grades tested. A standard unmodified polyethylene grade is also added as a comparison.

| Grade | Stress at Break (MPa) | Strain at Break (%) | Modulus (MPa) |
|---|---|---|---|
| T963 | 1.95 | 21.9 | 172.0 |
| T964 | 2.13 | 22.4 | 141.6 |
| T965 | 1.65 | 17.7 | 131.0 |
| T966 | 1.68 | 13.3 | 153.0 |
| T967 | 2.10 | 21.5 | 142.9 |
| T968 | 1.16 | 8.2 | 121.6 |
| T969 | 2.52 | 19.7 | 108.7 |
| T970 | 2.24 | 20.5 | 113.4 |
| T971 | 1.17 | 11.3 | 128.5 |
| T972 | 1.05 | 9.6 | 101.2 |
| Standard | -- | -- | 223 |

There is a lot of scatter in the values of the mechanical properties determined for all the grades tested. However, the general trend shows a decrease in modulus as the percentage of unifier is increased.

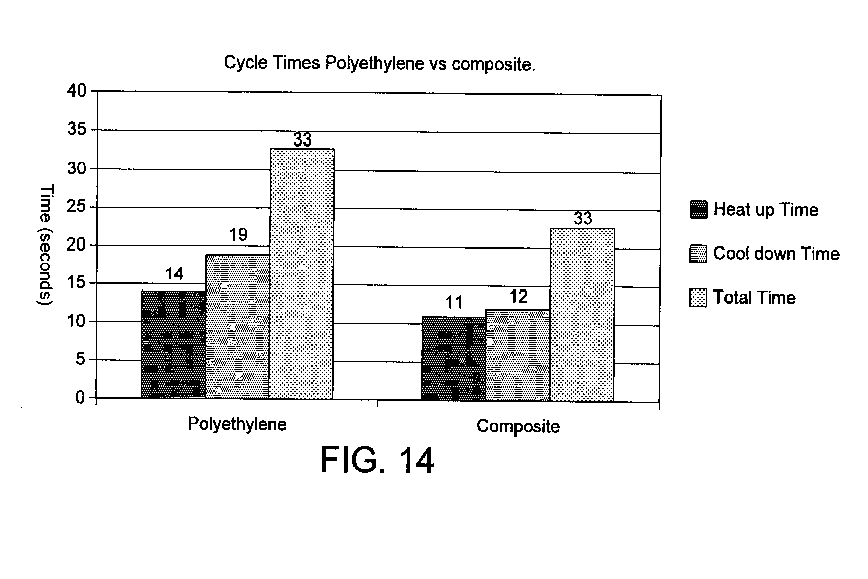

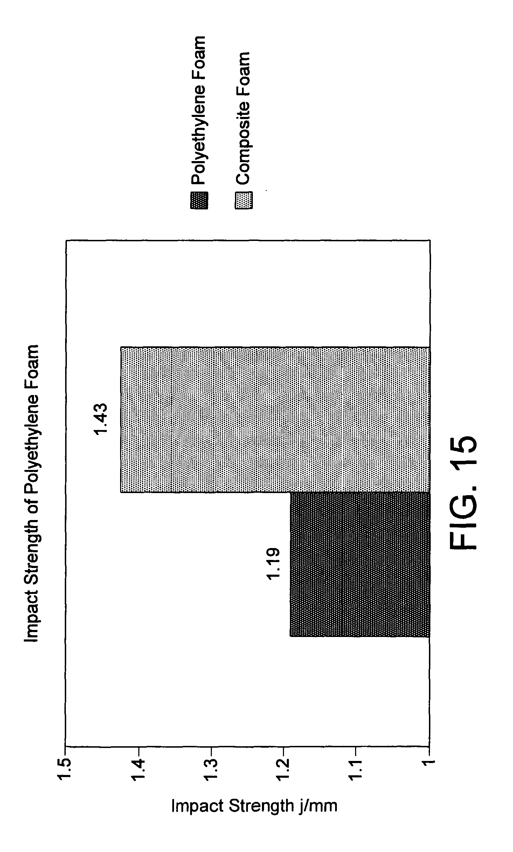

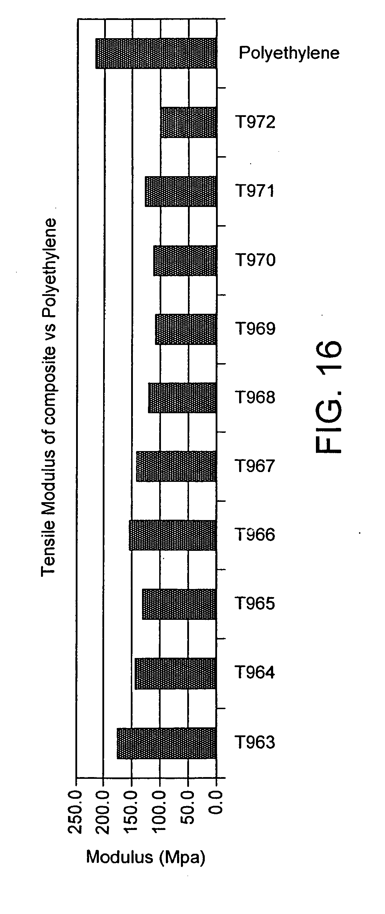

Figs. 14, 15 and 16 illustrate graphically the properties of the filled compared to polyethylene as described above.

As will be appreciated by one skilled in the art, aspects of the invention may provided independently and features of one aspect may be applied to other aspects. It will also be appreciated that the methods described herein may be used to manufacture a wide range of products and the invention is not limited to the products described herein.

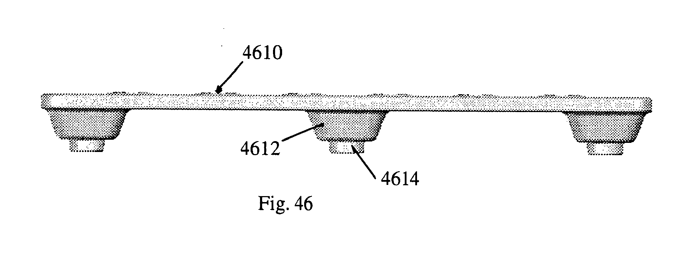

A further embodiment of a pallet will now be described with reference to Figs. 46 to 58, which illustrate pallets and pallet elements according to a further embodiment. The pallets illustrated in Figs. 46 to 58 comprise top and bottom pallet elements of different designs.

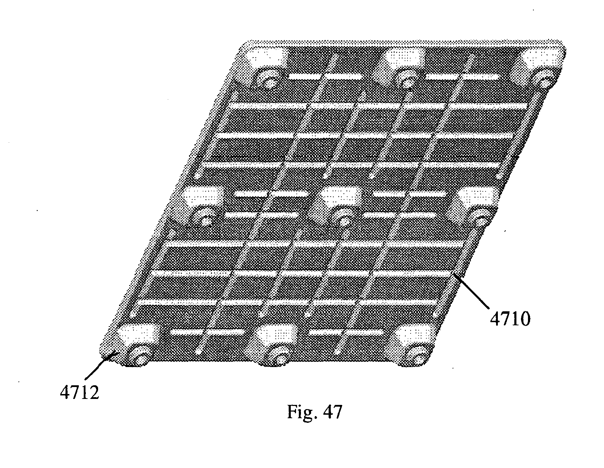

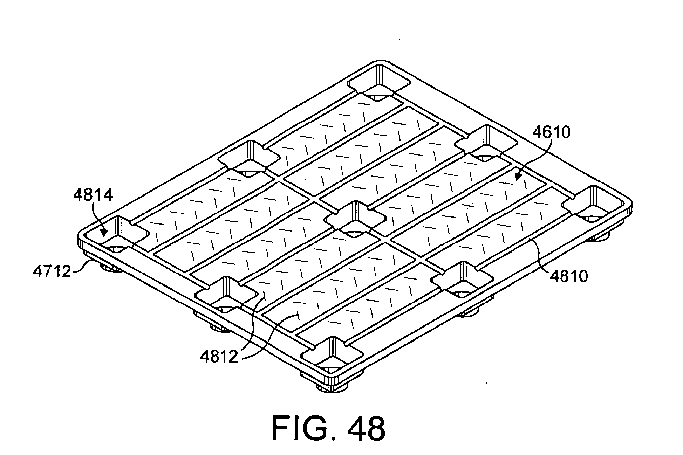

Fig. 46 illustrates a side view of a top pallet element, Fig. 47 is a perspective view of the under-side of a top pallet element and Fig. 48 is a perspective view of the top-side of a top pallet element according to the present embodiment.

As illustrated in Figs. 46 to 48, the top pallet element comprises a platform, or pallet surface 4610 and a plurality of feet, the feet comprising tapered sections 4612 and interlocking sections 4614. In the present embodiment, the interlocking sections 4614 of the top pallet element comprise protrusions, or male interlocking sections. However, in an alternative embodiment, female interlocking sections, or a combination of male and female interlocking sections, may be provided on the top pallet element and male interlocking sections, or corresponding female and male interlocking sections, may be provided on the bottom pallet element. In the present embodiment, one interlocking section 4614 is provided per foot but, in alternative embodiments, only some of the feet may be provided with interlocking sections 4614 or more than one interlocking section 4614 may be provided on each foot. Preferably, nine feet are provided on the lower surface of the pallet element.

The upper and/or lower surfaces of the pallet platform 4610 include raised ridges and/or indented hollows or gullies 4710, 4810. This may improve the drainage of fluid from the surface of the pallet, may enable air to circulate under the products stacked on the pallet and/or may improve the grip for products stacked on the pallet surface. The platform 4610 may further be provided with an uneven upper surface, for example via small ridges 4812, to improve the grip of products stacked on the platform 4610. In the present embodiment, the platform is preferably a continuous surface, which may enable small and/or delicate items to be carried on the pallet.

The gullies in the upper surface of the pallet platform are preferably directed to drain towards the feet of the pallet. Preferably the feet of the pallet are provided with apertures therethrough through which liquids from the pallet surface may drain. Preferably the feet of both the top and the bottom pallet elements are provided with apertures which align when the pallet elements are formed into a double-sided pallet. This may allow liquid from the top surface of the pallet to drain away via the gullies and the apertures in the feet.

The lower surface of the top pallet element is preferably also provided with gullies, which may act as strengthening gullies to increase the torsional strength of the pallet platform. Preferably the gullies are arranged so that the gullies on the top surface of the platform of the pallet element do not coincide or line up with gullies on the bottom surface of the platform of the pallet element. This may increase the torsional strength and prevent weakening of the pallet element.

Preferably, inserts are provided along the length of the strengthening gullies on the bottom surface of the top pallet element. This may reduce the risk of hinging of the pallet element along the length of the gullies.

The pallet feet 4712 are preferably hollowed 4814 from the top surface of the platform 4610. This may reduce the overall weight of the top pallet element, facilitate moulding of the element and/or enable pallet elements to be stacked, as described in more detail below.

If a double-sided pallet element is not required, a top pallet element may be used as a pallet. A top pallet element alone may provide a lightweight alternative to a double-sided pallet and may be suitable, for example for light loads, for storage or for single trip usage.

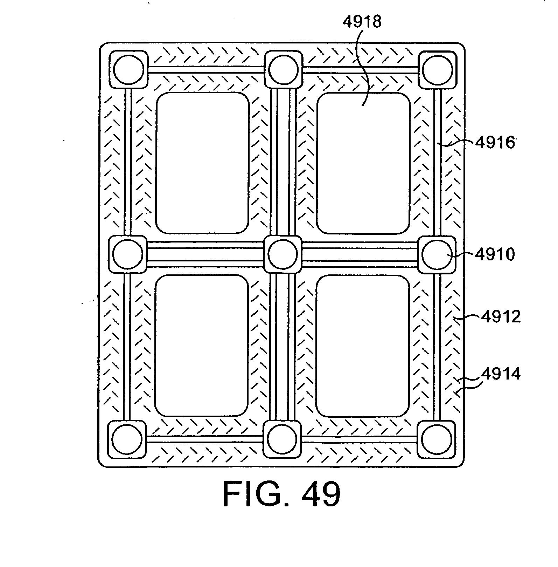

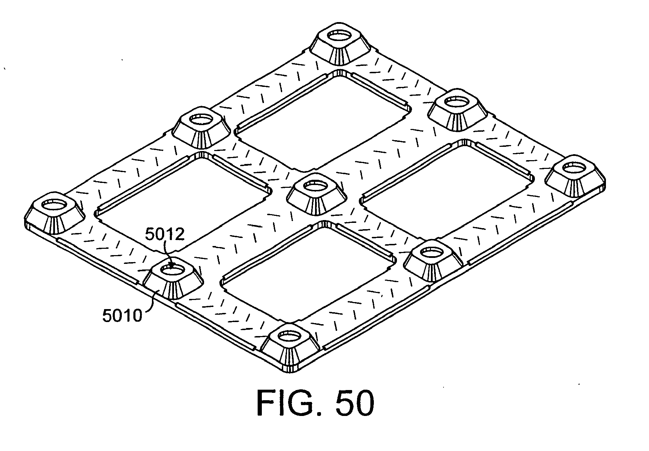

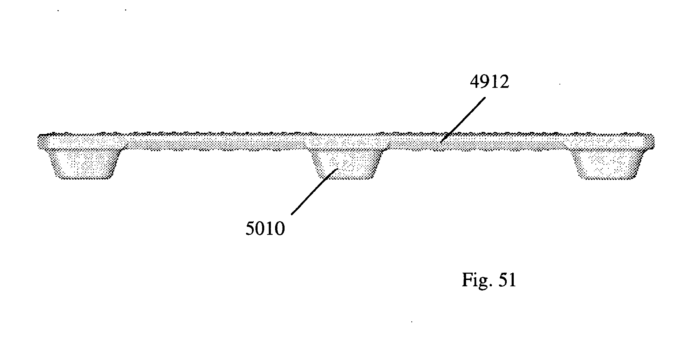

Figs. 49 to 51 illustrate a bottom pallet element according to one embodiment. Fig. 49 is a plan view of the top of a bottom pallet element, Fig. 50 is a perspective view of the under-side of a bottom pallet element and Fig. 51 is a side view of a bottom pallet element according to the present embodiment. The bottom pallet element may be known as a stringer, since it may provide rigidity and strength to the top pallet element and allow an optimal load distribution to be created across the top pallet element.

The bottom pallet element also includes a platform 4912 and a plurality of hollowed feet 4910. The surface may also include raised ridges or indented hollows or gullies 4916 and smaller ridges or an uneven surface 4914. However, the platform 4912 of the bottom pallet element preferably includes sections that have been cut away 4918. This may reduce the overall weight of the pallet element without significantly reducing its strength, which may allow pallets to be more heavily loaded or may allow more pallets to be transported, for example in a container. Removing sections of the bottom pallet element may also allow the double-sided pallet to be handled by hand pallet trucks.

Preferably, the top surface of the platform (that is, the opposite side to the feet) of the bottom pallet element is provided with ridges. When the bottom pallet element is formed into part of a double-sided pallet, the ridges on the top surface, which becomes the base of the pallet, provide additional grip for the pallet on the ground or surface upon which the pallet is stacked and hence reduce slippage.

As illustrated in Fig. 50, the feet of the bottom pallet elements preferably comprise tapered sections 5010 and interlocking sections 5012. Preferably, the interlocking sections 5012 comprise hollow sections, or female interlocking sections, that correspond to the male interlocking sections of the top pallet elements.

Preferably, the male interlocking sections 4614 of the top pallet elements and the female interlocking sections 5012 of the bottom pallet elements couple together when the lower side of a bottom pallet element (the surface illustrated in Fig. 50) is presented to the lower side of a top pallet element. The interlocking sections may couple, clip or "click" together or may be held together by a frictional or interference fit. For example, the male interlocking elements may fit closely inside the female interlocking elements or a raised ridge on one interlocking element may clip within a hollow on the surface of the other interlocking element. The feet of the pallet elements may be designed to interlock and release on manual pressure. In one embodiment, however, the feet may interlock only on the application of force, for example from a mallet. This may allow the feet to be interlocked together more securely and may prevent the pallet elements from separating during use.

In a preferred embodiment, frictional forces between the interlocking sections of the top and bottom pallet elements may be increased by providing an uneven surface on the interlocking section of at least one of the pallet elements. Preferably, the uneven surface may be formed in the moulding process by omitting to smooth the surface of the pallet element where the two halves of the mould meet, that is the mould lines or flashing, at least at the interlocking section of the pallet element. This may reduce the number of steps in the manufacturing process and provide a more secure interference or frictional interlock between the pallet elements. A corresponding portion of the interlocking section of the top pallet element may also not be smoothed to improve the interference fit.

Preferably, the uneven surface comprises a ridge of flashing formed on the internal surface of the female interlocking sections of the top or bottom pallet element.

Preferably, as illustrated in Fig. 50, the bottom of the bottom pallet element is provided with anti-abrasive means, in this case ridges, to resist abrasion of the underside of the pallet platform during normal use. The ridges deflect the fork tines of a fork lift truck on entry and exit of the tines from the pallet to protect the platform surface.

Fig. 51 illustrates a side view of a bottom pallet element according to one embodiment, including tapered pallet feet 5010 and a pallet platform 4912.

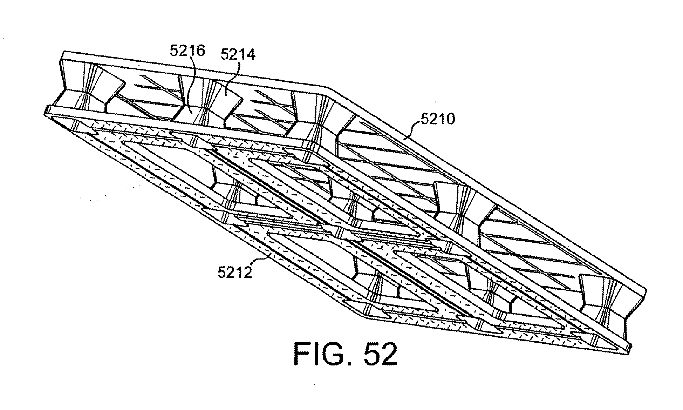

Figs. 52 to 55 illustrate pallets according to one embodiment, wherein each pallet comprises a top pallet element 5210 and a bottom pallet element 5212 and wherein the feet of the top pallet element 5214 couple securely to the feet of the bottom pallet element 5216. The top pallet element 5210 includes a continuous, solid pallet surface, and the bottom pallet element 5212 includes apertures, reducing the overall weight of the pallet.

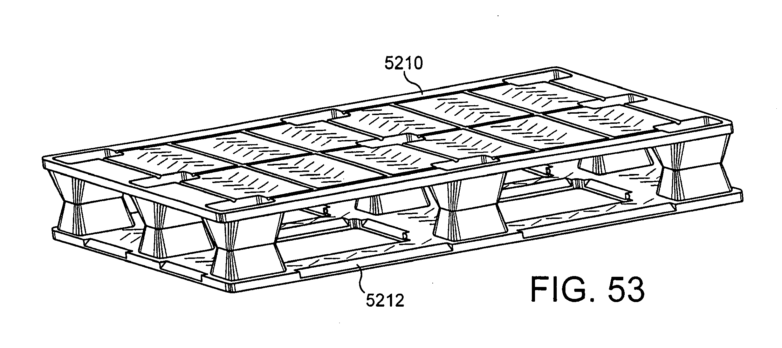

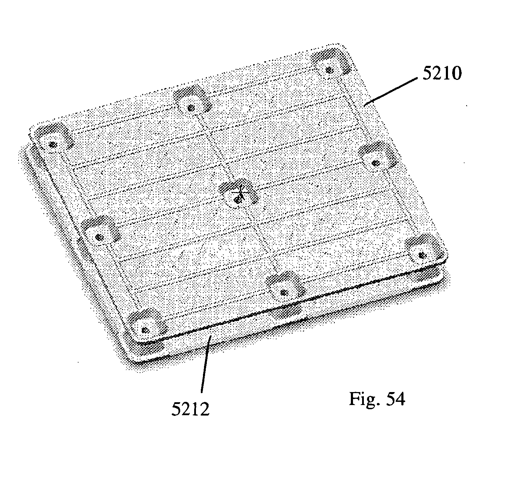

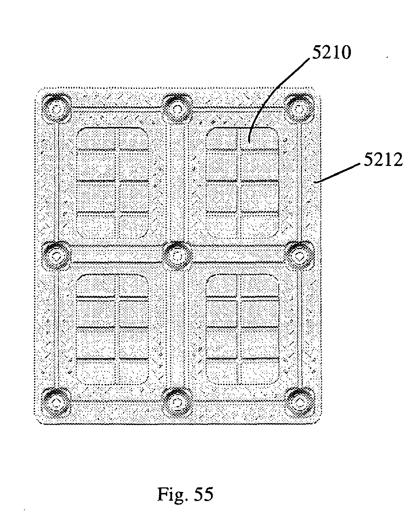

Fig. 52 is a perspective view of the under-side of the pallet comprising connected top and bottom pallet elements, Fig. 53 is a perspective view of the top-side of the pallet comprising connected top and bottom pallet elements, Fig. 54 is a further perspective view of the top-side of a pallet comprising connected top and bottom pallet elements and Fig. 55 is a plan view of the under-side of a pallet comprising connected top and bottom pallet elements according to the present embodiment.

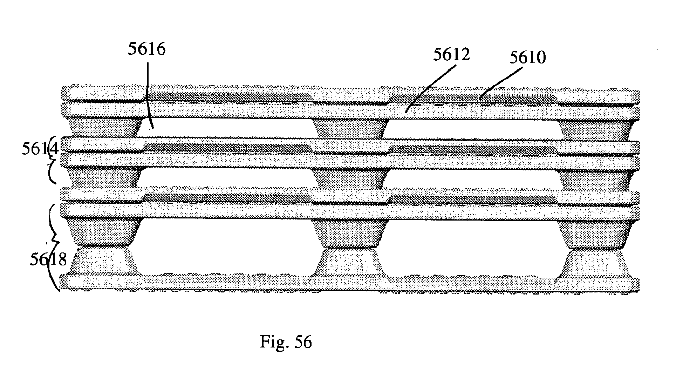

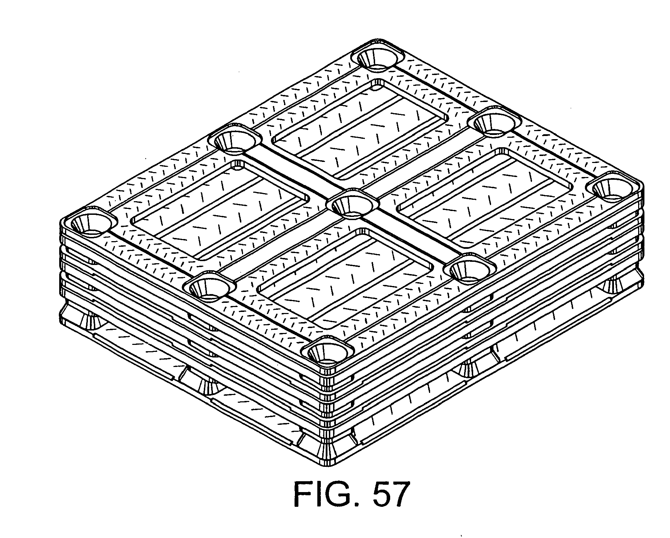

Figs. 56 and 57 illustrate top and bottom pallet elements arranged in a stacked configuration. The fact that the pallet elements are moulded from a plastics material means that the pallet elements are uniform, which allows precise, reliable stacking (and interlocking) of the pallet elements. In a preferred embodiment, when the bottom pallet elements 5610 are inverted and placed on top of the top pallet elements 5612, the bottom pallet elements 5610 stack closely inside the top pallet elements 5612, since the feet of the bottom pallet elements fit within the hollows in the top of the feet of the top pallet elements.

In one embodiment, however, the top pallet elements 5612 do not stack closely inside the inverted bottom pallet elements 5610. Hence, when a plurality of pallet elements are stacked, as shown in Figs. 56 & 57, the stack is formed of pairs 5614 of nested top and bottom pallet elements, with spaces between each pair 5616. This may allow the stack of pallet elements to be separated into pairs 5614 easily, for example automatically, before each pair 5614 is assembled into a pallet. However, enabling the bottom pallet elements 5610 to nest closely with the top pallet elements 5612 reduces the amount of space needed to store and/or transport each unloaded and unformed pallet.

In an alternative embodiment, the pallet elements may nest closely together either when the top pallet element is placed on top of the bottom pallet element or vice versa. This may further decrease the space required to store and transport a large stack of pallet elements. In one embodiment, top pallet elements also nest closely with other top pallet elements and bottom pallet elements nest closely with other bottom pallet elements.

In one embodiment, the single-sided or double-sided pallet may has dimensions corresponding to those of a standard pallet, that is about 1020x1220 (40x48 inches). In a preferred embodiment, the pallet may have a width and length of 1008x1209mm. This may allow a pallet of a single size to meet the requirements of the US pallet standard of around 1016x1220mm (40x48 inches) and the requirements of the European pallet standard of around 1000x1200mm. Preferably the height of a double-sided pallet is around 120mm (or 5 inches).

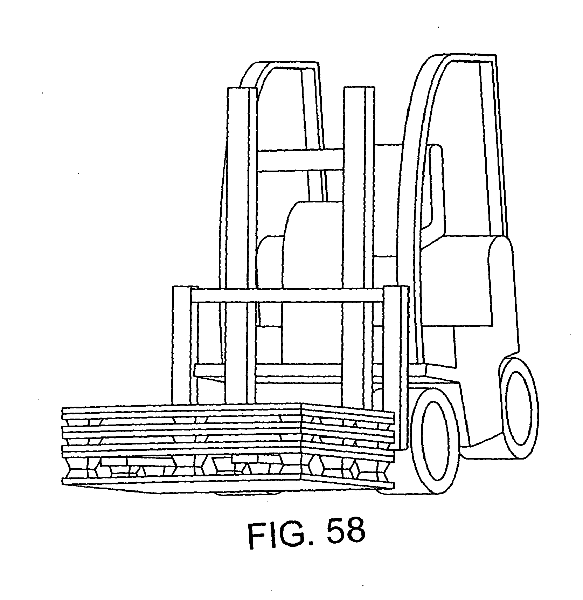

Fig. 58 illustrates a plurality of stacked pallet elements being transported on a fork lift truck. As illustrated in Figs 56 to 58, the bottom pallet 5618 in the stack of pallets is preferably formed into a pallet. This may allow the stack of pallets to be handled by standard machinery, such as the fork lift truck illustrated in Fig. 58.

Further properties of the pallet embodiments described above, will now be discussed. The description of the pallet properties set out below is not intended to be limiting in any way and practical pallets may have different properties. Furthermore, pallets may be required to pass tests to verify at least some of the properties described before the pallets are used. The tests applied to the pallet may depend on the intended use of the pallet.

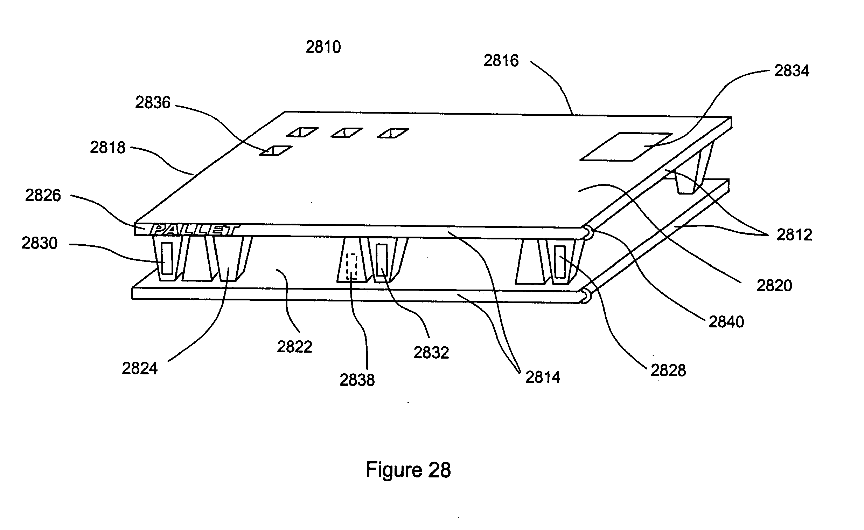

The typical pallet referred to below may be a dual pallet, created by turning one pallet through one hundred and eighty degrees and fixing the legs of the each of the pallets to the opposing base, as shown in Figs. 18, 19 and 24 for example. Such a pallet 2810 is shown in Fig. 28, and typically is a 1200 mm x 1000 mm (48 inch x 40 inch) rackable four way entry type, with a full perimeter base. The pallet has a rated load of 1270 kg (2800 1b). The total mass of the finished pallet in the dry-as-moulded condition at room temperature, inclusive of fire retardant solution, is less than 22.7 kg (501b).

Embodiments of the pallet may have a service life of in excess of ten years, and an example of such a pallet is described below.

Four edges 2812, 2814, 2816, 2818 of the pallet are blue and the pallet contains an ultraviolet stabiliser to ensure that there is no visible colour shift during the life of the pallet. This can be measured by an ultraviolet resistance test based on a three-year Arizona direct sunlight exposure.

The gloss on the top of a top deck 2820, on the top of a bottom deck 2822, and on a spacer 2824 exterior is between 0 and 20 units of gloss. This means that these portions of the pallet are flat to semi-gloss. The surface finish of the pallet is opaque and non-reflective. This ensures compatibility with optical sensing equipment on pallet conveyers, and so on. The top of the top deck 2820, top of the bottom deck 2822 and spacer 2824 exterior are surfaced textured, for example to Mold-Tech MT-105503 (20µ) or MT-1055-2 (15µ). Surface imperfections or irregularities that detract from the aesthetics of the pallet are minimised.

The pallet has a marking 2826 branded indelibly in white on the leftmost space of both sides. The marking 2826 may be the logo of the company to whom the pallet belongs. A second marking 2828 is branded indelibly in white on the lower half of the rightmost spacer of both sides and is the company's telephone number and "Property of [the company]". A third marking 2830 on a spacer block on one side of the pallet is the manufacturer's name and logo. All three markings 2826, 2828, 2830 are resilient to high-pressure steam cleaning and to normal handling and use of the pallet.

A code 2832 comprising the week number, month and year of manufacture of the completed pallet assembly is marked on a spacer on the 1m side, such that it is reasonably protected from damage or wear. An appropriate recycle code 2834, in accordance with Society of Plastics industry guidelines is permanently moulded in a conspicuous area of the pallet. If different materials are used on a pallet, each component is so marked.

The pallet does not contain any halogenated compounds - i.e. compounds that are formed from fluorine, chlorine, bromine, iodine or asatine. Nor does it contain any heavy metals, such as silver arsenic, barium, selenium, lead, mercury, cadmium or hexavalent chromium. All materials used in the pallet are capable of being recycled. Preferably the materials used can be recycled through viable and sustainable technologies i.e. technology exists to use the recycled materials in existing product feedstreams. Exposed areas of the pallet are resistant to attack by common industrial and household chemicals, including cleaning agents, aerosols, gasoline etc..

The damage rate per trip is defined as the ratio of the number of pallets at the end of a single trip that have suffered non-abusive damage, to the total number of pallets in the trip. The damage rate per trip for the embodiment is less than, or equal to 0.25%.

The following will be considered abusive damage to the pallet, all other damage being considered non-abusive:
□ damage resulting from being dropped from a height that is greater than 3m;
□ damage resulting from supporting a load which is greater than 1270 kg (2800 lb);
□ fork tine tip damage to top of the top deck, bottom of the top deck or to the bottom of the bottom deck (excluding damage to deck edges);
□ damage to internal ribbing of spacers, resulting from high speed impact by fork handling equipment; and
□ complete separation of top and/or bottom deck from any spacer.

The pallet does not contain any residual monomers, residual solvents, or other volatile substances that may contaminate products under load, and is compatible with fat-containing foods. The pallet material does not emit or absorb noxious or toxic substances, or strong odours. Liquid dirt and foreign body entrapment is limited, and the design of the pallet allows for easy drainage. The pallet material is non-porous and non hydroscopic and does not craze, crack or pit during normal use of the pallet. Preferably the pallet has anti-static properties in order to limit the accumulation of dust. The design of the pallet, and the materials used do not support microscopic growth. Furthermore the design allows for the circulation of air through the pallet in order to facilitate pallet drying, load cooling, fruit ripening etc. Preferably, the pallet is impervious to salt water and resists salt water corrosion. Advantageously, unlike wooden pallets, the present pallet is not vulnerable to insect attack and is less combustible than wooden or other plastic pallets.

The pallet is easy to clean and dry and designed to withstand multiple cleaning cycles, either manual or automatic, throughout its service life. Top deck openings 2836 (only some of which are shown) are through holes and tapered so that the smaller openings are at the top of the top deck and the larger openings are at the bottom of the top deck. In order to make cleaning easier, a minimum radius of 3.175 mm (1/8 inch) is present on all internal radii on the bottom of the top deck and on the bottom of the bottom deck. In addition, a minimum slope of 3 degrees is present across the top of the bottom deck for good drainage.

Examples of suitable cleaning methods are washing the pallet with detergent and high-pressure water at 100 degrees centigrade for ten minutes, and washing the pallet with high-pressure steam at 827 kPa (120 psi) for ten minutes.

A radio-frequency identification (RFID) tag 2838 is housed in the centre spacer, in order to provide a unique identification mechanism for each pallet. The RFID tag 2838 is housed by insertion, but could equally be housed by some other suitable method, such as encapsulation. The tag 2838 is removable and may be reusable. The RFID tag 2838 shown is a passive tag, and contains only the identification number of the pallet. Alternatively, however, an active tag could be provided which would contain further information, such as details of the pallet's characteristics (for example the load it can bear) or details of the current load carried on the pallet.

The tag 2838 operates in the high frequency range (13.56 MHz), but could operate in another range, such as the ultra-high frequency range (868 to 956 MHz). The area where the tag is attached is free of cooling lines or other encumbrances in order to facilitate RFID. Alternatively, or in addition, a bar code may be included on a corner spacer on both sides. The bar code may be a code unique to the pallet and preferably conforms to the ISO standard for bar codes.

The pallet may be used with a wide variety of different handling equipment. It is compatible with automatic storage and retrieval systems, racking systems, hand pallet jacks, fork lift trucks, conveyors and packaging equipment such as banding machines, stretchwrap machines, palletisers and depalletisers and stackers and destackers.

Typically the products carried on the pallet are packaged in cardboard or corrugated boxes, plastic or paper bags, plastic crates, sacks, or plastic or metal containers. Slip-sheets may, or may not be used. The products may be stretchwrapped, bandwrapped or loose. The pallet has a lug 2840 on which the stretch film leader may be secured in order to start the stretchwrapping process. Naturally, the pallet may also be used to carry packaging materials, such as cardboard, paper, woven sacks etc..

The bottom of the pallet is relatively level, the bottom deck coverage (that area which makes intimate contact with a flat plate when brought to rest on the bottom deck) being more than 55%. It does not contain protuberances that could damage corrugated layer boards when load containing pallets are stacked on top of each other.

Any openings in the top deck are sized and located such that the packaged goods are adequately supported. This prevents damage to the goods. The pallet is compatible with edge clamping machines that have a maximum clamp load of 3969 kg (8750 lb).

Details of the specifications of tests which may be used to determine the properties of the pallets set out herein may be found in one or more of the following:
■ ASTM D1185-98a, "Standard Test Methods for Pallets and Related Structures Employed in Materials Handling and Shipping", ASTM, 1998.
■ ASTM D4169-01e 1 "Standard Practice for Performance Testing of Shipping Containers and Systems", ASTM, 2001.
■ D638-02a, "Standard Test Method for Tensile Properties of Plastics", ASTM, 2002.
■ D790-02, "Standard Test Method for Flexural Properties of Un-reinforced and Re-inforced Plastics and Electrical Insulating Materials", ASTM, 2002.
■ D3763-02, "Standard Test Method for High Speed Puncture Properties of Plastics Using Load and Displacement Sensors", ASTM, 2002.
■ ASTM D2244-02, "Standard Practice for Calculation of Colour Tolerances and Colour Differences from Instrumentally Measured Colour Coordinates", ASTM, 2002.
■ ASTM D523-89, "Standard Test Method for Specular Gloss", ASTM, 1999.

Details of an embodiment of a mould that may be used to form the products described herein will now be provided.

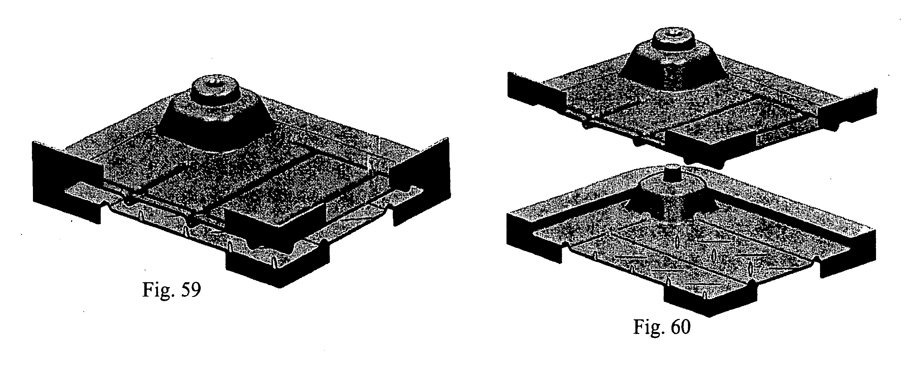

One embodiment of a section of a mould is illustrated in Fig. 59. Fig. 60 illustrates the section of pallet mould shown in Fig. 59 being released from the moulded pallet.

As set out above, the inner surface of the mould is provided with a shape corresponding to the required shape of the product, for example a pallet or pallet element. The mould may also have an internal texture corresponding to the required external surface texture of the product.

In a preferred embodiment, the mould is formed in at least two separable sections as two moulding tools. The moulding tools may be formed by creating a prototype product, for example a prototype pallet, which has the required shape of the product. The prototype product may be formed from any suitable material, such as a metallic or plastics material and may be machine tooled or shaped in another way. This prototype may then be used to form the moulding tools.

The prototype product is covered in a material to form the moulding tools, for example a metallic or silica-based material. The covered prototype product and its covering is then cooled and the moulding tools are released from the product, for example if the prototype product is surrounded by the tooling material, the tools may be released by cutting the covering material around the perimeter of the prototype product and releasing the tooling material in two halves.

In one embodiment, the moulding tools are manufactured from a metallic material, such as a mould grade steel, aluminium or an aluminium alloy. Metallic moulding tools may be coated internally with a layer of a different material to reduce the adhesion between the mould and the moulded products. For example, a coating of a silica-based material may be provided on the internal surface of the moulding tool.

Suitable silica-based materials may include a spun basalt material, which may be termed rock wool, or a spun diabase material. Alternatively, slag wool formed from iron-ore blast furnace waste may be used. As a further alternative, a glass fibre material may be used.

To provide the internal coating on the moulding tools, the prototype product may be coated in the internal coating material before the covering material, which forms the body of the moulding tools, is added on top of the coating material layer. In this way, the prototype product may be separated easily from the moulding tools.

Alternatively, an internal coating of a silica-based material may be added to the moulding tools after formation of the tools around the prototype product. For example, a silica-based material may be sprayed on to the internal surface of the moulding tools.

In an alternative embodiment, the moulding tools may be formed substantially from a silica-based material such as a spun basalt or diabase material. In this embodiment, the moulding tools may be formed by covering the prototype product in the silica-based material and by separating the two halves of the mould to release the prototype product and provide the moulding tools.

Providing a silica-based moulding tool or covering on the moulding tool may decrease the adhesion of products to the moulding surface, that is such a covering may provide a non-stick covering for the moulding tool. This may make it easier to release products from the mould at the end of the moulding cycle and may result in a higher quality of product. Using a non-stick coating may also mean that it is not necessary to lubricate the moulding tools before use, which may simplify the moulding procedure.

Using a silica-based material for the surface of the moulding tool also provides a moulding tool with an abrasion-resistant surface, hence the surface of the moulding tool is less likely to be damaged, resulting in fewer damaged moulded products.

The surface of the moulding tools as described above may further be sputtered, for example with aluminium, gold, silver or carbon. This may make the surface of the moulding tool smoother and hence provide an easier release of the moulded products. Sputtering may also be used to clean the moulding tools after use.

Sputtering may be provided for moulding tools that are made from or covered with a silica-based material. Alternatively, the sputtering may provide a non-stick coating for moulding tools that are not covered in the silica-based material.

As described above, the products described herein may be manufactured with an outer skin layer and an additional inner layer. Preferably, the inner layer comprises a foamed layer. The inner foamed layer may add strength and rigidity to the product without greatly increasing the weight of the product.

To form the layered product, as described in more detail above, the composition to form the first layer is placed within the mould whilst the mould is being heated and rotated. The first composition forms an outer skin layer around the inside of the moulding tools. The second composition is then added to the mould within the outer skin layer formed by the first composition and the mould continues to be heated and rotated. If the inner layer is required to be a foamed layer, the second composition foams in response to the heat supplied to form a foamed layer within the outer skin layer.

To enable the second composition to be placed within the outer skin layer formed by the first composition, a valve, for example a gate valve or a rotary valve, may be provided within the moulding tool. The inner surface of the valve may be provided with a repellent or highly non-stick coating to deter the outer skin layer sticking to the moulding tool at that point. This may create an aperture in the outer skin layer through which the composition that forms the inner layer may be inserted. The repellent or non-stick coating may be formed from a silicone-based material. Preferably, the coating on the inner surface of the valve repels the material that forms the outer skin layer so that a gap is formed within the outer skin layer.

The value may also be provided with a second surface that includes a non-stick coating that does not repel the material that forms the outer skin layer. Therefore, after insertion of the second composition, the valve may be positioned so that the second surface covers the aperture to allow a skin layer to form over the aperture that was provided in the outer skin layer of the product.

The first, repellent surface may be formed from a silicone-based material and the second non-stick surface may be formed from a silica-based material, such as spun basalt.

In a preferred embodiment, the aperture is formed at the base of the foot at the centre of the pallet platform.

In an alternative embodiment, the first composition may comprise both a material to form an outer skin layer and a material to form an inner foamed layer. For example, the material may be provided in capsules, the outside of which melts to form an outer skin layer. Inside the capsules, a further composition may be provided that includes a foaming agent. This may be activated once the external parts of the capsule have melted to form an outer skin layer. Therefore an inner foamed layer may be provided within the outer skin layer using only one feed of composition.

The valve for inserting the second composition is preferably the same valve as that used for inserting the first composition into the mould.

One embodiment of a manufacturing plant for manufacturing the products described herein is described above with reference to Figs. 11 and 12, but further features of embodiments of the manufacturing plant are described below.

The manufacturing plant preferably comprises a plurality of groups of moulds, for example groups of eight moulds, each group being arranged in a bay in the plant. This may allow one set of equipment, for example, one loading truck, to attend to each bay in the plant. The cycle times of the moulds in each bay may be staggered to enable one loading truck to attend to each bay of equipment efficiently.

Two or more loading trucks may be provided for each bay, for example if the product is formed from two or more compositions.

In an alternative embodiment, alternative delivery means may be provided to deliver the required compositions to the moulds. For example a conveyor system may be used to deliver the compositions to the moulds or moulding bay areas.

As described above, each mould is preferably arranged to form a plurality of moulded products. For example a mould the size of a shipping container may be used to form a plurality of pallets, for example around 80 pallet elements may be formed within one mould with 20 elements per elongate side of the mould. A further eight pallet element may be formed on each end wall of the mould.

In one embodiment, the moulds are heated using a heated oil-based liquid which runs through the mould, preferably close to the surface of the moulding tools. The temperature of the oil-based liquid depends on the composition used to mould the products, but may be around 1400°C.

In addition to the bays of moulds, the manufacturing plant may be provided with a loading area in which the loading trucks are loaded with the composition to form the pallets. Two or more loading areas may be provided if two or more compositions are required to form the moulded products.

The composition may be mixed in another area of the plant or may be transported (e.g. shipped) to the plant in a mixed format.

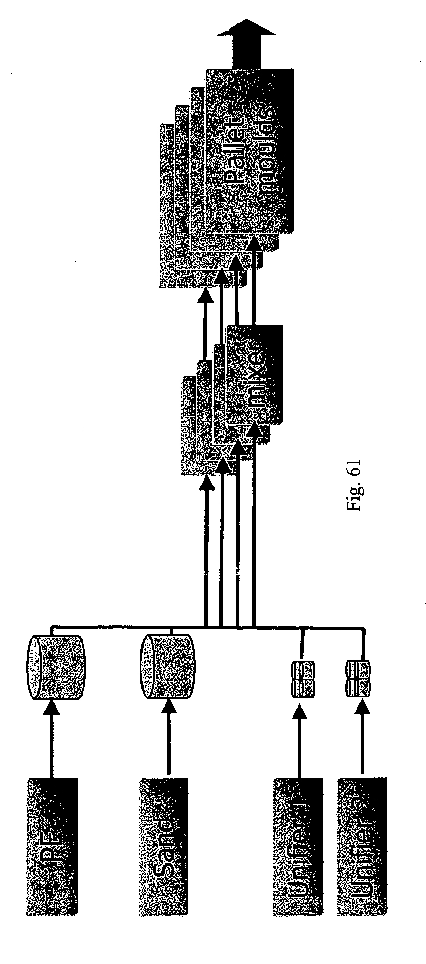

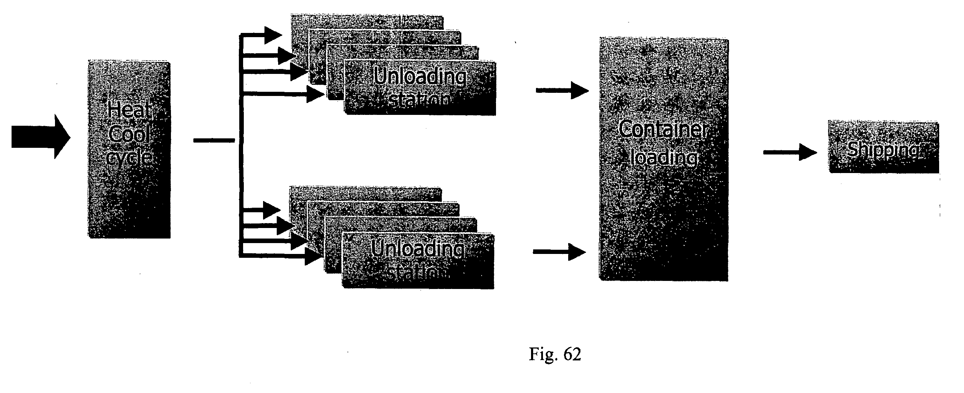

Figs. 61 and 62 illustrate schematically one embodiment of the process of forming pallets. All of the steps of the process may occur at one manufacturing plant, or different steps of the process may occur at different sites.

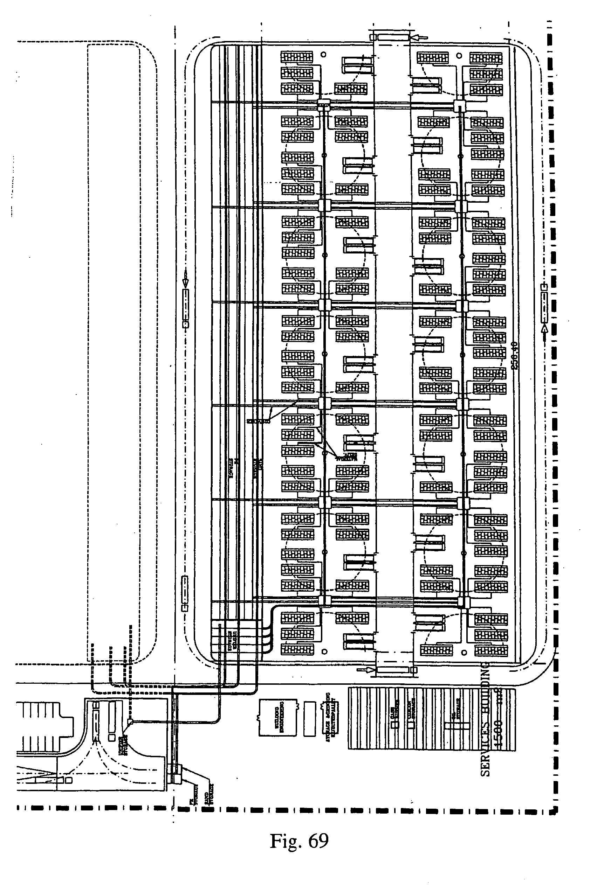

Fig. 69 is a schematic diagram of part of a manufacturing plant according to one embodiment. Bays containing groups of moulding apparatus, in this case eight apparatus per bay, are arranged within the plant. Storage areas for sand, PE and unifier are also provided and a storage area for storing manufactured products, such as pallets, is preferably provided separately.

It will be clear to one skilled in the art that variations and modifications of the embodiments described may be provided within the scope of the invention as defined in the claims and the above descriptions of embodiments are not intended to be limiting. Features of one embodiment may be applied to other embodiments unless otherwise stated.

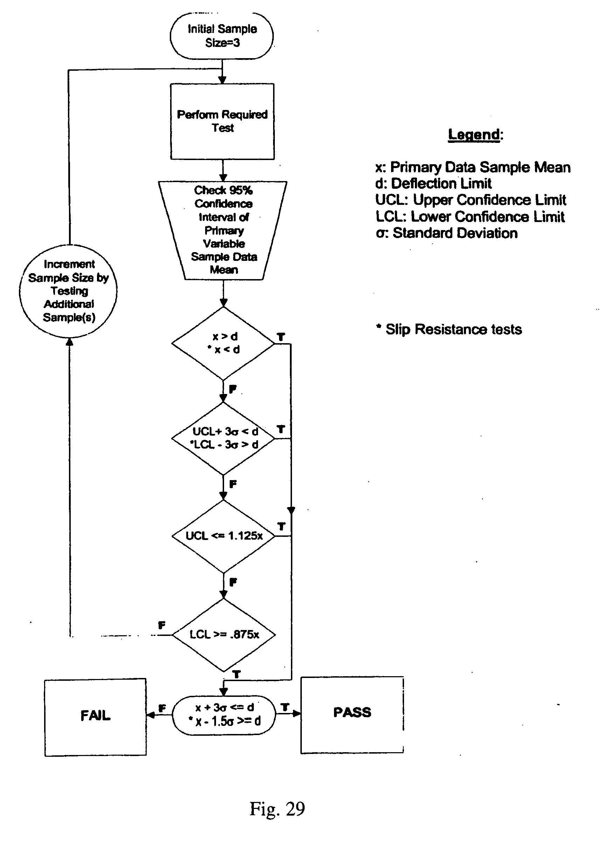

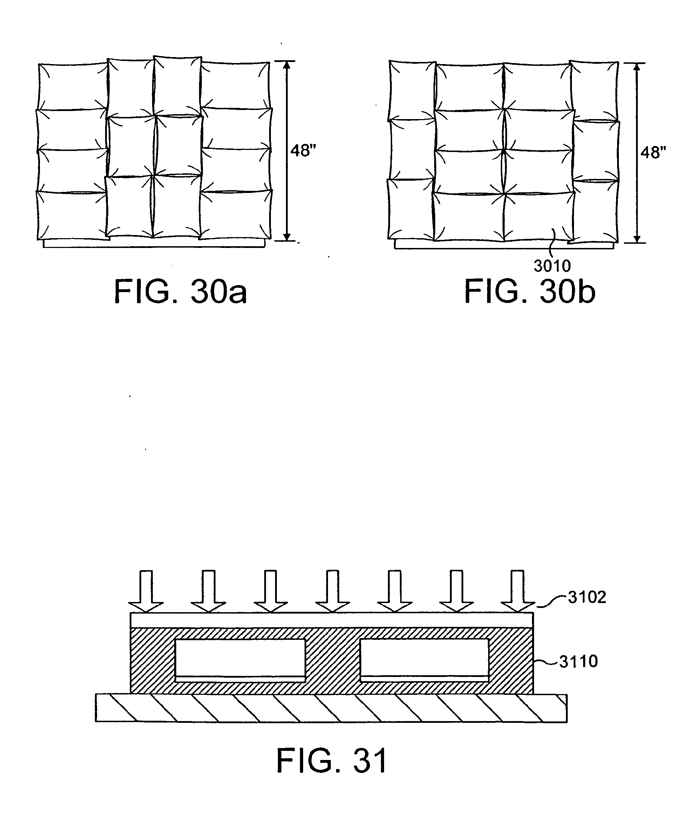

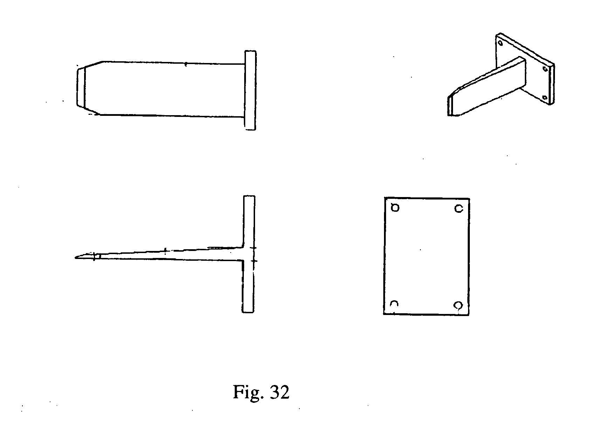

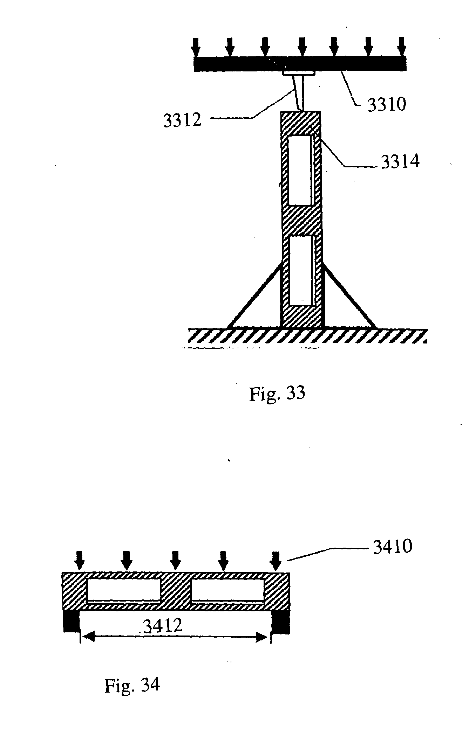

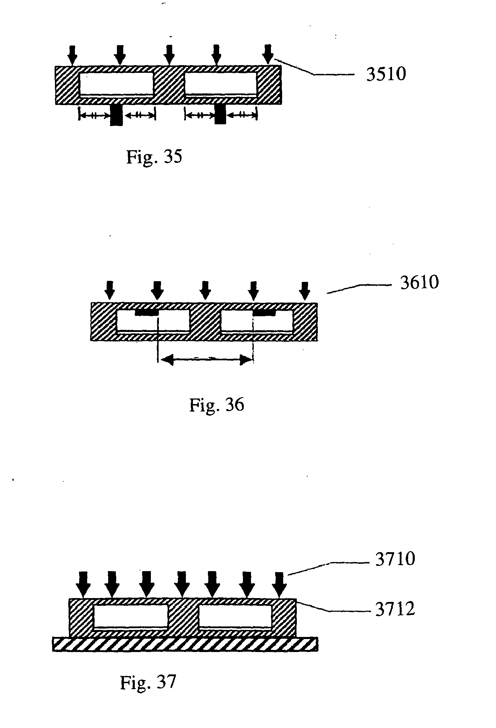

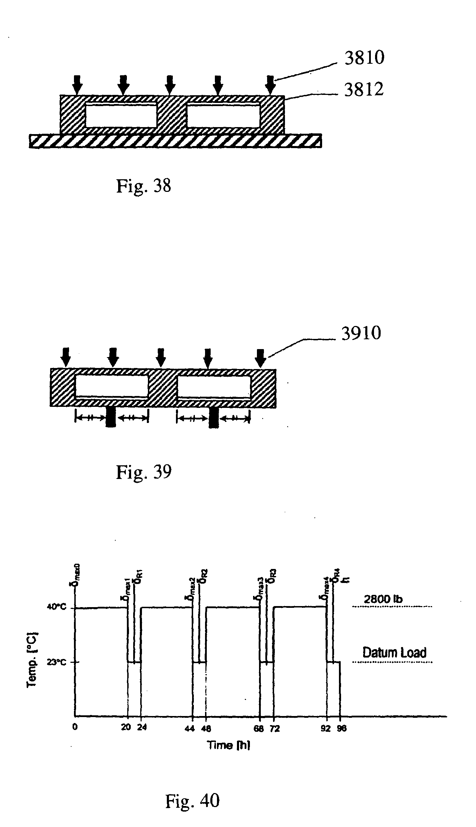

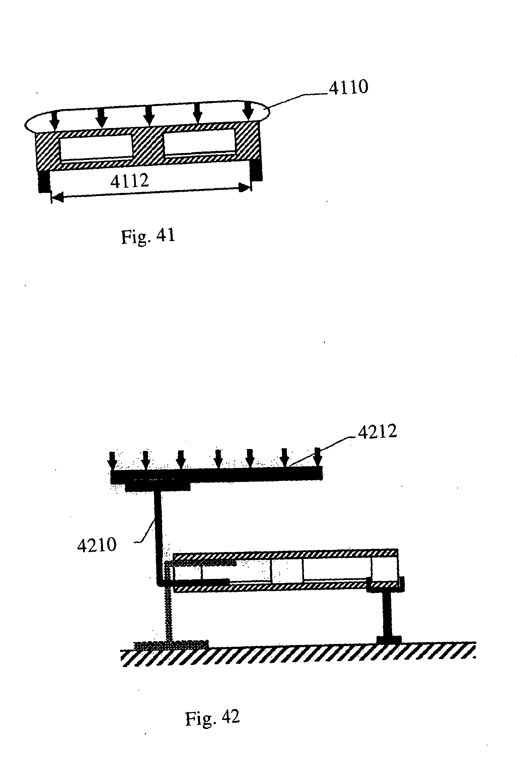

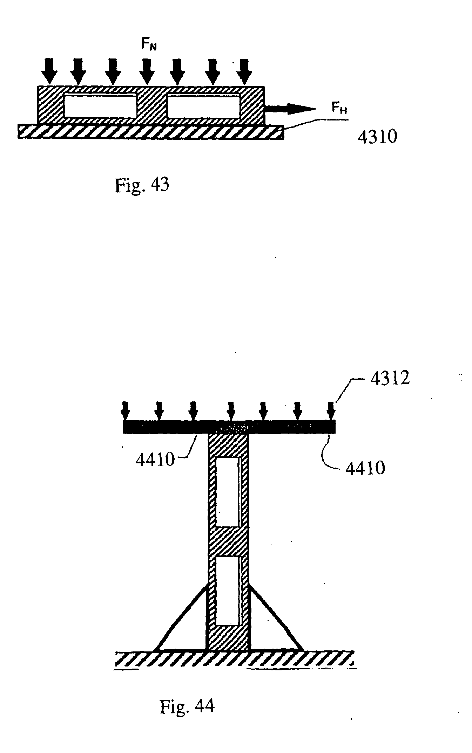

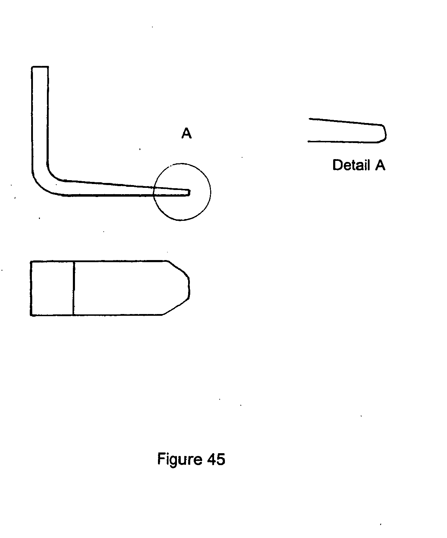

The present application also comprises the following numbered clauses:
1. A pallet comprising a top pallet element and a bottom pallet element, wherein each pallet element comprises a platform and a plurality of pallet feet and wherein each pallet foot comprises an engaging portion, wherein:
   in an inverted configuration, the engaging portions of the top pallet element are arranged to couple with corresponding engaging portions of the bottom pallet element;
   in a stacked configuration, with the pallet elements in substantially the same orientation, at least one pallet element forms a nested configuration when stacked on top of the other pallet element; and
   wherein the pallet elements are rotationally moulded from a plastics material filled with a mineral filler.
2. A pallet according to clause 1 wherein the mineral filler comprises sand.
3. A pallet according to clause 1 or 2 wherein the shape and/or configuration of the top pallet element is different to the shape and/or configuration of the bottom pallet element.
4. A pallet according to any preceding clause wherein, in a nested configuration, the feet of one pallet element are inserted into recesses in the top surfaces of the corresponding feet of the other pallet element.
5. A pallet according to any preceding clause wherein the bottom pallet element forms a nested configuration when stacked on top of the top pallet element.
6. A pallet according to any preceding clause wherein the top pallet element forms a nested configuration when stacked on top of the bottom pallet element.
7. A pallet according to any preceding clause wherein the pallet elements form a nested configuration when one pallet element is stacked on top of the other pallet element but wherein a gap is formed between the stacked pallet elements when the pallet elements are stacked in the reverse order.
8. A pallet according to Clause 7 wherein the gap formed between the stacked pallet elements is greater than around 20mm, preferably greater than around 40mm and preferably greater than around 50mm.
9. A pallet according to any preceding clause wherein the platform of the bottom pallet element comprises at least one aperture.
10. A pallet according to any preceding clause wherein the feet of the pallet elements are arranged to enable the blades of a forklift truck to engage the pallet from any one of four directions.
11. A pallet according to any preceding clause wherein the engaging portions comprise male or female engaging portions and wherein, in an inverted configuration, male engaging portions on one pallet element couple with corresponding female engaging portions on the other pallet element.
12. A pallet according to any preceding clause wherein the engaging portions of the top pallet element comprise male engaging portions.
13. A pallet according to any preceding clause wherein the engaging portions of the bottom pallet element comprise female engaging portions.
14. A pallet according to any preceding clause wherein at least a portion of each pallet element comprises an outer skin layer.
15. A pallet according to Clause 14 wherein at least a portion of each pallet element comprises an inner layer having a different composition to the outer skin layer.
16. A pallet according to Clause 15 wherein the inner layer comprises a foamed inner layer.
17. A pallet according to any preceding clause wherein the pallet element further comprises a remotely readable tag, preferably an RFID tag or a bar code.
18. A pallet according to any preceding clause wherein the platform of the top pallet element comprises a substantially continuous surface.
19. A pallet according to any preceding clause wherein the platform of at least one pallet element comprises a textured surface.
20. A pallet according to any preceding clause wherein the feet of the pallet elements are tapered.
21. A pallet according to any preceding clause wherein the top pallet element is joined to the bottom pallet element by frictional forces.
22. A pallet according to Clause 21 wherein the engaging portions of at least one pallet element comprise an uneven surface to increase the friction between the pallet elements.
23. A pallet according to any preceding clause wherein the engaging portions of the feet of the pallet elements are arranged so that, on rotation of the bottom pallet element about an axis through the plane of the platform of the bottom pallet element, a male configuration of engaging portions on the bottom pallet element mates with a female configuration of engaging portions on the top pallet element and vice versa.
24. A pallet according to any preceding clause wherein a male engaging portion of a foot comprises a protruding element and a corresponding female engaging portion of a foot comprises a hollow section, wherein the hollow section is sized to accommodate a protruding element.
25. A pallet according to any preceding clause wherein each pallet element is rotationally moulded substantially in one piece.
26. A pallet according to any preceding clause wherein the top and the bottom pallet elements couple to provide a double-sided pallet wherein the feet of both the first and the second pallet are arranged between the platforms of the pallet elements.
27. A pallet according to any preceding clause wherein the top and bottom pallet elements are arranged to couple on presenting opposed elements appropriately located without further fixings or adhesives.
28. A pallet according to any preceding clause wherein the height of a pallet element is at least around 100mm.
29. A pallet according to any preceding clause wherein the height of a double-sided pallet is substantially equal to the height of a standard pallet.
30. A pallet according to any preceding clause wherein the height of a double-sided pallet is less than around 200mm.
31. A pallet according to any preceding clause wherein at least one foot is arranged substantially at each corner of the platform.
32. A pallet according to any preceding clause wherein at least one foot is arranged substantially at the centre of the platform.
33. A pallet according to any preceding clause wherein at least one foot is arranged substantially at the centre of each edge of the platform.
34. A pallet according to any preceding clause wherein the feet of the pallet elements are arranged so that, on rotation of one pallet element about an axis through the plane of the platform of the pallet, a male configuration of feet on one pallet element mates with a female configuration of feet on the opposing pallet element.
35. A pallet according to any preceding clause wherein the pallet element is substantially rectangular.
36. A pallet according to any preceding clause wherein each pallet element is rotationally moulded substantially in one piece.
37. A pallet according to any preceding clause wherein the feet of each pallet element are formed integrally with the platform of the pallet element.
38. A pallet according to any preceding clause wherein the feet are tapered from a maximum width at the platform of the pallet element.
39. A pallet according to any preceding clause wherein recesses are provided in the upper surface of the platform of the pallet.
40. A pallet according to Clause 39 wherein the recesses in the upper surface correspond to the position of the feet of a pallet element.
41. A pallet according to any preceding clause wherein at least one foot is hollow.
42. A pallet according to any of Clauses 39 to 41 wherein the recesses in the upper surface extend through the platform from the upper surface of the pallet element into the feet.
43. A pallet according to any preceding clause wherein, in a nested configuration, the feet of the top pallet element are inserted into recesses in the corresponding feet of the bottom pallet element.
44. A pallet according to any preceding clause wherein at least a portion of the pallet element comprises an outer skin layer.
45. A pallet according to Clause 44 wherein at least a portion of the pallet element comprises an inner layer having a different composition to the outer skin layer.
46. A pallet according to Clause 45 wherein the inner layer comprises a foaming agent.
47. A pallet according to any preceding clause wherein the pallet element further comprises a remotely readable tag, preferably an RFID tag.
48. A pallet according to any preceding clause wherein at least one foot comprises an aperture therethrough.
49. A pallet according to any preceding clause wherein the top surface of the platform of the top pallet element comprises a plurality of gullies.
50. A pallet according to any preceding clause wherein the bottom surface of the top pallet element comprises a plurality of gullies.
51. A pallet according to Clause 49 or 50 wherein the gullies comprise at least one insert along the length of the gullies.
52. A pallet according to any of Clauses 49 to 51 as dependent on Clause 48 wherein the gullies are directed towards the feet of the pallet.
53. A pallet according to any preceding clause wherein at least one surface of the platform of at least one pallet element comprises anti-abrasive means for resisting abrasion of the platform surface.
54. A pallet according to Clause 52 wherein the anti-abrasive means comprises a plurality of ridges provided on the surface of the platform.
55. A pallet according to Clause 52 or 53 wherein the anti-abrasive means is provided on the bottom surface of the bottom pallet element, which lies between the pallet elements in an inverted configuration.
56. A pallet element comprising a platform having an upper surface and a lower surface and a plurality of feet depending from the lower surface of the platform and wherein:
   a single pallet element provides a single-sided pallet having feet of a height sufficient to allow lifting by a forklift truck;
   a first said pallet element is arranged to couple to a second said pallet element to provide a double-sided pallet having a total height less than double the height of a single pallet element.
57. A pallet element according to Clause 56 wherein the pallet element is rotationally moulded substantially in one piece.
58. A pallet element according to Clause 56 or 57 wherein the pallet element is manufactured from a plastics material filled with a mineral filler.
59. A method of assembling a double-sided pallet using two pallet elements, each pallet element comprising a platform and a plurality of feet depending from the platform, the method comprising:
   rotating the first pallet element about an axis in the plane of the pallet element;
   arranging the second pallet element on top of the first pallet element so that the feet of the pallet elements lie between the platforms of the pallet elements and the feet of the pallet elements interlock;
   coupling the second pallet element to the first pallet element.
60. A method according to Clause 59 wherein step of coupling comprises applying pressure to the pallet elements.
61. A method according to Clause 60 wherein applying pressure comprises applying a force of less than around 1000N, preferably less than around 500N, or applying an impact from a hammer of less than around 10Ns.
62. A method according to any of Clauses 59 to 61 wherein coupling comprises coupling the pallet elements without adhesives or fixings.
63. A method of manufacturing a plurality of pallets comprising:
   inserting a feedstock comprising a filled plastics material into a mould;
   rotating and heating the mould to rotationally mould a plurality of pallets;
   releasing the plurality of pallets from the mould
   separating the moulded plurality of pallets into single pallets.
64. A method according to Clause 63 further comprising inserting a second feedstock into the mould to form an inner layer within the pallet.
65. A method according to Clause 64 wherein the second feedstock includes a foaming agent to form a foamed inner layer.
66. A method according to any of Clauses 63 to 65 wherein separating the moulded plurality of pallets comprises punching or cutting the pallets out of a sheet of moulded pallets.
67. A method of distributing pallets comprising arranging layers of pallets in a nested configuration in a container, shipping the container to a predetermined destination, removing the pallets from the container.
68. A method according to Clause 67 wherein the pallets comprise pallet according to the aspect described above or any of its preferred features.
69. A method according to Clause 67 or 68 wherein the pallets and the container are rotationally moulded.
70. A method according to any of Clauses 67 to 69 wherein the layers of pallets are provided in sheets and the method further comprises cutting the sheets of pallets into individual pallets.
71. A rotationally-moulded load-carrying apparatus for carrying a load of at least 50 kilograms, wherein the apparatus is manufactured substantially from a filled plastics material comprising:
   at least 10% by weight of a polymer;
   at least 10% by weight of a mineral filler material.
72. Apparatus according to Clause 71 wherein the mineral filler material comprises a silicate material, preferably sand.
73. Apparatus according to Clause 71 wherein the mineral filler material comprises a carbonate material, preferably calcium carbonate.
74. Apparatus according to Clause 71, 72 or 73 wherein the polymer comprises polyethylene, preferably wherein the polymer comprises High Density Polyethylene (HDPE).
75. Apparatus according to any of Clauses 71 to 74 wherein the material comprises at least 25% by weight filler.
76. Apparatus according to any of Clauses 71 to 75 wherein the material comprises at least 25% by weight polymer.
77. Apparatus according to any of Clauses 71 to 76 wherein the material comprises from about 30% to about 70% by weight polymer and from about 70% to about 30% by weight filler.
78. Apparatus according to any of Clauses 71 to 77 wherein the filled plastics material further comprises a unifier.
79. Apparatus according to Clause 78 wherein the filled plastics material comprises at least about 0.1 % by weight unifier.
80. Apparatus according to Clause 78 or 79 wherein the filled plastics material comprises less than about 10% by weight unifier.
81. Apparatus according to any of Clauses 78 to 80 wherein the filled plastics material comprises at least about 0.25% by weight unifier.
82. Apparatus according to any of Clauses 78 to 81 wherein the filled plastics material comprises less than about 5% by weight unifier.
83. Apparatus according to any of Clauses 78 to 82 wherein the unifier is pre-mixed with the filler.
84. Apparatus according to any of Clauses 78 to 83 wherein the unifier comprises an internal lubricant.
85. Apparatus according to Clause 84 wherein the internal lubricant comprises a fatty acid amide.
86. Apparatus according to Clause 85 wherein the internal lubricant comprises a straight or branched C₁₂-C₂₄ fatty acid amide.
87. Apparatus according to any of Clauses 84 to 86 wherein the internal lubricant comprises steramide.
88. Apparatus according to any of Clauses 84 to 87 wherein the unifier further comprises an external lubricant, preferably wherein the external lubricant comprises a stearate.
89. Apparatus according to any of Clauses 84 to 88 wherein the unifier comprises less than 20% by weight internal lubricant.
90. Apparatus according to any of Clauses 84 to 89 wherein the unifier comprises about 10% by weight internal lubricant.
91. Apparatus according to any of Clauses 71 to 90 wherein the filler comprises at least one of:
   a silicate material, preferably sand;
   ash;
   a carbonate material, preferably calcium carbonate;
   a salt, preferably sodium chloride.
92. Apparatus according to any of Clauses 71 to 91 wherein the apparatus is rotationally moulded substantially in one piece.
93. Apparatus according to any of Clauses 71 to 92 wherein the filler comprises a light-coloured material.
94. Apparatus according to any of Clauses 71 to 93 wherein the apparatus comprises a pallet., preferably wherein the pallet is moulded substantially in one piece.
95. Apparatus according to Clause 94 wherein the pallet comprises a platform and a plurality of feet depending from the platform.
96. Apparatus according to Clause 95 wherein the feet of the pallet are regularly spaced over the lower surface of the platform.
97. Apparatus according to Clause 95 or 96 wherein the feet are arranged to enable lifting equipment to engage the pallet from any one of four directions.
98. Apparatus according to any of Clauses 95 to 97 wherein at least one foot is arranged substantially at each corner of the platform of the pallet.
99. Apparatus according to any of Clauses 95 to 98 wherein at least one foot is arranged substantially at the centre of the platform of the pallet.
100. Apparatus according to any of Clauses 95 to 99 wherein at least one foot is arranged substantially at the centre of each edge of the platform of the pallet.
101. Apparatus according to any of Clauses 95 to 100 wherein the feet of the pallet are moulded integrally with the platform.
102. Apparatus according to any of Clauses 95 to 101 wherein each foot has a recess in the lower surface of the foot.
103. Apparatus according to any of Clauses 95 to 102 wherein the pallet comprises an outer skin layer having an upper surface and a lower surface.
104. Apparatus according to Clause 103 wherein the upper and lower surfaces of the outer skin layer are arranged to abut each other over at least a portion of the pallet surface.
105. Apparatus according to Clause 103 or 104 wherein the pallet further comprises an inner layer having a different composition to the outer skin layer.
106. Apparatus according to Clause 105 wherein the inner layer comprises a foaming agent.
107. Apparatus according to Clause 105 or 106 wherein the inner layer comprises at least 40% by weight of a filler.
108. Apparatus according to any of Clauses 95 to 107 wherein the pallet has a length of at least 800mm.
109. Apparatus according to any of Clauses 71 to 108 wherein the apparatus comprises a plurality of layers.
110. Apparatus according to Clause 109 wherein the composition of the filled plastics material differs between the layers.
111. Apparatus according to Clause 109 or 110 wherein the composition of a first layer of the apparatus is optimised to provide an outer skin layer.
112. Apparatus according to Clause 111 wherein the outer skin layer comprises more than about 50% by weight polymer.
113. Apparatus according to Clause 111 or 112 wherein the outer skin layer comprises about 60% by weight polymer.
114. Apparatus according to any of Clauses 109 to 113 wherein the composition of a second layer of the apparatus is optimised to provide an inner layer.
115. Apparatus according to Clause 114 wherein the inner layer comprises a polymer.
116. Apparatus according to Clause 114 or 115 wherein the inner layer comprises a polymer and a filler.
117. Apparatus according to Clause 116 wherein the inner layer comprises more than about 30% by weight filler.
118. Apparatus according to Clause 116 or 117 wherein the inner layer comprises more than about 50% by weight filler.
119. Apparatus according to any of Clauses 116 to 118 wherein the inner layer comprises about 60% by weight filler.
120. Apparatus according to any of Clauses 116 to 119 wherein the inner layer comprises a greater amount of filler by weight than the outer layer.
121. Apparatus according to any of Clauses 116 to 120 wherein the inner layer comprises a foaming agent, preferably wherein the foam layer is about 50% foamed.
122. Apparatus according to any of Clauses 71 to 121 wherein the filled plastics material further comprises a pigment.
123. Apparatus according to any of Clauses 71 to 122 wherein the apparatus incorporates a remotely readable ID tag, preferably an RFID tag.
124. Apparatus according to Clause 123 wherein the ID tag is moulded into the surface of the apparatus.
125. A method of manufacturing apparatus for storage or transportation of loads greater than about 50 kilograms, the method comprising rotationally moulding the apparatus from a filled plastics material comprising a polymer, a filler and a unifier.
126. A method of rotationally moulding a product from a filled plastics material comprising:
   providing a mould for the product defining a void corresponding to at least a portion of the required shape of the product;
   loading a first feedstock having a first composition comprising a polymer and at least 10% by weight of a mineral filler into the mould;
   heating the mould;
   rotating and/or rocking the mould about at least two axes to coat the internal walls of the mould with a layer of the first feedstock;
   cooling the mould;
   releasing the product from the mould.
127. A method according to Clause 126 further comprising providing heating means adjacent to the walls of the mould and heating the mould using the heating means.
128. A method according to Clause 126 or 127 further comprising providing cooling means adjacent to the walls of the mould and cooling the mould using the cooling means.
129. A method according to any of Clauses 126 to 128 wherein the heating means comprises a plurality of burners.
130. A method according to any of Clauses 126 to 129 wherein the cooling means comprises at least one supply of water.
131. A method according to any of Clauses 126 to 130 wherein the mould is a generally elongate mould and wherein the method comprises rotating the mould about a first axis substantially parallel to the axis of elongation of the mould and rocking the mould about a second axis substantially orthogonal to the first axis.
132. A method according to any of Clauses 126 to 131 wherein rocking the mould comprises rocking the mould to a maximum angle of less than about 30° from the horizontal.
133. A method according to any of Clauses 126 to 132 wherein rocking the mould comprises rocking the mould at a rate of less than about 6 rocking cycles per minute.
134. A method according to any of Clauses 126 to 133 wherein rotating the mould comprises rotating the mould at a rate of less than about 10 revolutions per minute.
135. A method according to any of Clauses 126 to 134 wherein the mould comprises an inner mould portion and an outer mould portion, wherein the inner mould portion is positioned within the outer mould portion and wherein the first feedstock is inserted between the outer mould portion and the inner mould portion.
136. A method according to Clauses 135 further comprising providing heating means within the inner mould portion.
137. A method according to any of Clauses 126 to 136 further comprising maintaining the heating means at a substantially constant distance from the walls of the outer mould portion as the mould is rotated.
138. A method according to any of Clauses 126 to 137 further comprising, before cooling the mould:
   loading a second feedstock having a second composition into the mould;
   rotating the mould to form a second layer of the second feedstock.
139. A method according to any of Clauses 126 to 138 wherein the composition of the first layer is optimised to provide an outer skin layer.
140. A method according to Clause 138 or 139 wherein the composition of the second layer is optimised to provide an inner layer.
141. A method according to any of Clauses 138 to 140 wherein the second feedstock comprises a foaming agent.
142. A method according to any of Clauses 138 to 141 wherein the second feedstock comprises a higher proportion of filler than the first feedstock.
143. A method according to any of Clauses 126 to 142 wherein the product comprises at least one of: a freight container, a pallet, a cable reel or a panel.
144. A method according to any of Clauses 126 to 143 further comprising positioning elements of the product within the mould before the feedstock is inserted and over-moulding the elements into the product.
145. A method according to Clause 144 wherein the product comprises a freight container and wherein the elements comprise one or more of:
   a metal frame;
   door securing means;
   strengthening elements; or
   corner lifting elements.
146. A method according to any of Clauses 126 to 145 wherein the product is moulded substantially in one piece.
147. A method according to any of Clauses 126 to 146 wherein releasing the product from the outer mould portion comprises moving the walls of the outer mould portion apart and away from the moulded product.
148. A filled plastics material comprising:
   a polymer;
   at least 10% by weight of a mineral filler;
   a unifier comprising stearate.
149. A filled plastics material according to Clause 148 wherein the unifier further comprises an internal lubricant, preferably steramide.
150. A filled plastics material according to Clause 149 wherein the steramide comprises Chrodamide S Powder.
151. A filled plastics material according to any of Clauses 148 to 150 wherein the stearate comprises Calcium Stearate.
152. A filled plastics material according to any of Clauses 148 to 151 wherein the unifier comprises more than 5% by weight steramide.
153. A filled plastics material according to any of Clauses 148 to 152 wherein the unifier comprises about 10% by weight steramide.
154. A filled plastics material according to any of Clauses 148 to 153 wherein the unifier comprises more than 80% by weight stearate.
155. A filled plastics material according to any of Clauses 148 to 154 wherein the unifier comprises about 90% by weight stearate.
156. A filled plastics material according to any of Clauses 148 to 155 wherein the polymer comprises polyethylene.
157. A filled plastics material according to any of Clauses 148 to 156 wherein the polymer comprises High Density Polyethylene (HDPE).
158. A filled plastics material according to any of Clauses 148 to 157 wherein the filler comprises at least one of:
   a silicate material, preferably sand;
   ash;
   a carbonate material, preferably calcium carbonate;
   a salt, preferably sodium chloride.
159. A filled plastics material according to any of Clauses 148 to 158 wherein the filled plastics material comprises at least 0.5% by weight unifier.
160. A filled plastics material according to any of Clauses 148 to 159 wherein the filled plastics material comprises about 1% by weight unifier.
161. Apparatus for rotationally moulding, from a filled plastics material, a load-carrying apparatus for carrying a load of at least 50 kilograms, the apparatus comprising:
   a mould defining a void corresponding to at least a portion of the required shape of the product;
   means for receiving a first feedstock comprising a filled plastics material comprising a polymer and at least 10% by weight of a mineral filler;
   heating means;
   cooling means;
   means for rotating and/or rocking the mould about at least two axes.
162. Apparatus according to Clause 161 wherein the heating means are provided adjacent to the walls of the mould.
163. Apparatus according to Clause 161 or 162 wherein the cooling means are provided adjacent to the walls of the mould.
164. Apparatus according to any of Clauses 161 to 163 wherein the mould is a generally elongate mould and wherein the apparatus further comprises means for rotating the mould about a first axis substantially parallel to the axis of elongation of the mould and means for rocking the mould about a second axis substantially orthogonal to the first axis.
165. Apparatus according to any of Clauses 161 to 164 wherein the mould comprises an inner mould portion and an outer mould portion, wherein the inner mould portion is positioned within the outer mould portion and wherein the first feedstock is inserted between the outer mould portion and the inner mould portion.
166. Apparatus according to any of Clauses 161 to 165 further comprising heating means within the mould.
167. Apparatus according to any of Clauses 161 to 166 further comprising means for maintaining the heating means at a substantially constant distance from the mould.
168. Apparatus according to any of Clauses 161 to 167 wherein the mould has a length of at least 5m.
169. Apparatus according to any of Clauses 161 to 168 wherein the mould has a length of at least 10m.
170. Apparatus according to any of Clauses 161 to 169 wherein the apparatus is mounted over a pit and wherein at least one end of the mould is rocked into the pit.
171. Apparatus according to any of Clauses 161 to 170 wherein the means for receiving the feedstock comprises a series of apertures in the outer mould portion.
172. Apparatus according to Clause 171 wherein the series of apertures is formed along at least one edge of the outer mould portion.
173. Apparatus according to Clause 171 or 172 to wherein the series of apertures is covered by at least one sliding gate valve.
174. Apparatus according to any of Clauses 171 to 173 wherein the internal surface of the sliding gate valve is coated in a non-stick material.
175. Apparatus according to any of Clauses 161 to 174 further comprising at least one hopper for storing the feedstock.
176. Apparatus according to Clause 175 wherein the hopper comprises dispensing means for dispensing a predetermined amount of the feedstock, wherein the predetermined amount comprises the amount of feedstock required to rotationally mould at least one load-carrying apparatus.
177. Apparatus according to any of Clauses 161 to 176 further comprising filling means for loading the mould with a predetermined amount of the feedstock.
178. Apparatus according to Clause 177 wherein the filling means comprises means for filling the feedstock via a series of apertures in the outer mould portion.
179. Apparatus according to Clause 178 wherein the means for filling the feedstock comprises at least one bucket having a series of apertures corresponding to the series of apertures in the outer mould portion.
180. Apparatus according to Clause 179 wherein the bucket comprises a telescopic bucket having an adjustable length.
181. Apparatus according to any of Clauses 161 to 180 wherein the heating means comprises at least one burner.
182. Apparatus according to any of Clauses 161 to 181 wherein the cooling means comprises a supply of water.
183. A unifier for promoting binding and dispersion of a mineral filler and a polymer, wherein the unifier comprises a fatty acid amide.
184. A unifier according to Clause 183 wherein the fatty acid amide comprises a straight or branched C12-C24 fatty acid amide.
185. A unifier according to Clause 183 or 184 wherein the unifier comprises steramide.
186. A unifier according to any of Clauses 183 to 185 further comprising an external lubricant, preferably wherein the external lubricant comprises a stearate.
187. A unifier according to Clause 186 comprising more than 80% by weight external lubricant.
188. A unifier according to Clause 186 or 187 comprising about 90% by weight external lubricant.
189. A rotationally-moulded load-carrying apparatus comprising:
   at least 10% by weight HDPE;
   at least 10% by weight of a filler comprising sand;
   a unifier comprising a fatty acid amide;
   wherein the load-carrying apparatus comprises an inner layer and an outer layer, the layers having different compositions.
190. Apparatus according to Clause 189, wherein the apparatus comprises a pallet having a length of at least about 800mm.
191. Apparatus according to Clause 189 to 190 wherein the inner layer comprises a foamed layer.
192. A pallet according to any of Clauses 1 to 55 or 207 to 216 manufactured by the method of any of Clauses 59 to 70 or Clauses 126 to 147.
193. A plurality of pallets according to any of Clauses 1 to 55 or 207 to 216 manufactured according to the method of any of Clauses 59 to 70.
194. A pallet according to any of Clauses 1 to 55 or 207 to 216 manufactured using the apparatus of any of clauses 71 to 125.
195. A pallet according to any of Clauses 1 to 55 or 207 to 216 manufactured by the method of any of Clauses 126 to 147.
196. A pallet according to any of Clauses 1 to 55 or 207 to 216 made of a material according to any of Clauses 148 to 160.
197. A pallet according to any of Clauses 1 to 55 or 207 to 216 manufactured using the apparatus of any of clauses 161 to 182.
198. A pallet according to any of Clauses 1 to 55 or 207 to 216 comprising a unifier according to any of Clauses 183 to 188.
199. A pallet according to any of Clauses 1 to 58 or 207 to 216 and any of Clauses 189 to 191.
200. A pallet substantially as hereinbefore described and as shown in the accompanying drawings.
201. Apparatus substantially as any one described herein or as illustrated in any of Figs. 1 to 27.
202. A method substantially as any one described herein with reference to any of Figs. I to 27.
203. A filled plastics material substantially any one as described herein.
204. A pallet, a mould or an assembly station substantially as any one herein described.
205. A pallet substantially as hereinbefore described and as shown in Figures 9a, 9b, 10 or Figures 17 to 20 or 24.
206. A pallet or pallet element substantially as hereinbefore described and as shown in Figures 28 to 45 or Figures 46 to 58.
207. A rotationally moulded pallet manufactured substantially from a filled plastics material, wherein the pallet has:
   a length of greater than around 1000mm and less than around 1500mm;
   a mass of less than around 30kg;
   a maximum load carrying capability of greater than around 1000kg.
208. A pallet according to Clause 207 wherein the mass of the pallet is less than around 25kg, preferably around 23kg.
209. A pallet according to Clause 207 or 208 wherein the maximum load carrying capability of the pallet is greater than around 1100kg, preferably around 1250kg.
210. A pallet according to any of Clauses 207 to 209 wherein the top of the top deck, the top of the bottom deck and the interior of the at least one spacer are surface textured to around 15µm to 20µm.
211. A pallet according to any of Clauses 207 to 210, wherein the pallet is marked with a code.
212. A pallet according to any of Clauses 207 to 211 wherein the pallet comprises recyclable materials.
213. A pallet according to any of Clauses 207 to 212 further comprising a means of identification.
214. A pallet according to Clause 213 in which the means of identification comprises a RFID tag.
215. A pallet according to Clause 214 in which the means of identification comprises a barcode.
216. A rotationally moulded pallet having a platform and a plurality of pallet feet depending therefrom, the pallet being manufactured substantially from a filled plastics material, wherein the pallet has:
   a length of between about 1207 and 1211 mm; and
   a width of between about 1006 and 1010mm.
217. A moulding tool for rotationally moulding a product from a plastics-based material comprising a tool base having an internal shape corresponding to the external shape of the product and an internal surface comprising a silica-based material.
218. A moulding tool according to Clause 217 wherein the silica-based material comprises a fibrous rock-based material.
219. A moulding tool according to Clause 217 or 218 wherein the silica-based material comprises spun basalt.
220. A moulding tool according to Clause 217 or 218 wherein the silica-based material comprises spun diabase.
221. A moulding tool according to any of Clauses 217 to 220 wherein the moulding tool is manufactured substantially from the silica-based material.
222. A moulding tool according to any of Clauses 217 to 220 wherein the surface of the moulding tool is coated with the silica-based material.
223. A moulding tool according to any of Clauses 217 to 222 wherein the moulding tool comprises a moulding tool for a pallet.
224. A moulding tool according to any of Clauses 217 to 223 wherein the moulding tool further comprises a valve for inserting a composition into the mould.
225. A moulding tool according to Clause 224 wherein the valve comprises a first repellent surface, which covers an aperture in the mould when the valve is in a first position.
226. A moulding tool according to Clauses 224 or 225 wherein the valve comprises a second non-stick surface, which covers an aperture in the mould when the valve is in a second position.
227. A plurality of moulding tools according to any of Clauses 217 to 226 assembled into a mould to form a plurality of products.
228. A manufacturing plant for manufacturing rotationally moulded products from a plastics-based composition, the plant comprising:
   a composition storage area;
   a composition loading area, for loading the composition onto delivery means;
   delivery means for delivering the composition to moulding areas within the manufacturing plant; and
   moulding areas, each moulding area comprising a plurality of moulding apparatus.
229. A manufacturing plant according to Clause 228 further comprising a storage area for storing the rotationally moulded products.
230. A manufacturing plant according to Clause 228 or 229 wherein each mould comprises means for manufacturing a plurality of products.
231. A manufacturing plant according to any of Clauses 228 to 230 wherein the moulding apparatus comprises apparatus according to any of Clauses 161 to 182.

## Claims

1. A method of rotationally moulding a pallet from a filled plastics material comprising:
providing a mould for the pallet defining a void corresponding to at least a portion of the required shape of the pallet;
loading a first feedstock having a first composition comprising a polymer and at least 10% by weight of a mineral filler comprising sand into the mould;
heating the mould;
rotating and/or rocking the mould about at least two axes to coat the internal walls of the mould with a layer of the first feedstock;
cooling the mould;
releasing the pallet from the mould.

2. A method according to Claim 1 further comprising providing heating means adjacent to the walls of the mould and heating the mould using the heating means.

3. A method according to Claim 2 further comprising maintaining the heating means at a substantially constant distance from the walls of the outer mould portion as the mould is rotated.

4. A method according to any one of Claims 1 to 3 further comprising providing cooling means adjacent to the walls of the mould and cooling the mould using the cooling means.

5. A method according to any one of Claims 1 to 4 wherein the heating means comprises a plurality of burners.

6. A method according to any one of Claims 1 to 5 wherein the cooling means comprises at least one supply of water.

7. A method according to any one of Claims 1 to 8 wherein the mould is a generally elongate mould and wherein the method comprises rotating the mould about a first axis substantially parallel to the axis of elongation of the mould and rocking the mould about a second axis substantially orthogonal to the first axis.

8. A method according to any one of Claims 1 to 7 wherein rocking the mould comprises rocking the mould to a maximum angle of less than about 30° from the horizontal.

9. A method according to any one of Claims 1 to 8 wherein rocking the mould comprises rocking the mould at a rate of less than about 6 rocking cycles per minute.

10. A method according to any one of Claims 1 to 9 wherein rotating the mould comprises rotating the mould at a rate of less than about 10 revolutions per minute.

11. A method according to any one of Claims 1 to 10 wherein the mould comprises an inner mould portion and an outer mould portion, wherein the inner mould portion is positioned within the outer mould portion and wherein the first feedstock is inserted between the outer mould portion and the inner mould portion.

12. A method according to Claim 11 further comprising providing heating means within the inner mould portion.

13. A method according to any one of Claims 1 to 12 further comprising, before cooling the mould:
loading a second feedstock having a second composition into the mould;
rotating the mould to form a second layer of the second feedstock.

14. A method according to Claim 13 wherein the composition of the first layer is optimised to provide an outer skin layer.

15. A method according to Claim 13 or Claim 14 wherein the composition of the second layer is optimised to provide an inner layer.

16. A method according to any one of Claims 13 to 15 wherein the second feedstock comprises a foaming agent.

17. A method according to any one of Claims 13 to 16 wherein the second feedstock comprises a higher proportion of filler than the first feedstock.

18. A method according to any one of Claims 1 to 17 further comprising positioning elements of the pallet within the mould before the feedstock is inserted and over-moulding the elements into the pallet.

19. A method according to any one of Claims 1 to 18 wherein the pallet is moulded substantially in one piece.

20. A method according to any of Claims I to 19 wherein releasing the pallet from the outer mould portion comprises moving the walls of the outer mould portion apart and away from the moulded pallet.

21. A method according to any one of Claims 1 to 20 wherein the first composition comprises at least 25% by weight of a mineral filler comprising sand.

22. A method according to any one of Claims 1 to 21 comprising providing a plurality of pallet moulds on a common support frame, feeding said first feedstock into each mould, heating and rotating the plurality of moulds relative to the support frame, cooling each mould and releasing a plurality of pallets from the plurality of moulds.

23. A method according to any one of Claims 1 to 21 wherein the mould is adapted to rotationally mould simultaneously a plurality of pallets in a single operation;
further including releasing the plurality of pallets from the mould.

24. A method according to Claim 23 further comprising inserting a second feedstock into the mould to form an inner layer within each pallet.

25. A method according to Claim 24 wherein the second feedstock includes a foaming agent to form a foamed inner layer.

26. A method according to any one of Claims 23 to 25 further comprising the step of separating the moulded plurality of pallets into single pallets.

27. A method according to Claim 26 wherein separating the moulded plurality of pallets comprises punching or cutting the pallets out of a sheet of moulded pallets.

28. Apparatus for rotationally moulding, from a filled plastics material, a pallet for carrying a load of at least 50 kilograms, the apparatus comprising:
a mould defining a void corresponding to at least a portion of the required shape of the pallet;
means for receiving a first feedstock comprising a filled plastics material comprising a polymer and at least 10% by weight of a mineral filler;
heating means;
cooling means;
means for rotating and/or rocking the mould about at least two axes.

29. Apparatus according to Claim 28 wherein the heating means are provided adjacent to the walls of the mould.

30. Apparatus according to Claim 28 or Claim 29 further comprising means for maintaining the heating means at a substantially constant distance from the mould.

31. Apparatus according to any one of Claims 28 to 30 wherein the cooling means are provided adjacent to the walls of the mould.

32. Apparatus according to any one of Claims 28 to 31 wherein the mould is a generally elongate mould and wherein the apparatus comprises means for rotating the mould about a first axis substantially parallel to the axis of elongation of the mould and means for rocking the mould about a second axis substantially orthogonal to the first axis.

33. Apparatus according to any of Claims 28 to 32 wherein the mould comprises an inner mould portion and an outer mould portion, wherein the inner mould portion is positioned within the outer mould portion and wherein the first feedstock is inserted between the outer mould portion and the inner mould portion.

34. Apparatus according to any one of Claims 28 to 33 further comprising heating means within the mould.

35. Apparatus according to any one of Claims 28 to 34 wherein the means for receiving the feedstock comprises a series of apertures in the outer mould portion.

36. Apparatus according to Claim 35 wherein the series of apertures is formed along at least one edge of the outer mould portion.

37. Apparatus according to Claim 35 or Claim 36 wherein the series of apertures is covered by at least one sliding gate valve.

38. Apparatus according to Claim 37 wherein the internal surface of the sliding gate valve is coated in a non-stick material.

39. Apparatus according to any one of Claims 28 to 38 further comprising at least one hopper for storing the feedstock.

40. Apparatus according to Claim 39 wherein the hopper comprises dispensing means for dispensing a predetermined amount of the feedstock, wherein the predetermined amount comprises the amount of feedstock required to rotationally mould at least one pallet.

41. Apparatus according to any one of Claims 28 to 40 further comprising filling means for loading the mould with a predetermined amount of the feedstock.

42. Apparatus according to Claim 41 wherein the filling means comprises means for filling the feedstock via a series of apertures in the outer mould portion.

43. Apparatus according to Claim 42 wherein the means for filling the feedstock comprises at least one bucket having a series of apertures corresponding to the series of apertures in the outer mould portion.

44. Apparatus according to Claim 43 wherein the bucket comprises a telescopic bucket having an adjustable length.

45. Apparatus according to any one of Claims 28 to 44 wherein the heating means comprises at least one burner.

46. Apparatus according to any one of Claims 28 to 45 wherein the cooling means comprises a supply of water.

47. Apparatus according to any one of Claims 28 to 46 wherein the mould is adapted to rotationally mould simultaneously a plurality of pallets in a single operation.

48. Apparatus according to claim 47, comprising a plurality of pallet moulds on a common support frame and wherein said means for rotating and/or rocking the mould about at least two axes is operable to rotate said plurality of moulds about the common support frame.
